Europäisches Patentamt

European Patent Office

Office européen des brevets

(11) Publication number: **0 404 129**
**A2**

# (12) EUROPEAN PATENT APPLICATION

(21) Application number: 90111695.4

(51) Int. Cl.5: **G06F 9/46**

(22) Date of filing: **20.06.90**

(30) Priority: 23.06.89 JP 159521/89
22.02.90 JP 39732/90
01.03.90 JP 47228/90

(43) Date of publication of application:
**27.12.90 Bulletin 90/52**

(84) Designated Contracting States:
**DE GB**

(71) Applicant: **HITACHI, LTD.**
**6, Kanda Surugadai 4-chome**
**Chiyoda-ku, Tokyo 101(JP)**

(72) Inventor: **Saitoh, Makoto**
**3-1, Saginuma-1-chome, Miyamae-ku**
**Kawasaki-shi(JP)**
Inventor: **Kikuhara, Hidetake**
**27-1-403, Nishigaoka-1-chome, Izumi-ku**
**Yokohama-shi(JP)**
Inventor: **Shinoda, Tomojiroh**
**36-27, Konan-3-chome, Konan-ku**
**Yokohama-shi(JP)**
Inventor: **Tashiro, Tsutomu**
**16-6, Kameino-4-chome**
**Fujisawa-shi(JP)**
Inventor: **Komoda, Norihisa**
**1-9-203, Nijigaoka-3-chome, Asao-ku**
**Kawasaki-shi(JP)**
Inventor: **Uehara, Koji**
**7-7-206, Tarumachi-4-chome, Kohoku-ku**
**Yokohama-shi(JP)**
Inventor: **Akashi, Kichizo**
**28-10, Kamiimaizumi-6-chome**
**Ebina-shi(JP)**
Inventor: **Takada, Kazuhiro**
**8-47-1202, Yashio-5-chome, Shinagawa-ku**
**Tokyo(JP)**

(74) Representative: **Strehl, Schübel-Hopf,**
**Groening**
**Maximilianstrasse 54 Postfach 22 14 55**
**D-8000 München 22(DE)**

(54) Load control method and apparatus for computer system.

(57) Process demands being stayed at a computer system (102) happen to occur irrelevant to a number of process demands which have not yet processed within the computer system, which is so-called as "an overload condition" of the computer system. To solve such a problem, there has been disclosed a control method and control apparatus such that a degree of the loads, arrival velocities of the process demands and the like are monitored, and both the load and acceptances for the process demands are controlled based upon the monitoring results.

## FIG. 3

COMPUTER

PROCESS DEMAND ACCEPT PROGRAM — 201

TERMINAL — 103

WRITE POINTER TRANSMIT PROGRAM

202

PROCESS RESULT OUTPUT PROGRAM

203

106 PROCESS DEMAND FILE

SYSTEM CONTROL TERMINAL

105

102 COMPUTER

DATA PROCESS INSTRUCTING TERMINAL

PROCESS DEMAND INPUT / LOAD MONITORING PROGRAM — 204

SORT PROCESS DEMAND QUEUE — 205

LOAD CONTROL/PROCESS DEMAND CONVERTING PROGRAM — 208

DATA PROCESS PROGRAM — 210

PROCESS DATA DISPLAY PROGRAM — 211

104

PROCESS DEMAND MANAGING TABLE — 206

COMMAND PROCESS PROGRAM

LOAD MANAGING PROGRAM

214    209

LOAD CALCULATION PROGRAM

SYSTEM CONTROL PROGRAM

213

WRITE POINTER WRITING PROGRAM — 207    212

PROCESS RESULT FILE — 107

PROCESS DATA FILE — 108

2

# LOAD CONTROL METHOD AND APPARATUS FOR COMPUTER SYSTEM

## BACKGROUND OF THE INVENTION

The present invention relates to a load control method and an apparatus thereof used in a computer system.

In a conventional computer system, so-called "queuing control" techniques have been employed so as to sequentially process various sorts of data process demands such as on-line transaction sorts, for instance, sorts of firms, deposited money, or total amounts of deposited money which are transmitted from terminal units located in various places and other computer systems. As one of these queuing control techniques, the priority numbers are allocated to the services of the processes, depending upon the sorts of the respective processes is advanced based upon these priority numbers. Such a conventional technique has been described in, for example, "ON-LINE SYSTEM" written by UEDA issued by Shokodo publisher on June 20, 1987, pages 42 to 56.

Furthermore, in the communication network such as a packet exchange network, there have been disclosed in, for instance, (1) "SYSTEM CONSTRUCTION TECHNIQUE, IWANAMI MICROELECTRONICS SERIES No. 10" by KATO et al., in April 1985, pages 55 to 57, (2) "PACKET FLOW CONTROLLING METHOD" JP-A-63-42543, (3) "COMMUNICATION SPEED CONTROLLING METHOD BY CONTENTION CONTROL IN TRUNK NETWORK" JP-A-63-299550. That is to say, to prevent an increase in the communication delay times and flowing a communication throughput, the amount of the communication data inputted into the communication network is adjusted in accordance with a degree of busy states in the communication data within the communication network.

## SUMMARY OF THE INVENTION

In the above-described conventional techniques, no care is taken in such a case that the load happens to vary. As a result, when the number of the process demands is extremely increased, there are problems that since the process is delayed, the system is brought into non-test operating condition, and the use condition of the memory becomes abnormal, the program bugs are continuously present (the logical defect in the program appears) and the system down may happen to occur.

The above-explained increase in the process demand numbers are caused by freely accepting the process demands irrelevant to the remaining number of the process demands which still stay in the computer system. One of these causes is such a case that the input velocity of the process demand (input number of process demands per a unit time) exceeds over the maximum processing velocity of the computer system (process number of process demands per a unit time). The remaining cause is such a case that the process time of the process demand extremely passes over predetermined time period. With these causes, the computer system is brought into the overload condition (i.e, condition that there remain a large quantity of process demands which have not yet been processed in the computer system. Under the overload condition, since the process demands must wait for the processing operations for a long time within the computer system, there is another problem that the response time (i.e., time period from an input of a process demand till a return of a process result thereof) becomes extremely long. Also, there is another problem that since a large quantity of tasks are parallel-executed in the computer system in a normal state, the timing errors may occur with a higher probability and therefore it may cause a system down under such an overload condition.

On the other hand, the above-described conventional method for adjusting the amount of the communication data inputted in the communication network has such an aim to prevent the increase in the communication delay time of the communication network and also lowering the communication throughput, but has no idea to prevent the overload condition of the computer system. As a result of improving the communication throughput, there exists a worse trend to bring the computer system into the overload condition. That is to say, since the communication throughput is improved, the arrival velocity of the process demand with respect to the specific computer system connected to this communication network, namely the input velocity of the process demand to the computer system is increased which then may cause the computer system to be overloaded.

An object of the present invention is to provide a method and apparatus for dynamically controlling a load of a computer system.

Another object of the present invention is to provide a load control method and apparatus thereof for a computer system in which even when load conditions become unbalance among the sorts of the process demands, or unbalance load conditions are varied during the system operation of the computer system, a service priority order is dynamically changed in such a manner that time periods (referred to as a "process time period") from inputs of arbitrary process demands up to outputs thereof among the various sorts are smoothened or balanced (namely reduce a difference in the process time periods among the sorts of the process demands as small as possible), whereby no delay may be produced in the processes.

A further object of the present invention is to provide a load control method and apparatus for a computer system in which even when process demands occur with exceeding over the maximum processing velocity of the computer system, the number of the process demands accepted by the computer system is limited so that the computer system is not brought into the overload condition, but can be continuously operated.

A still further object of the present invention is to provide a load control method and apparatus for shortening a waiting time in case that a waiting time for a process demand becomes long.

Other objects of the present invention may be apparent from the present specification and accompanying drawings.

To achieve the above-described objects of the present invention, the present invention may be realized as follows. While monitoring the queue length of the process demands which have been accepted by the computer system depending upon the sorts thereof, the number of the process demands to be processed is determined based upon the monitoring results depending on the sorts thereof. In this case, instead of the queue length, an arrival velocity of the process demand accepted by the computer system may be utilized. this arrival velocity corresponds to the number of the process demands which should be accepted by the computer system per a unit time.

Also, the above-described objects may be achieved by assuming the process capabilities of the computer system and by adjusting the number of the acceptable process demands without exceeding over the process capabilities.

In addition, the above-explained objects may be achieved by distributing a portion of loads of one computer operated under the overload condition to the other computer which may process this distributed load portion.

Various effects achieved by the above-described constructions of the present invention will now be described.

That is to say, in the computer system for processing plural sorts of process demands, according to the present invention, the queue lengths of the respective sorts of the process demands are monitored, the process frequencies of these process demands (i.e., the number of the process demands to be processed for a time being) are calculated based upon the monitored queue lengths of the process demands, and then the process is carried out in accordance with the process frequencies. As a consequence, the time period (namely, process time) between an input of an arbitrary sort of process demand and an output thereof may be balanced by the process operation depending upon such a process frequency. In other words, when based upon the process frequencies, many of the certain process demands having heavy loads are processed within one time, there is a small number of the sort of process demands which wait for the process operation for a long time and thus the process times may be averaged or uniformed among the sorts. As a result, even when there are many inputs of a specific sort of process demands, there is no delay in the process time for this sort of the process demands within a range where the overall process capability of the computer system is not exceeded.

Also, since such an adjustment is established in the present invention in such a manner that the number of the process demands accepted by the computer system does not exceed over the process capability of the computer system, there is a very small risk that the computer system is brought into the overload condition.

Furthermore, according to the present invention, since a process demand to wait for a process in an overloaded computer of the computer system is transferred to another computer so as to be parallel-processed, there is a small delay in the process operation and thus the response time may be shortened.

## BRIEF DESCRIPTION OF THE DRAWINGS

Fig. 1 is a flowchart for representing a basic operation of a computer load controlling system according to one preferred embodiment of the present invention;

Fig. 2 schematically illustrates an arrangement of hardware of a computer system to which the preferred embodiment of the present invention is applied;

EP 0 404 129 A2

Fig. 3 schematically illustrates an arrangement for each of programs and tables which are utilized in the computer system shown in Fig. 2;

Fig. 4 is an illustration for showing a detailed content of a process demand file;

Figs. 5a and 5b are detailed illustrations of a sort process demand queue;

Fig. 6 is a detailed illustration of a process demand managing table;

Fig. 7 is a detailed illustration of a common information area for the process demand managing table;

Fig. 8 is a detailed illustration of an entry area for the process demand managing table;

Fig. 9 is a detailed illustration of a load managing table;

Figs. 10a to 10c are flowcharts for representing detailed operations of a process demand input program and also a load monitoring program;

Figs. 11a and 11b are flowcharts for representing a load control and process demand converting program, and a load calculating program;

Fig. 12 is a system diagram of a computer system in which a single computer is employed;

Fig. 13 is a system diagram of a computer system in which a plurality of computers are connected to a computer for accepting a process demand;

Fig. 14 is a detailed illustration for entry information on the process demand managing table in case that a process frequency is calculated based upon arrival velocities of the process demands;

Fig. 15 is a detailed illustration of the load managing table in case that a process frequency is calculated based upon arrival velocities of the process demands;

Fig. 16 is a flowchart for explaining another process executed instead of the process defined at the step 90 shown in the flowchart of Fig. 10a, when a process frequency is obtained from arrival velocities of process demands;

Fig. 17 is a flowchart employed instead of the flowchart shown in Fig. 11b when a process frequency is calculated from arrival velocities of process demands;

Fig. 18 schematically represents a hardware arrangement of a computer load controlling system according to another preferred embodiment of the present invention;

Fig. 19 schematically illustrates a program structure within the computer shown in Fig. 18;

Fig. 20 schematically illustrates a program structure within a terminal control apparatus;

Fig. 21 is a detailed diagram of a load managing table shown in Fig. 19;

Figs. 22a to 22c are flowcharts for representing an operation of the system arrangement shown in Fig. 18;

Fig. 23 is an operation flow of a load control program shown in Fig. 19;

Fig. 24 is an illustration for explaining an operation of the load control program;

Fig. 25 is a flowchart for explaining one method to determine a preset value of the load managing table;

Fig. 26 is a detailed diagram of a load managing table according to a further preferred embodiment of the present invention;

Figs. 27a to 27c are operation flowcharts for the load control program;

Figs. 28a to 28i are illustrations for explaining an operation of the load control program;

Fig. 29 is a flowchart for explaining one method for determining a set value of the load managing table;

Fig. 30 is a detailed schematic diagram of a terminal control apparatus according to another preferred embodiment of the present invention;

Fig. 31 schematically illustrates an overall construction of a computer system according to a further preferred embodiment of the present invention;

Fig. 32 schematically illustrates a system arrangement of the computer system;

Fig. 33 is a schematic illustration for showing that concentration demand sort data to one computer is transferred to another computer;

Fig. 34 is a condition transit list for a load judgement/process line changing control unit of the computer;

Fig. 35 is a condition transit list for a process demand reception/transmission control unit;

Fig. 36 is a system arrangement in which a load condition is monitored by a system console and a process line is changed;

Fig. 37 schematically illustrates a system that odd-numbered concentration demand sorts are transferred to a certain computer and even-numbered concentration demand sorts are transferred to another computer;

Fig. 38 schematically represents such a system arrangement that a processing data file is not shared between the computers; and,

5

Fig. 39 is a flowchart for explaining a process of a process demand conversion register unit.

DESCRIPTION OF THE PREFERRED EMBODIMENTS

Referring now to drawings, various preferred embodiments of the present invention will be described.

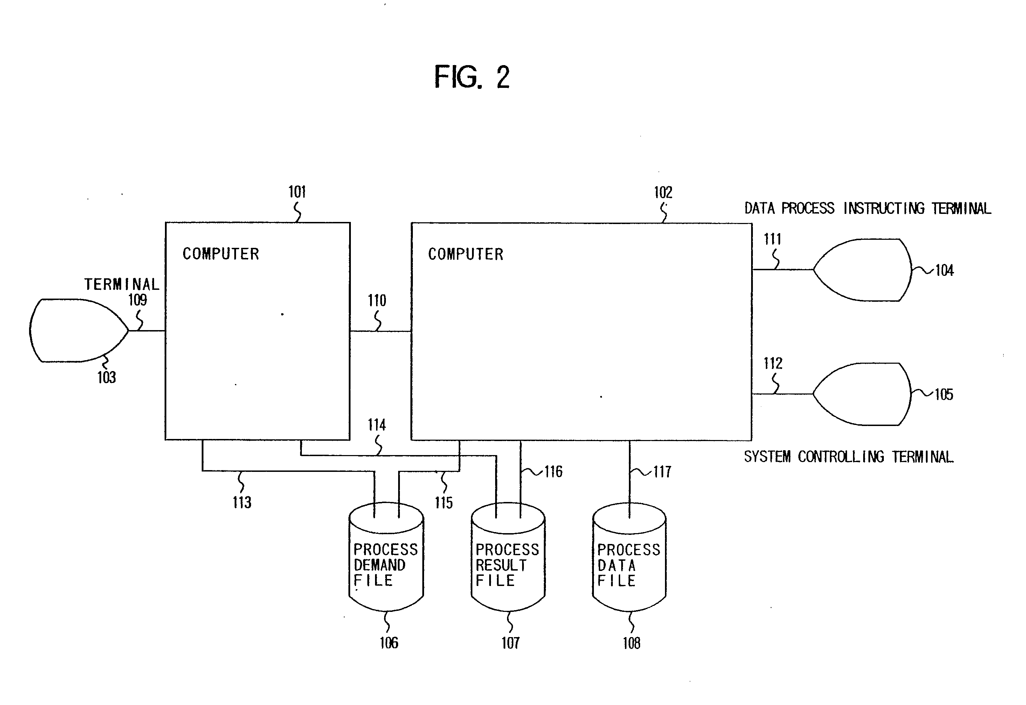

Fig. 2 schematically represents hardware of a computer system. This computer system is constructed as follows. In Fig. 2, reference numeral 103 denotes an input terminal into which a process demand is inputted. Reference numeral 101 represents a computer for accepting the process demand inputted from the input terminal 103. Reference numeral 102 indicates a computer for fetching the process demand accepted by the computer 101 and for performing a process of the process demand in response to an instruction supplied from a data process instructing terminal 104. Reference numeral 104 is a data process instructing terminal employed to instruct an execution of a process required by an operator; reference numeral 105 denotes a system controlling terminal for instructing monitoring an operation state of the computer 102 and instructing reduction of a load balancing (will be discussed later); reference numeral 106 represents a process demand file for time-sequentially storing process demands; reference numeral 108 indicates a process data file for storing the process demands which have been converted into other different forms; and reference numeral 107 denotes a process result file for storing process data results obtained by processing the process data file in response to the instruction given by the data process instructing terminal 104. Further, reference numerals 109 to 117 represent connecting conditions of various parts of this system.

First of all, a flow of the process will now be summarized.

The process demand which has been inputted from the terminal 103 is transferred to the computer 101 and then time-sequentially stored in the process demand file 106. The computer 102 reads out the process demand from the process demand file 106 and converted into other forms and thereafter the converted process demand is written into the process data file 108. Further the computer 102 processes the data stored in the process data file 108 in response to the instruction given from the data process instructing terminal 104, and the resultant process demand is stored in the process result file 107. Another computer 101 reads out the data stored in the process result file 107 so as to be outputted to the terminal 103.

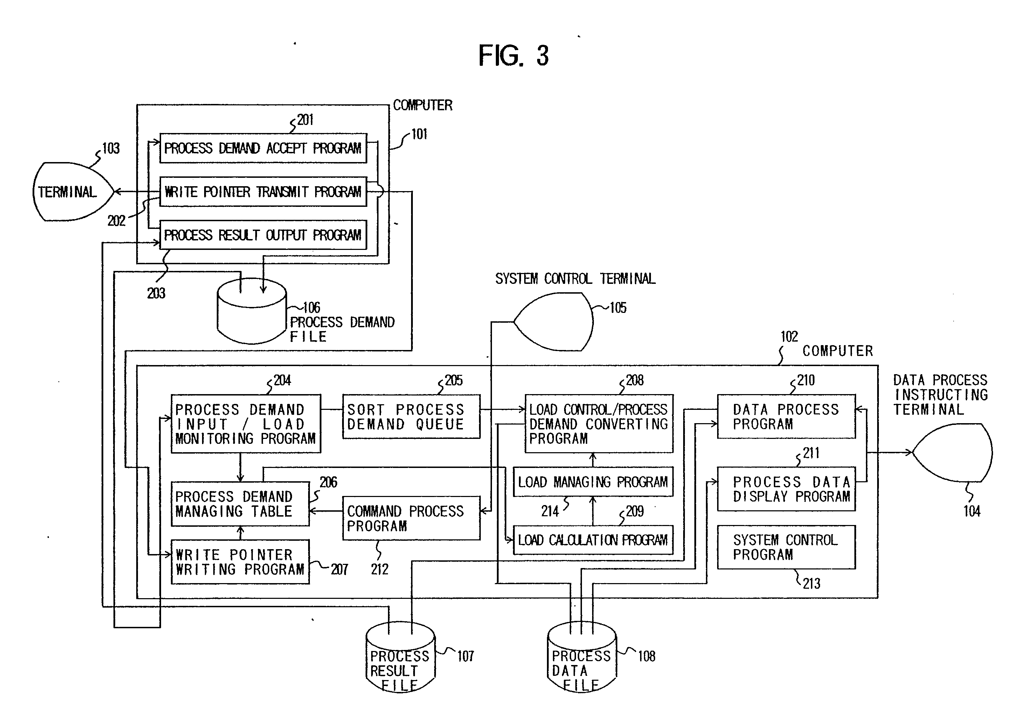

Fig. 3 represents programs and table and the like within the computers 101 and 102. The process operation of the process demand will now be explained more in detail with reference to Fig. 3. Solid lines for connecting between the programs and tables represent flows of data, whereas solid lines for connecting between the programs and terminals indicate data flows between the programs and terminals.

The process demand which has been inputted from the terminal 103 is transferred to the computer 101. Upon receipt of the process demand from the terminal 103, a process demand accept program 201 employed in the computer 101 writes this process demand into the process demand file 106 in an accepted order. A sort process demand queue 205 employed in the computer 102 corresponds to an area for storing plural sorts of the process demands in accordance with the sorts or classifications. The respective sorts of the process demand queues are queues which are managed or supervised by FIFOs (first-in First-out), which are logically independent from each other. Also, these classifications are managed under sort numbers corresponding to the classifications in a one-to-one relationship. These sort numbers are set from 1 up to a total sort number. A process demand input/load monitor program employed in the computer 102 sequentially reads the process demands in the writing order, which have been written into the process demand file 106, writes the process demands into the corresponding sort of process demand queue in the sort process demand queue 205, and also updates information on the process demand in a process demand managing table 206. A function of a load control/process demand converting program 208 is to check whether or not there is a process demand in each of the process demand queues of the sort process demand queue 205. As a result, if there is a queue to which more than 1 demand has been stored, a load calculation program 209 is started (a search for such a queue to which a process demand has been stored, is so-called as "a search for a process demand queues"). A load calculation program 209 calculates the number of the process demand to be processed for the relevant sort process based upon the information stored in the process demand managing table 206, and sets the calculation result into a load managing table 214. Also, the load control/process demand converting program 208 converts the corresponding process demand based upon the information stored in the load managing table 214 so as to be stored into the process data file 108, and furthermore reduces by 1 the value of the cycle number which has been set into the load managing table 214. As a result, if the resultant cycle number is not equal to zero, no search for the process demand queue of the sort process demand queue 205 is carried out, and a process demand subsequent to the present sort of process demand is performed. To the contrary, if the cycle number is equal to zero, a search is again made to the process demand queue of the sort process demand queue 205. If there exists the queue to which the process demand has been connected, the process

6

demand of the relevant sort is converted so as to be written into the process data file 108. A process data display program 211 periodically displays the contents of the process data file 108 on a data process instructing termianl 104. A data process program 210 processes the information stored in the process data file 108 in response to the instruction supplied from the data process instructing terminal 104, writes the processed result into the process result file 107, and sends the process result into the data process instructing terminal 104. A process result output program 203 reads the process result from the process result file 107 and outputs the process result into the terminal 103. A write pointer transmit program 106 periodically transmits to the computer 102, a write pointer indicative of a write position of a process demand which has been written at the most latest step. A write pointer writing program 207 receives the transmitted pointer and writes this received pointer into the process demand managing table 206. A system control program 213 manages or supervises the execution of the program in the computer 102. In case that both the process demand input/load monitoring program 204 and load control/process demand converting program 208 require an interruption of a process and starting after a predetermined time has passed, the above-described program is interrupted or started in response to this request (a relationship between the system control program 213 and other programs has been omitted in Fig. 3). A command process program 212 updates the value of a load control reduction flag area 509 (will be described later) on the process demand managing table 206 in response to the instruction supplied from the system control table 206.

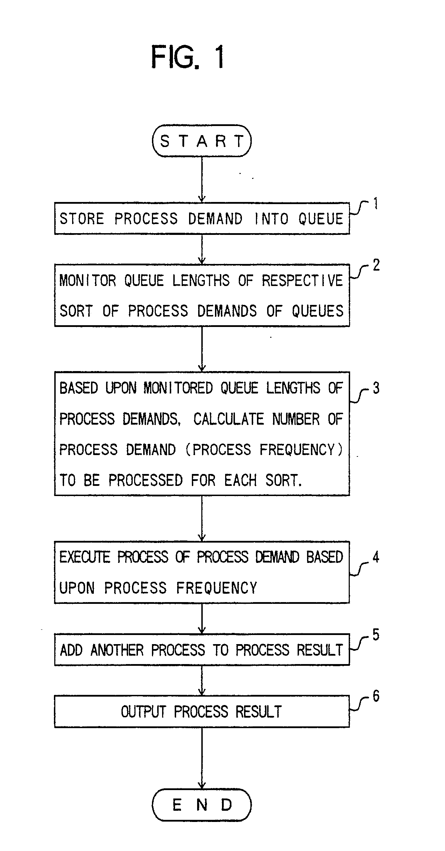

Then, a detailed description will now be made of a portion related to the load balancing control as a feature of this preferred embodiment with reference to Fig. 1. Fig. 1 is a flowchart for representing the load balancing control. In accordance with the present method, after the process demand has been inputted (a step 1), a queue length of the respective sorts of process demands is monitored (a step 2); the number (process frequency) of the process demands to be processed for each sort is calculated based upon the monitored queue lengths of the process demands (a step 3); the process demands are processed based upon this calculated number (a step 4); another process (other generic processes, e.g., a postprocess) is added to the above-described process result (a step 5) so as to output a process result thereof (a step 6).

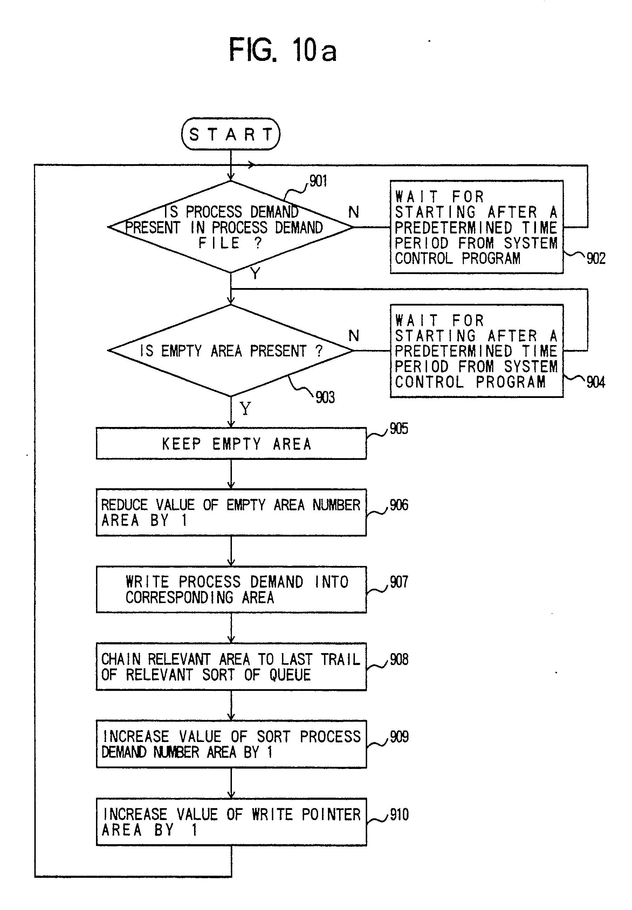

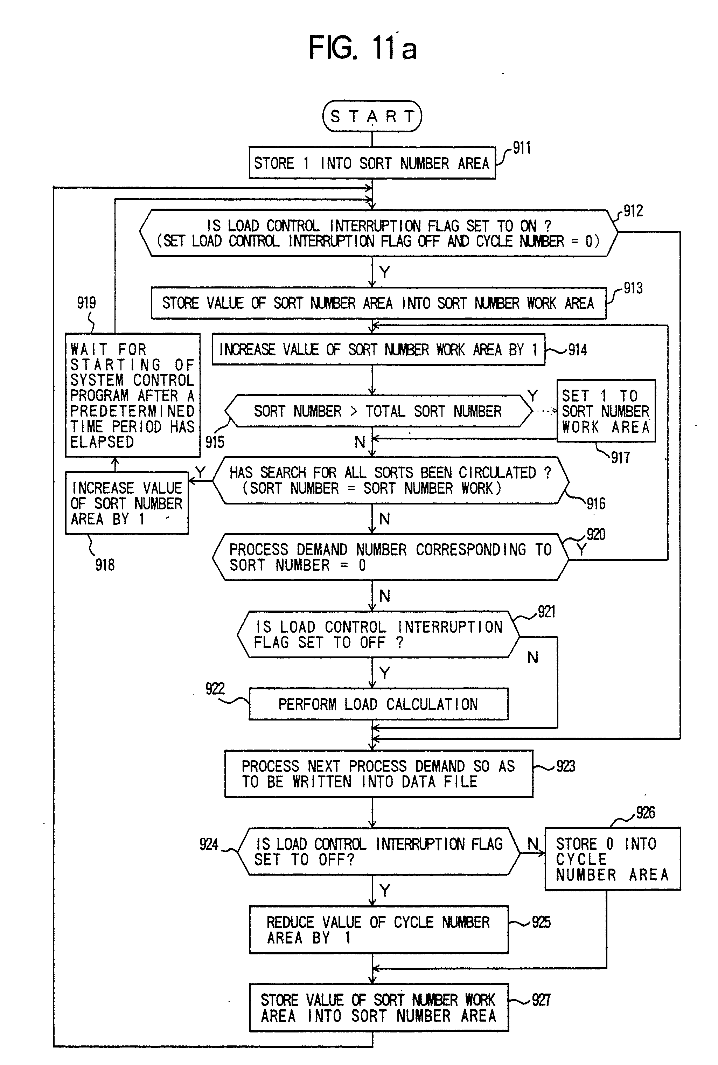

Now, structures for details of the process demands and the tables are described, and thereafter, the detailed operations on the processes as defined at the steps 1 and 2 are explained with reference to flowcharts shown in Figs. 10a to 10c, and finally a detailed operation as defined at the step 3 will be explained with reference to a flowchart shown in Fig. 11a.

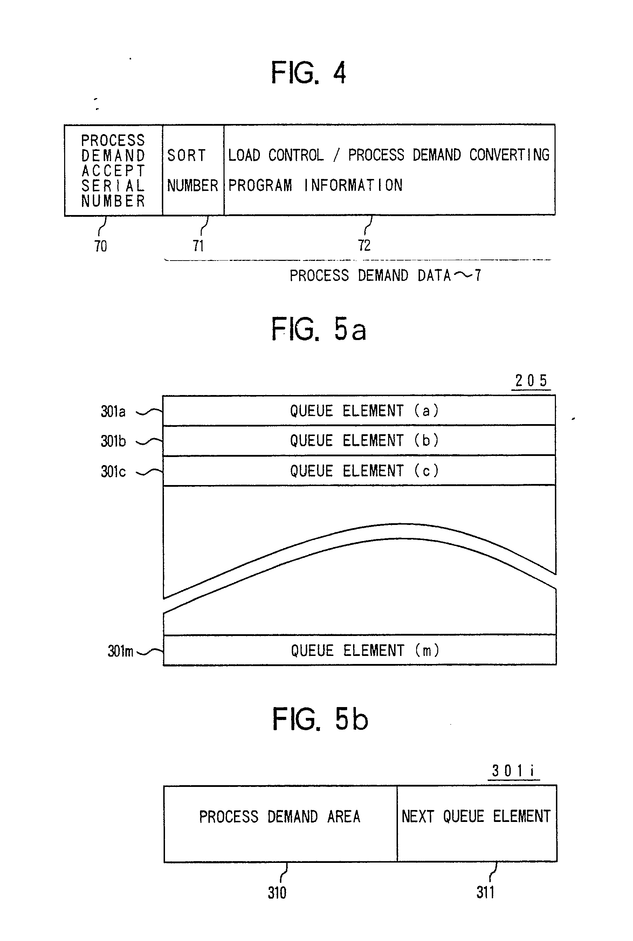

Fig. 4 represents a detailed content of the process demand written into the process demand file 106. The process demand written into the process demand file 106 is arranged by a serial number of accepting process demands 70 which has been attached by the process demand accept program 201 with respect to the process demand inputted from the terminal 103, and also process demand data 7 inputted from the terminal 103. Furthermore, the process demand data 7 is constructed of a sort number 71 and load control/process demand converting program information 72. The process demand accept serial number 70 corresponds to a serial number representing that the process demands have been accepted by the process demand accept program 201 in serial order. The sort number 71 is a number indicative of the sort of process demand and corresponds to each of the respective sorts from 1 to the total number thereof. The load control/process demand converting program information 72 corresponds to information converted by the load control/process demand converting program 208, and is equal to such an information particularly related to the load balancing control.

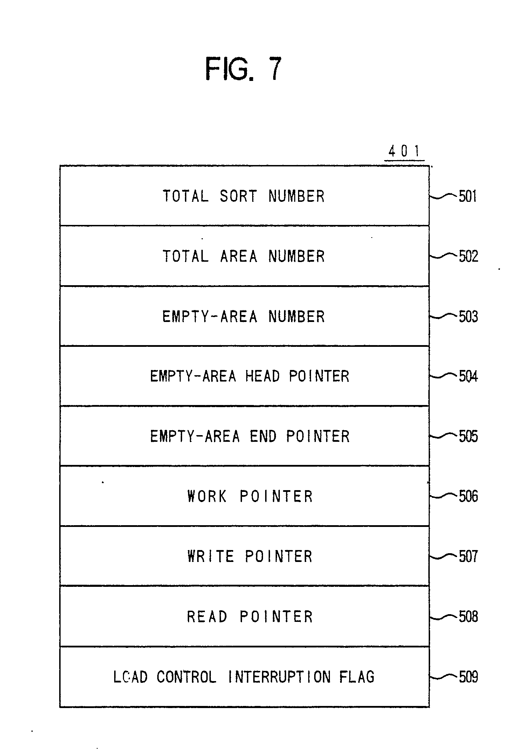

In Fig. 5a, there is shown a detailed content of the sort process demand queue 205. This sort process demand queue 205 is arranged by "m" pieces of queue element areas 301i ("i" being "a" to "m"). Fig. 5b represents a detailed content of an i-th queue element area in the sort process demand queue 205. The i-th area of queue element is constructed of a process demand area 310, and a next queue element area 311 (i.e., a pointer to a queue element to be subsequently connected). As previously described, the process demands which have been stored into the process demand file 106 are classified to be stored in the process demand area 310. Into the next queue is stored within the sort process of a queue element subsequent to the same sort of process demand queue stored within the sort process demand queue 205. Where there is no next queue element, "0" is set. The queuing operation to the respective sorts of process demand queues in the sort process demand queue 205 is performed as follows. That is to say, with employment of a value of an empty area head pointer area 504 on a process demand managing table 206 (will be discussed later), an area into which no process demand has been stored (referred to as "an empty area") is kept from the above-described queue element areas 301, a process demand is set to this empty area, and this process demand is connected to a final trail of a sort of process demand queue for the process demand to be queued. A detailed managing method for the above-described queue element will be described with reference to Fig. 7.

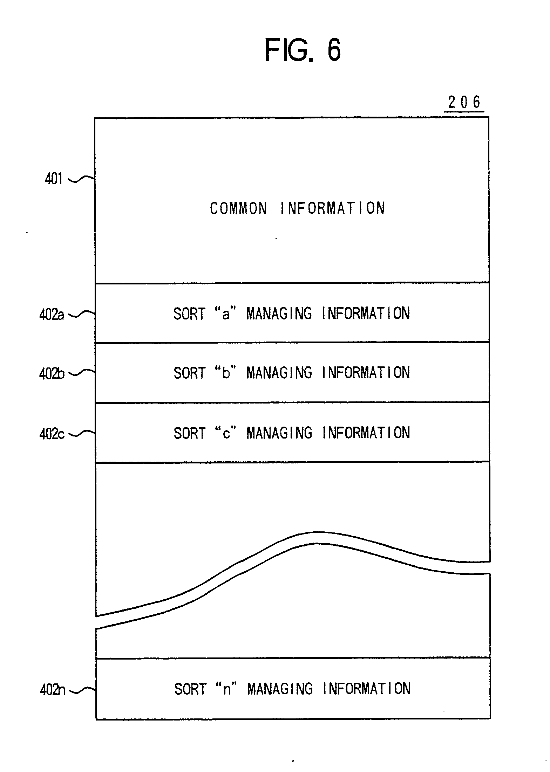

Fig. 6 is a detailed representation of the process demand managing table 206. The process demand managing table 206 is arranged by a common information area 401 and "n" pieces of entry information areas 402x ("x" being from "a" to "n"). The entry information areas 402x are areas for storing management information on the sorts of process demands in accordance with the sorts. Also, management information and the like of process demands not depending upon the sorts have been stored into the common information area 401.

Fig. 7 is a detailed representation for showing the common information area 401. This common information area 401 is constructed of a total sort number area 501, a total area number area 502, an empty-area number area 503, an empty-area head pointer area 504, an empty-area end pointer area 505, a work pointer area 506, a write pointer (WP) area 507, a read pointer (RP) area 508, and also a load control interruption flag area 509. In the total sort number area 501, a total sort number "n" of process demands is stored. The total area number area 502 stores a total number "m" of the queue element area 301 for the sort process queue 205. The empty-area number area 503 stores the number of the empty queue element areas 301i of the sort process demand queue 205. In the empty-area head pointer area 504, a position of a head area in areas (empty areas) has been stored into which the process command chained in the sort process command queue 205. The empty-area end pointer area 505 stores a position of a last trail area in the empty areas chained to the sort process command queue 205. The work pointer area 506 stores a position of the queue element area 301 to be temporarily escaped in order to form a queue for a process demand in the sort process demand queue 205. The WP area 507 stores the process demand accept serial number which has been written into the process demand file 106 at the latest stage. The RP area 508 stores a process demand accept serial number 701 of a process demand which has been read at the last stage from the process demand file 106. The load control interruption flag area 509 stores a flag indicating whether or not the load control is interrupted (this flag is set to "ON" when the interruption, i.e., load control is not carried out, whereas this flag is set to "OFF" when the non-interruption is performed, namely the load control is executed). It should be noted that "interruption" implies that an overall system is operated under such a state that only a certain function among a large quantity of functions is not operable. For instance, "to interrupt a load control" implies to interrupt dynamically advancing the process while monitoring the load shown in Fig. 1, and to execute the process for the respective sorts of process demands in a predetermined fixed sequence irrelevant to the loads at the respective time instants.

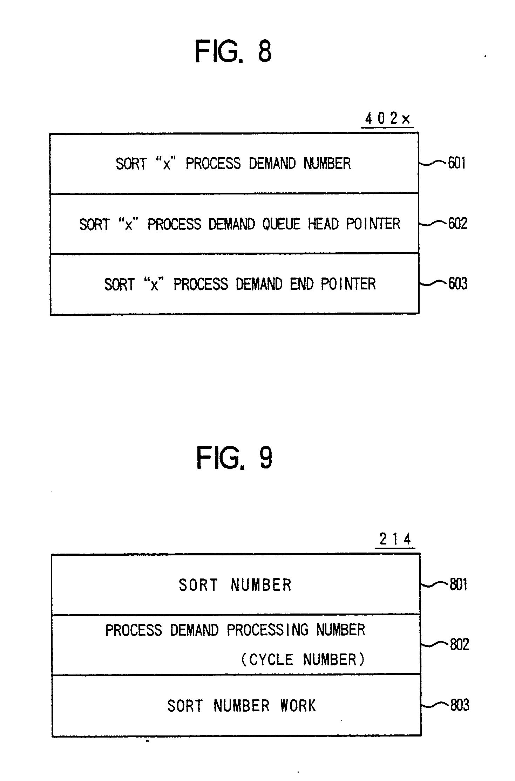

Fig. 8 is a detailed diagram of an arbitrary entry information area 402x in the process demand managing table 206 shown in Fig. 6. The entry information area 402x is constructed of a sort "x" process demand number area 601, a sort "x" process demand queue head pointer area 602, and a sort "x" process demand queue end pointer area 603. The sort "x" process demand number area 601 stores the number of a process demand chained to the process demand queue in the sort process demand queue 205. The sort "x" process demand queue head pointer 602 stores a position of a head queue element 301i of the sort "x" process demand queue in the process demand queue 205. The sort "x" process demand queue end pointer area 603 stores a position of a last trail queue element 301i of the sort "x" process demand queue in the sort process demand queue 205.

Fig. 9 is a detailed representation of the load managing table 214. The load managing table 214 is arranged by a sort number area 801, a process demand processing number area 802, and a process number WORK area 803. The sort number area 801 stores a sort number of a process which has be just before processed by the load control/process demand converting program 208. The process demand processing number area 802 stores the number of a process demand which should be processed at the present time by the load control/process demand converting program 208 (namely, cycle number). The sort number WORK area 803 stores the sort number of a process demand which is under process by the load control/process demand converting program 208.

Then, the load balancing control as the feature of this preferred embodiment will now be described more in detail. The previous steps 1 and 2 shown in Fig. 1 are performed by the process demand input/load monitoring program 204. Various operations of this process demand input/load monitoring program 204 will now be described more in detail with reference to a flowchart shown in Fig. 10a.

First of all, a judgement is made whether or not there is a process demand within the process demand file 106, based upon a value of the WP area 507 > a value of the RP area 508 (a step 901). If there is no process demand (namely, the value of the WP area 507 = the value of the RP area 508), starting is waited after a predetermined time period has passed from the system control program 213 (a step 902 : a timer function of the system control unit 213). If there is a process demand (i.e., the value of the WP area 507 > the value of the RP area 508), a judgement whether or not an empty area is present in the sort process demand queue 205 is made by checking whether or not a value of the empty area head pointer area 504 is equal to zero (a step 903). If no empty area is present (if a value of the empty area head pointer area 504 becomes 0), starting after a predetermined time period has elapsed is waited from the system control program 213 (a step 904). If there is an empty area, this empty area is maintained (a step 905 : will be discussed more in detail), and a value of the empty-area number area 503 is reduced by 1 (a step 906). Subsequently, a process demand to be read within the process demand file 106 (i.e., a process demand having the process demand accept serial number 70 equal to the value of the RP area 508 plus 1) is set to the previously kept area (i.e., to write) (a step 907), and this area is chained to the last trail of the relevant sort of the process demand queue (a step 908 : will be described later). Furthermore, the value of the relevant sort of process demand number area 601 is increased by 1 (a step 909) and the value of the relevant sort of RP area 508 is increased by 1 (a step 910). Thereafter, the process is returned to the previous step 901. With the above-described processes, one of the process demands is queued into the corresponding sort of process demand queue in the sort process demand queue 205.

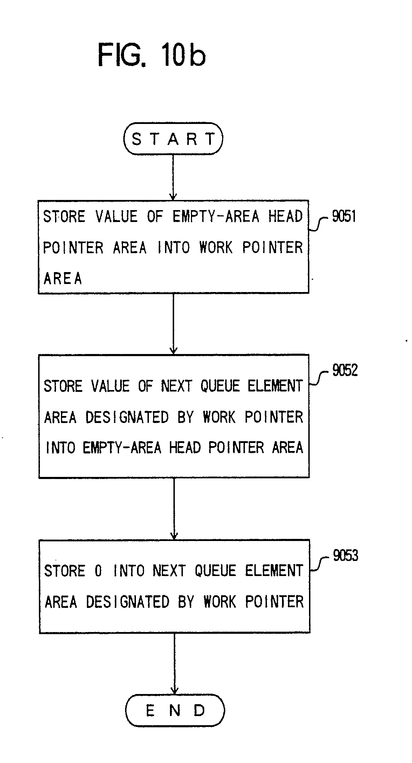

Next, a detailed process of the above-described step 905 will be described in accordance with a flowchart shown in Fig. 10b. First, a value of the empty-area head pointer area 504 is set into the WORK pointer area 506 (a step 9051). Subsequently, a value of the next queue element area 311 in the queue element area 301i designated by the value of the work pointer area 506 is set into the empty area head pointer area 504 (a step 9052). Furthermore, zero is set to the next queue element area 311 of the queue element area 301i which is designated by the value of the WORK pointer area 506 (a step 9053). With the above-described process, the queue element area 301i where no process demand has been stored (empty area) is maintained.

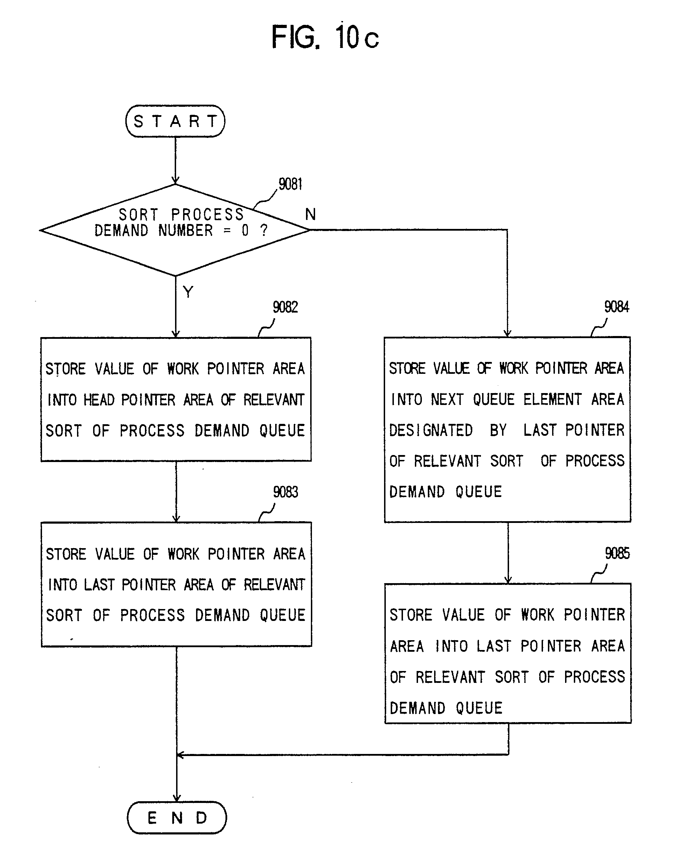

Then, a detailed process of the above-described step 908 will now be explained with reference to a flowchart shown in Fig. 10c. At a first step 9081, a check is made whether or not the value of the relevant sort of process demand number area 601 is equal to 0. If this value is equal to 0, then the value of the WORK pointer area 506 is set into the head pointer area 602 of the relevant sort of process demand queue (a step 9082), and furthermore, the value of the WORK pointer area 506 is set into the relevant sort of process demand queue end pointer area 603 (a step 9083). On the other hand, if the value of the relevant sort of process demand number area 601 is not equal to 0 (a step 9081), the value of the WORK pointer area 506 is set into the next queue element area 311 of the queue element 301i in the sort process demand queue 205 indicated by the value of the relevant sort of process demand queue end pointer 603 (a step 9084), and also the value of the WORK pointer area 506 is set into the relevant sort of process demand queue end pointer area 603 (a step 9085). With the above-described processes, the kept area is chained to the last trail of the sort of process demand queue for the process demand of the queuing operation.

The operation defined at the step 4 shown in Fig. 1 is executed by the load control/process demand converting program 208. The operation by the load control/process demand converting program 208 will now be explained with reference to a flowchart shown in Fig. 11a (an overall step defined in this flowchart corresponds to the step 4). At a first step 911, an initial value 1 is set to the sort number area 801 formed in the load managing table 214 and the process is commenced for the process demand having a sort number of "1". Next, a judgement is made whether or not the load control should be executed (a step 912). When it is under such a condition that the load control is effected, namely when the value of the load control interruption flag area 509 is set to "ON" ("1", i.e., the load control is interrupted), otherwise when the value of the load control interruption flag area 509 is set to "OFF" ("0") and also the value of the cycle number area 802 is equal to "0" (the number of the process demands to be processed with respect to a certain sort becomes "0"), the value of the sort number area 801 is set to the sort number WORK area 803 (a step 913). Conversely, when it is not under such a condition that the load control is performed, namely any conditions other than the above-described condition, a process defined at a step 923 is performed. After the process defined at the step 913 has been executed, the value of the sort number WORK area 803 is increased by 1 at a step 914, and then another check is made whether or not the value of the sort number area 801 is greater than the value of the total sort number area 801 (a step 915). If YES, then 1 is set to the sort number WORK area 803 so as to again perform the processes from the process sort number 1 (a step 917) and the process defined at the previous step 916. If the value of the sort number area 801 is smaller than that of the total sort number area 501, a check whether or not all of the sorts have been searched is judged whether or not the value of the sort number area 803 is equal to the value of the sort number WORK area 801 (a step 916). If these values are equal to each other, after the value of the sort number area 801 is increased by 1 (a step 918), starting of the system control program 213 after a predetermined time period has elapsed is waited (a step 919). Subsequently, the process is executed from the step 912. If a search for circulating all of the sorts is not performed (in other words, if the value of the sort number area 801 is not equal to that of the sort number WORK area 803), a check is made whether or not the value of the relevant sort of the process demand number area 601 is equal to zero (a step 920). If yes, then the process defined at the previous step 914 is performed. If No, then a judgement is executed whether or not the value of the load control interruption flag area 509 corresponds to zero (a step 921). If the value of this load control interruption flag 509 is equal to 1, a process defined at a step 923 is performed, whereas if it is equal to 0, then the load calculation is executed (a step 912). Thereafter, a subsequent process demand is read out from the sort process demand queue 205 and the read process demand is converted and then written into the process data file 108 (a step 923).

Next, a check is made whether or not the value of the load control interruption flag area 509 is equal to 0. If this value is equal to 1, then "0" is set into the cycle number area 802 so as to interrupt the load control (a step 926), and then a process defined at a step 927 is performed. To the contrary, if the value of the load control interruption flag area 509 is equal to 0, then the value of the sort number area 802 is reduced by 1 (a step 925), and thereafter the value of the sort number WORK area 803 is set into the sort number area 801 (a step 927).

With the above-described processes, one process demand is read out from the sort process demand queue and is processed, whereby the processed demand is written into the process data file 107.

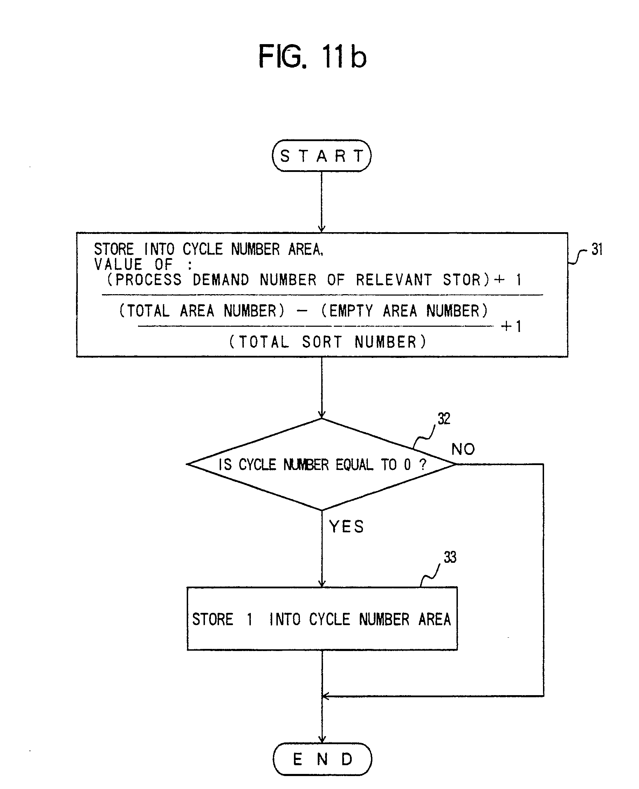

The step 3 shown in the flowchart of Fig. 1 is performed by the load calculation program 209. The operations of the load calculation program (i.e., a detailed operation defined at the step 3 or step 1012 shown in Fig. 11a) will now be described in accordance with a flowchart shown in Fig. 11b.

First, a value "ki" obtained from the following equation (1) is set to the cycle number area 802 (a step 31).

$$ki = Li + 1 / \overline{L} + 1 \qquad (1),$$

where:

$Li$     the value of the relevant sort of the process demand number area 601 (a queue length of the sort "i" of the process demand),

$\overline{L}$     an averaged value for all sort of the values $Li$, i.e., a value calculated as follows:

$$\overline{L} = \frac{(\text{total area number}) - (\text{empty area number})}{\text{total sort number}}$$

where the total area number is equal to the value of 502, the empty area number is equal to the value of 503, and the total sort number is equal to the value of 501,

$ki$     a process frequency of the sort "i" of the process demand (i.e., demand number to be processed by the program 208), which is obtained by cutting away a number below a decimal point.

Thereafter, a judgement is made whether or not the cycle number (value of 802) is equal to 0 at a step 32, and if it is not equal to 0, then the load calculation process is accomplished. Conversely, if the cycle number is equal to 0, then 1 is set to the cycle number area 802 (a step 33). That is to say, when the process frequency "ki" calculated in the above-described equation is not equal to 0, this value is stored into the area 802. To the contrary, when it is equal to 0, this process frequency is regarded as 1 and stored in the area 802.

It should be noted that when the command process program 212 is started by supplying the command from the system control terminal 105, this command process program 212 sets the value of the load control interruption flag area 509.

In accordance with the above-described preferred embodiment, while monitoring the respective sorts of process demand numbers (the value "Li" of the sort "x" process demand number area 601) within the sort process demand queue 205, the process frequency "ki" is determined based upon the above-described equation (1). Since the process demand is processed based upon this process frequency, the processing time periods are balanced among the sorts and therefore there is substantially no difficulty that delays for such a processing operation may occur.

It should be noted in the above-described preferred embodiment that a load display program for continuously outputting the values of the respective sorts of the process demand number areas 601 within the process demand table 206 to the system control terminal 105 may be employed in the computer 102 shown in Fig. 3, and an operator for the system control terminal 105 may supply a command based on this display so that the above-described equation (1) may be substituted by another equation for obtaining a process frequency. For instance, when there are considerably many inputs of the specific sort of process demands, the above-described equation (1) may be substituted by the following equation (2):

$$Ki = Li / \overline{L} \qquad (2),$$

where $Ki$, $\overline{L}i$ and $L$ imply the same as those of the above-described equation (1). When the value of the process frequency $ki$ becomes 0 by cutting away a number below a decimal point, similar to those of the equation (1), this is substituted by 1. With the above-described operation, even when a large quantity of sorts are present in the inputs of the process demands, these sorts of process demands may be quickly processed. As a result, substantially no delay may occur, as compared with the former operation with employment of the equation (1).

It should be noted that a proper equation may be selected from a plurality of equations such as the above-described equations (1) and (2) so as to obtain the process frequency when the computer system is under generation.

Although the process frequency was calculated from the queue length of the relevant sort of the process demand based upon the equation (1) or (2) in the above-mentioned preferred embodiment, while monitoring an acceptance velocity for each sort of process demand (input number for each sort per unit time), or a processing time period, the desirable process frequency may be calculated from either this acceptance velocity or processing time period. A detailed description of this modification will be discussed later.

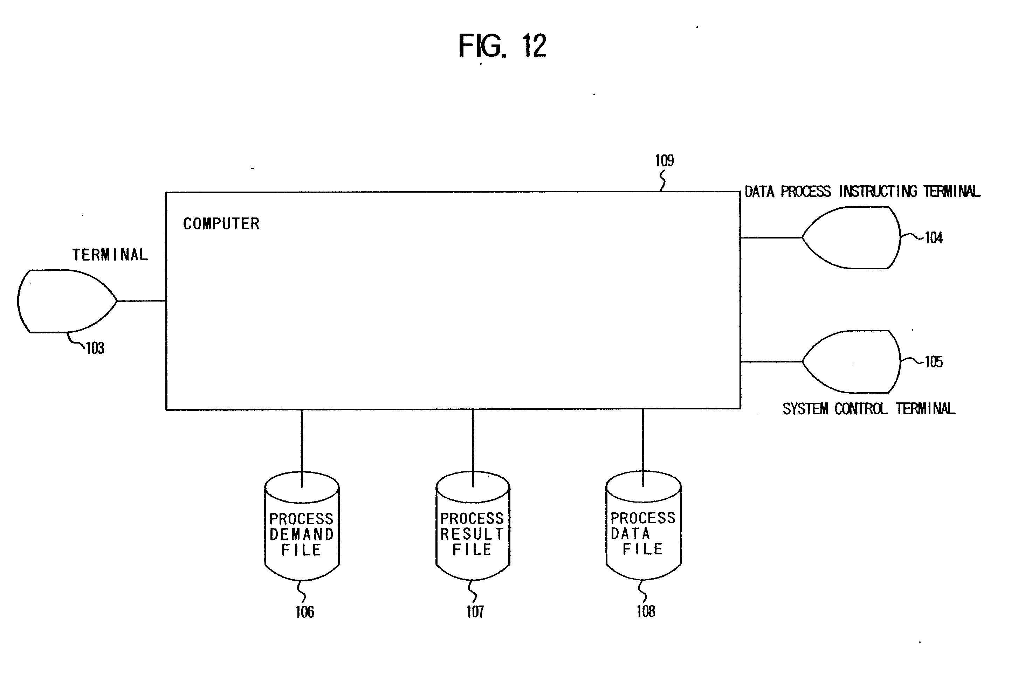

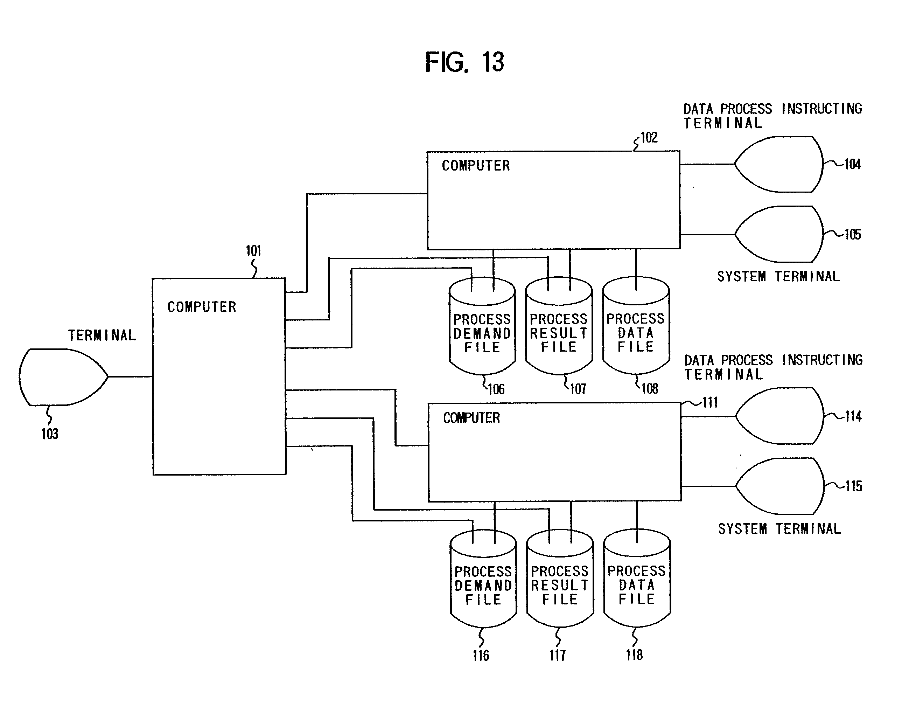

It should be noted that although the hardware arrangement of the computer system according to the above-described preferred embodiment contained the computer 101 for accepting the process demand from the terminal and also the computer 102 for performing the processing operation of the process demand as represented in Fig. 2, such a computer system may be alternatively constructed as shown in Figs. 12 and 13. That is to say, in the computer system shown in Fig. 12, a computer 109 is employed instead of the previous computers 101 and 102 shown in Fig. 2. Also in the computer system shown in Fig. 13, a plurality of computers each having the same function as the computer 102 shown in Fig. 2, and these plural computers are connected to the computer 101. In this case, a computer 111 having the same function as the computer 101 together with the computer 102. In the computer system shown in Fig. 13, reference numeral 114 ·denotes a data process instructing terminal; reference numeral 115 is a system terminal; reference numeral 116 indicates a process demand file; reference numeral 117 denotes a process result file; and reference numeral 118 represents a process data file. In Fig. 13, each of these computers 102 and 111 monitors a load condition of own computer so as to perform the load control according to the present invention.

Subsequently, a description will now be made of such a preferred embodiment that a process frequency is calculated from the above-described acceptance velocity (referred to as an "arrival velocity" hereinafter) with respect to, in particular, circuit portions different from those of the above-described preferred embodiment.

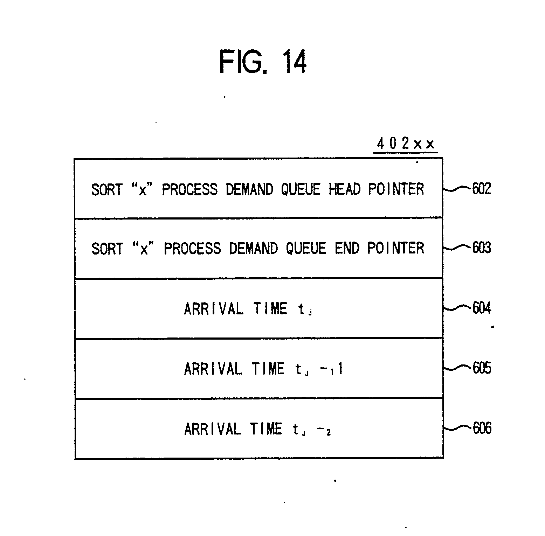

Fig. 14 is a detailed representation of an arbitrary entry information area "402xx" of the process demand managing table 206 shown in Fig. 6 according to the preferred embodiment, in case that a process frequency is calculated without utilizing the queue length, but with using an arrival velocity of a process demand. This entry information area 402xx is arranged by a sort "x" process demand queue head pointer area 602; a sort "x" process demand queue end pointer area 603; an arrival time "$t_j$" area 604; an arrival time "$t_{j-1}$" area 605, and, an arrival time "$t_{j-2}$" area 606. In the sort "x" process demand queue head pointer area 602, a position of a head queue element 301i for the sort 'x" process demand queue in the sort process demand queue 205 has been stored. In the sort "x" process demand queue end pointer area 603, a position of a last trail queue element 301i in the sort process demand queue 205 has been stored. The arrival time "ti" area 604 stores an arrival time of the stored process demand which has arrived in the sort process demand queue 205 at a time instant the most close to a present time instant (i.e., a time instant where this area is read). This arrival time corresponds to a time instant where this area is actually written, and having a slight error. The arrival time "$t_{j-1}$" area 605 stores an arrival time instant of a process demand which has arrived at a time instant close to the present time instant in a second order. Furthermore, the arrival time "$t_{j-2}$" area 606 stores an arrival time instant of a process demand which has arrived at a time instant close to the present time instant in a third order.

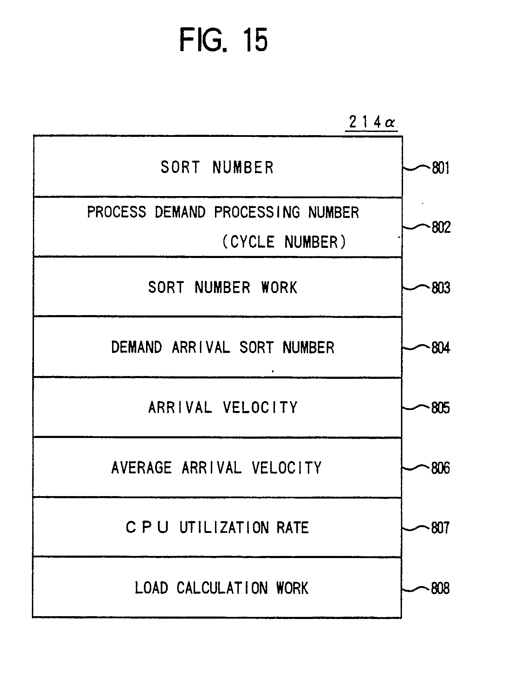

Fig. 15 is an illustration for representing a detailed content of a load managing table 214α in case that a process frequency is obtained without employing the queue length, but with utilizing an arrival velocity of a process demand. This load managing table 214α includes a sort number area 801, a process demand processing number area 802, and a sort number WORK area 803. In the sort number area 801, a sort number of a process demand which has be just before processed by the load control/process demand converting program 208. The process demand process number area 802 stores the number of a process demand (referred to as a "cycle number" hereinafter) which should be processed at a present time instant by the load control/process demand converting program 208. The sort number WORK area 803 stores a sort number ·of a process demand which is being processed by the load control/process demand converting program 208. A demand arrival sort number area 804 stores the number of the sorts in which the arrival velocities of the process demands (i.e., velocities at which the process demands are stored into the sort

11

process demand queue 205) are not equal to zero. An arrival velocity area 805 stores an arrival velocity of a sort of process demand which will be processed by the load control/process demand converting program 208. An average arrival velocity area 806 stores an average process demand arrival velocity related to such a sort that an arrival velocity of a process demand is not equal to zero. A CPU utilization rate area 807 stores a total CPU utilization for the load control/process demand converting program 208 and also a load calculation program 209. A load calculation WORK area 808 corresponds to a work area for carrying out a load calculation and stores a sort number therein.

Then, a sequence to obtain a process frequency from an acceptance velocity (arrival velocity) will now be described.

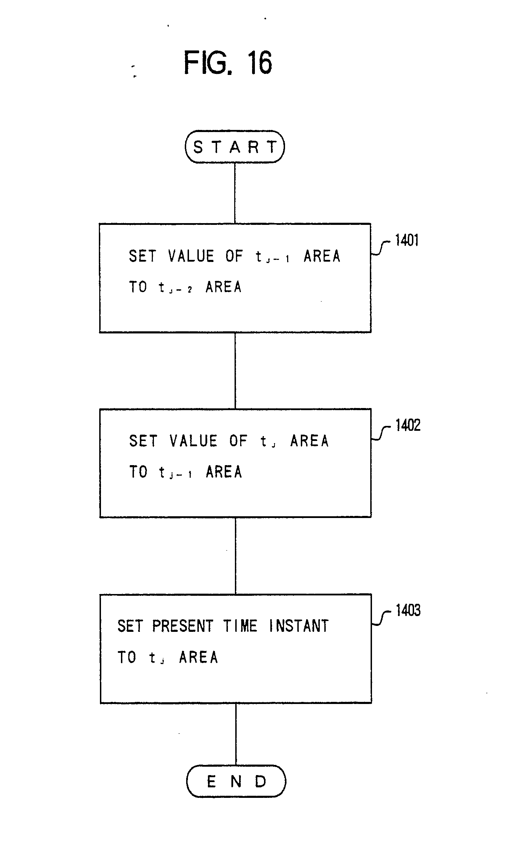

First, the process demand input/load monitoring program 204 performs a process of a flowchart shown in Fig. 16, instead of the process defined at the step 909 shown in the flowchart of Fig. 10a with employment of the information on the entry information area "402xx" represented in Fig. 14. In other words, the value of the arrival time "$t_{j-1}$" area 605 contained in the sort "x" managing information unit 402xx within the process demand managing table 206 is set to the arrival time "$t_{j-2}$" area 606 (a step 1401), and the value of the arrival time "tj" area 604 is set to the arrival time ($t_{j-1}$) area 605 (a step 1402). Subsequently, a present time instant is set to the arrival time "tj" area 604 (a step 1403).

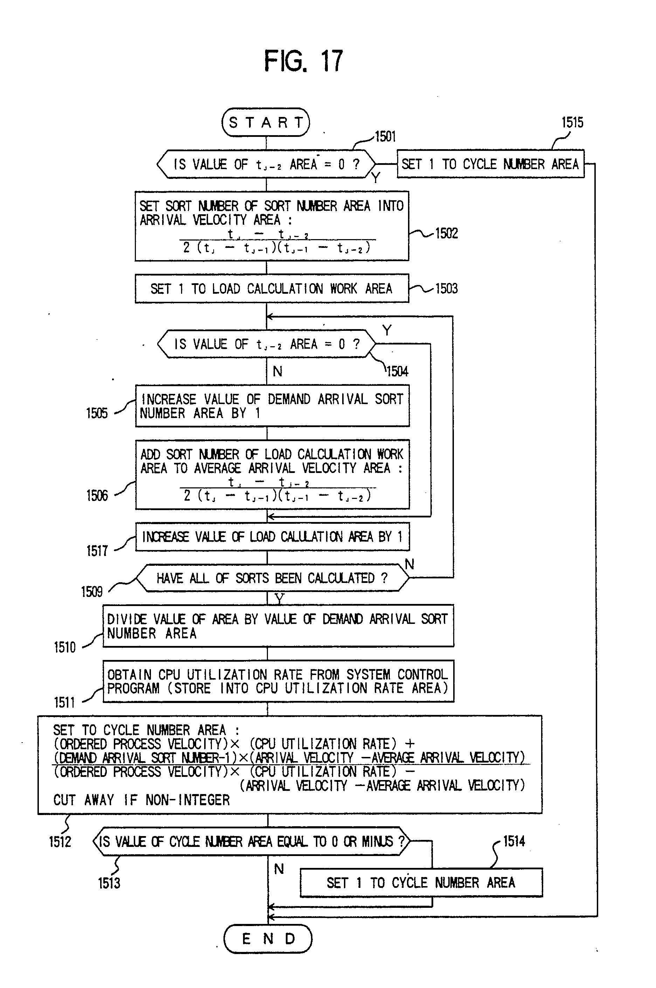

Also, the load calculation program 209 processes a flowchart represented in Fig. 17, instead of the flowchart shown in Fig. 1b, with employment of both the information on the entry information area "402xx" shown in Fig. 14 and the information on the load managing table 214 shown in Fig. 15. That is to say. if the value of the arrival time "$t_{j-2}$" area 606 is equal to zero at a step 1501, "1" is set to the cycle number area 802 at a step 1515 and the load calculation is completed. To the contrary, if the value of the arrival time "$t_{j-2}$" area 606 is not equal to zero at a step 1501, a value is set to the arrival velocity area 805 at a step 1502, which value is obtained from the following formula constructed of a value of a sort of entry information area "402xx" indicated by a number (sort number) which has been stored in the sort number WORK area 803:

$$\frac{\dfrac{1}{\text{value of} \atop \text{tj area}} - \dfrac{}{\text{value of} \atop t_{j-1} \text{ area}} + \dfrac{1}{\text{value of} \atop t_{j-1} \text{ area}} - \dfrac{}{\text{value of} \atop t_{j-2} \text{ area}}}{2}$$

Then, 1 (sort number) is set to the load calculation WORK area 808 at a step 1503. Subsequently, a judgement is made whether or not the value of the "$t_{j-2}$" area 606 is equal to zero at a step 1504. If this value is not equal to zero, the value of the demand arrival sort number area 804 is increased by 1 at a step 1505. Then, after a value obtained from the below-mentioned formula has been set to the value of the average arrival velocity area 806 at a step 1506, which formula is arranged by the value of the sort of entry information area "402xx" representative of the number (sort number) stored in the load calculation WORK area 808;

$$\left( \frac{1}{\dfrac{\text{value of}}{\text{tj area}} - \dfrac{\text{value of}}{t_{j-1} \text{ area}}} + \frac{1}{\dfrac{\text{value of}}{t_{j-1} \text{ area}} - \dfrac{\text{value of}}{t_{j-2} \text{ area}}} \right) \times 1/2,$$

then the value of the load calculation WORK area 808 is increased by 1 at a step 1507. If the value of the arrival time "$t_{j-2}$" area 606 is equal to zero at a step 1504, the process jumps over the above-described steps 1505 and 1506 and a process defined at a step 1507 is carried out. Next, when a comparison is made between the value of the load calculation WORK area 808 and the value of the total sort number area 501, if the former value is smaller than the latter value (a step 1509), the process is returned to such an operation that a judgement is again made whether or not the value of the arrival time "$t_{j-2}$" area 606 is equal to zero (a step 1504). Conversely, if the value of the load calculation WORK area 808 exceeds over the value of the total sort number area 501 at a step 1509, then the value of the average arrival velocity area 806 is divided by the value of the demand arrival sort number area 804 and the resultant value is set to the average arrival velocity area 806 at a step 1510. After the total CPU utilization rate for the load control/process demand converting program 208 and also the load calculation program 209 has been obtained from the system control program 213 to the CPU utilization rate area 807 (a step 1511), a value obtained from the following formula (3) is set to the cycle number area 802 at a step 1512:

$$\frac{\left(\begin{array}{l}\text{process demand} \\ \text{processing velocity}\end{array}\right) \times \left(\begin{array}{l}\text{value of CPU utiliza-} \\ \text{tion rate area}\end{array}\right)}{\left(\begin{array}{l}\text{process demand} \\ \text{processing velocity}\end{array}\right) \times \left(\begin{array}{l}\text{value of CPU utiliza} \\ \text{tion rate area}\end{array}\right)} +$$

$$\frac{\left(\begin{array}{l}\text{value of demand arrival} \\ \text{sort number area} - 1\end{array}\right) \times \left(\begin{array}{l}\text{value of arrival} \\ \text{velocity area} - *\end{array}\right)}{\left(\begin{array}{l}\text{value of arrival} \\ \text{velocity area}\end{array} - \begin{array}{l}\text{value of averaged} \\ \text{arrival velocity area}\end{array}\right)}$$

$$\text{--- (3)}$$

$$* \text{ value of averaged arrival velocity area}$$

It should be noted that if the value of above formula (3) corresponds to a non-integer, a number below a decimal point is cut away and the remaining is set into the cycle number area 802, and also the process demand processing velocity is equal to a fixed number determined based upon both an average instruction execution time period of the computer and the total step number of the program. If the value of the above-described cycle number area 802 is equal to either zero or minus (a step 1513), after "1" is set to the cycle number area 802 at a step 1514, the load calculation is accomplished. Conversely, if the value of the cycle number area 802 is not equal to either zero or minus, the load calculation is directly completed. With the above-described processes, the process frequency can be obtained based upon the arrival velocity to the sort process demand queue 205 for the relevant sort of the process demand.

It should be noted that the above-described process frequency may be calculated from the following formula (4) instead of the above formula (1):

$$\text{process frequency} = \text{value of process demand number area} -$$

$$\frac{\begin{array}{l}\text{value of total area} \\ \text{number area}\end{array} - \begin{array}{l}\text{value of empty area} \\ \text{number area (603)}\end{array}}{\text{value of total sort number area}} \quad \text{--- (4)}$$

Note that in the right-hand side, a number below a decimal point is cut away. Also, when the process frequency becomes 0 or minus, then it is substituted by 1. The above-described equation is established on the basis of idea that process demands are processed with having a longer queue length than the averaged queue length for a longer processing time than the averaged processing time.

Next, a description will now be made to a method and an apparatus for controlling a load of a computer system in combination with the above-described preferred embodiments or the single preferred embodiment. In accirdance with this new preferred embodiment, since the computer system adjusts (controls) the number of the process demands accepted thereby, this computer system is not brought into the overload state.

First of all, a concept of this preferred embodiment will now be summarized.

That is to say, in a previously identified computer system, an input number "VI" of process demands supplied to the computer system per a unit time is adjusted based upon a maximum process demand number "VO" which can be processed by this computer system per a unit time. When the maximum process demand number "VO" is high, the input number "VI" is also high, whereas when the demand number "VO" is low, the input number "VI" is low.

It should be noted that "identified" implies that a quantity of a certain object is determined based on search results for various data.

Concretely, after excessive process demands have been previously continued to be inputted into the computer system, an inverse number of a time period "T" when time intervals at which each of the process demands has been processed become substantially constant, is identified as a maximum processing demand number "VO" which can be processed by the computer system per a unit time. A value greater than another inverse number of the above identified value (namely the above-described time interval "T") is regarded as a read time interval (arrival time interval) of the process demand inputted from the input terminal of the process demand, so that an input number "VI" of the process demands supplied to the computer system per a unit time is adjusted in such a manner that the computer system does not exceed over the maximum processing demand number VO per a unit time. For instance, it is so adjusted that the computer system does not accept the process demand if necessary.

Alternatively, once the process demand is accepted, and thereafter the input is invalidated by the computer system if required, with the result that the input number of the process demands per a unit time supplied to the computer system may be adjusted (i.e., reduced).

Since the input number "VI" of the process demands to the computer system per a unit time is limited to a number smaller than the maximum processing demand number processable by the computer system per a unit time, a flow of the excessive process demands exceeding over the processing velocity for the computer system can be prevented so that the computer system is not brought into the overload condition.

A description will now be made of a concrete preferred embodiment according to the present invention.

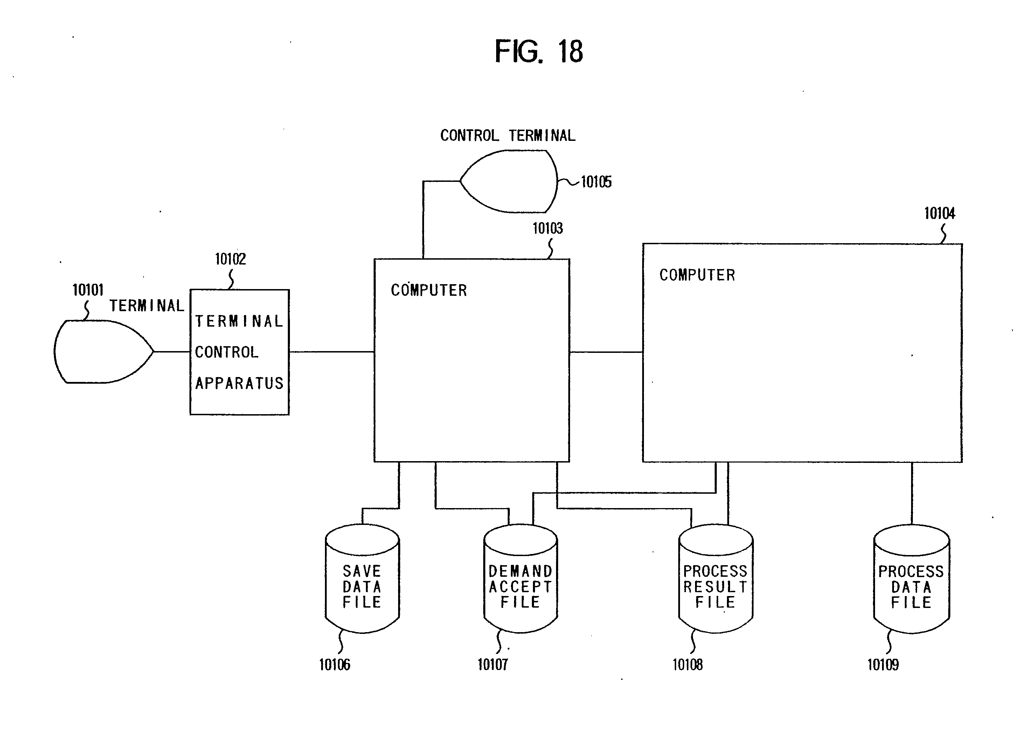

In Fig. 18, there is shown a hardware arrangement of a computer system. The present computer system is used for an input of a process demand. This computer system comprises: a terminal 10101 such as a card reader, a paper tape reader, and a CRT (corresponding to the terminal 103 shown in the above-described preferred embodiment); a terminal control apparatus 10102 for controlling a data communication between computers and a data input/output to the terminal 10101; a computer 10103 for accepting a process demand inputted from the terminal 10101 and for announcing a process result to the user terminal; a computer 10104 for performing a process of the accepted process demand; a control terminal 10105 for controlling and managing the computer 10103; a save data file 10106 for saving data which is passed for subsequent starting when the computer 10103 is stopped; a demand accept file 10107 for storing the accepted process demand; a process data file 10108 for storing data required for executing a demanded process; and, a process result file 10109 for storing a process result.

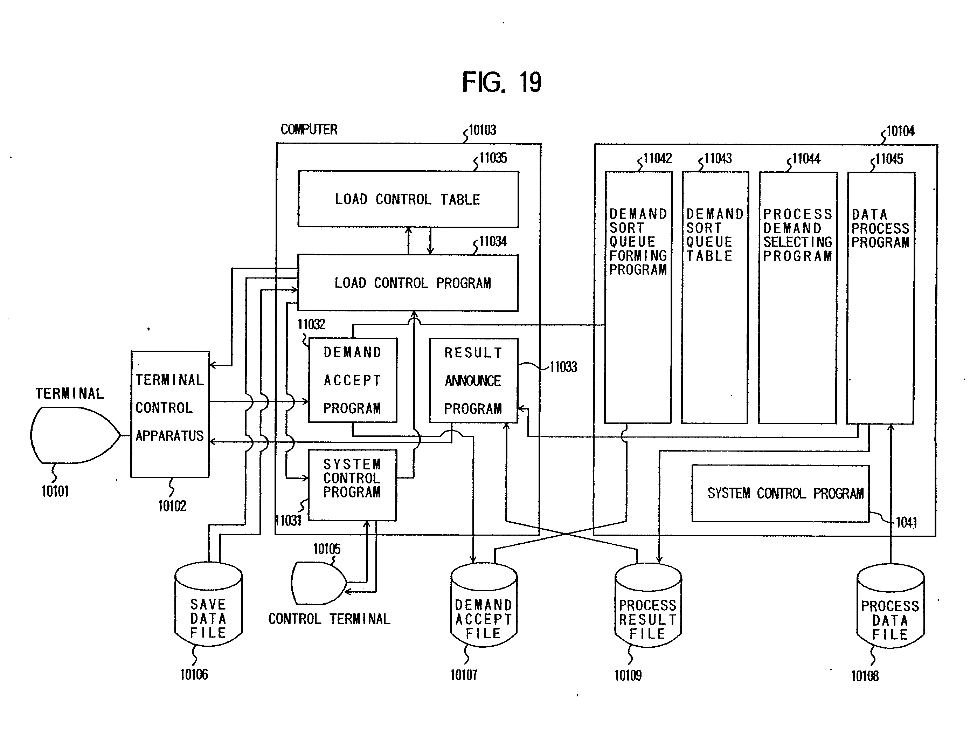

Then, there are shown arrangements of programs and tables employed in the computers 10103 and 10104 in Fig. 19. It should be noted that arrows made between the programs, between the program and table, and between the program and apparatus indicate a flow of data.

The computer 10103 includes a system control program 11031, a demand accept program 11032, a result announce program 11033, a load control program 11034, and a load managing table 11035. The function of this system control program 11031 is to control starting of the program for the computer 10103, to control a timer, and to output a control message. In the other words, the system control program 11031 starts each of the programs employed in the computer 10103 in response to an instruction given by the control terminal 10105. When an event occurs in the computer 10103, an announcement what event has occurred is made to other programs employed in this computer 10103. Also, a present time instant is announced to each of the programs in response to a time acquiring demand from the respective programs. Furthermore, a control message which has been required for a control message output demand made from the respective program is outputted to the control terminal 10105. The demand accept program 11032 accepts the process demand inputted from the terminal 10101. The result announcement program 11033 announces a process result of a demanded process to the terminal 10101. The load control program 101034 identifies a maximum processing velocity of the computer system shown in Fig. 18, namely a maximum process demand number processible in a unit time, and also updates a data reading period of the terminal 10101 in the terminal control apparatus 10102, namely a reading time interval (note that this reading time interval is more or less varied in accordance with the operation condition of the terminal control apparatus 10102, is not always kept at a constant value in the preferred embodiment, precisely speaking). In the load managing table 101035, data required for an operation of the load control program 101034 is stored.

The computer 10104 includes a system control program 101041, a demand sort queue forming program 101042, a demand sort queue table 101043, a process demand selecting program 11044, and also a data process program 11045. The system control program 11041 performs a control to start a program of the computer 10104. That is to say, when a power supply of the computer 10104 is turned on, this system control program 11041 starts each of the programs employed in the computer 10104. The demand sort queue forming program 11042 classifies the accepted process demand in accordance with the content of the process demand, and queues the classified process demand into the demand sort queue table 11043. The demand sort queue table 11043 is such a table for queuing the process demands in a FIFO (first-in first-out) mode, depending upon the contents of the process demands. The process demand selecting program 11044 picks up the queued process demand and requests the data process program 11045 to perform the process operation. The data process program 11045 performs to process the requested demand.

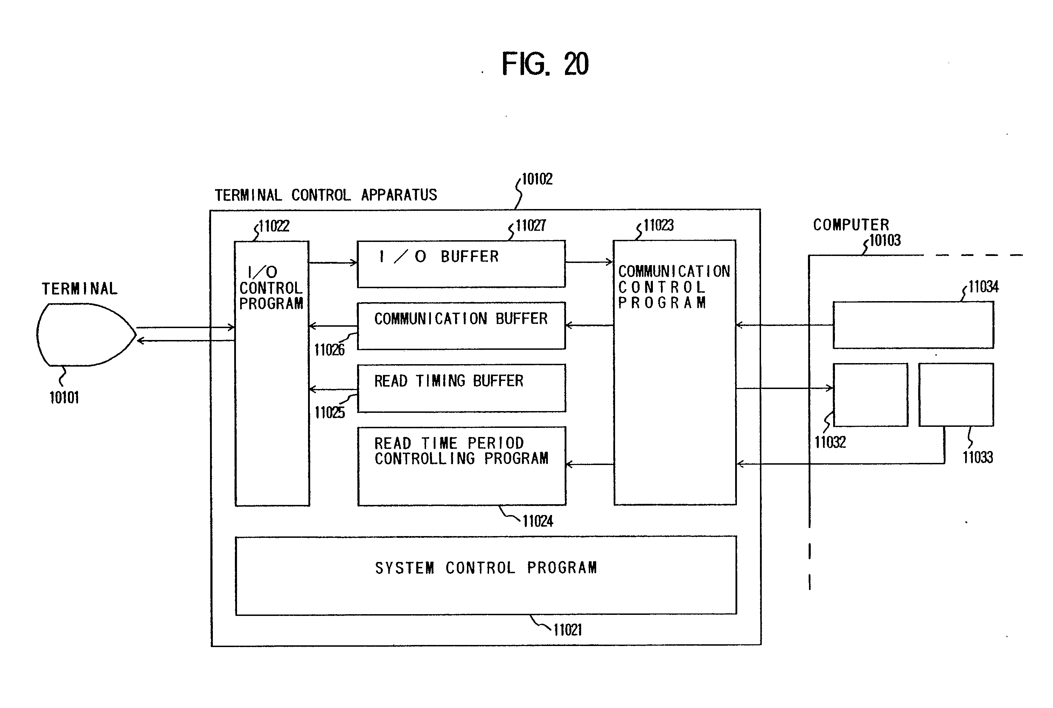

Furthermore, in Fig. 20, there is shown an arrangement of programs and buffers employed in the terminal control apparatus 10102. It should be noted that arrows made between the programs, between the program and buffer and between the program and apparatus, indicate a flow of data.

The terminal control apparatus 10102 includes a system control program 11021; an I/O control program 11022; a communication control program 11023; a read period control program 11024; a read timing buffer 11025; a communication buffer 11026, and an I/O buffer 11027. The system control program 11021 executes a control of starting for the program of the terminal control apparatus 10102 and a control of a timer. In other words, when the power supply of the terminal control apparatus 10102 is turned on, the system control program 11021 starts each of the programs employed in the terminal control apparatus 10102. Also, this system control program 11021 announces a present time instant to each of the programs in response to a time acquiring demand derived from each of the programs. The I/O control program 11022 performs a control of input/output operations between the terminal 10101 and itself. The communication control program 11023 communicates with the computer 10103. The I/O buffer 11027 stores data on a process command which has been read from the terminal 10101 under the control of the I/O control program 11022. The communication buffer 11026 stores data on a process demand which has been received from the computer 10103 under the control of the communication control program 11023. The read timing buffer 11025 stores a value of a reading time period for the process demand from the terminal 10101. The read time period controlling program 11024 updates a value of the read timing buffer 11025.

When one of the process demand data is inputted, the terminal 10101 enables the inputted process demand data to be stored into an internal input buffer and also a further input to be blocked. Furthermore, when the process demand data stored in the internal input buffer is read out, the terminal 10101 releases the blocking of the input data. It should be noted that since a maximum length of the process demand data has been previously determined, the various processes such as input operations, buffering operations and transfer operations are executed in a unit of this maximum length.

In addition, the load managing table 11035 will now be described more in detail.

In accordance with this preferred embodiment, the maximum processing velocity (i.e., the maximum process demand number processible within a unit time) of the computer system shown in Fig. 18 is identified based upon a time interval during which a result of a process demand is announced to the terminal 10101. That is to say, the computer system has such behaviour that an average value of the above-described time interval is directly proportional to an arrival time interval of the process demands in case that almost no process demands stay in tho demand sort queue 11043, whereas this average value becomes saturated and then does not become smaller than a certain value when the arrival time intervals of the process demands are gradually shorter and shorter and thus many process demands stay therein (this condition will be referred to as "an overload condition", and the above-described time interval at this time will be called as a "saturation announcing time interval"). Based upon such behaviour, an inverse number of the saturation accnouncing time interval is identified as the maximum processing velocity of the computer system shown Fig. 18. The load managing table 11035 stores data to realize the above-described process and a value to be set into the read timing buffer 11025 of the terminal 10101.

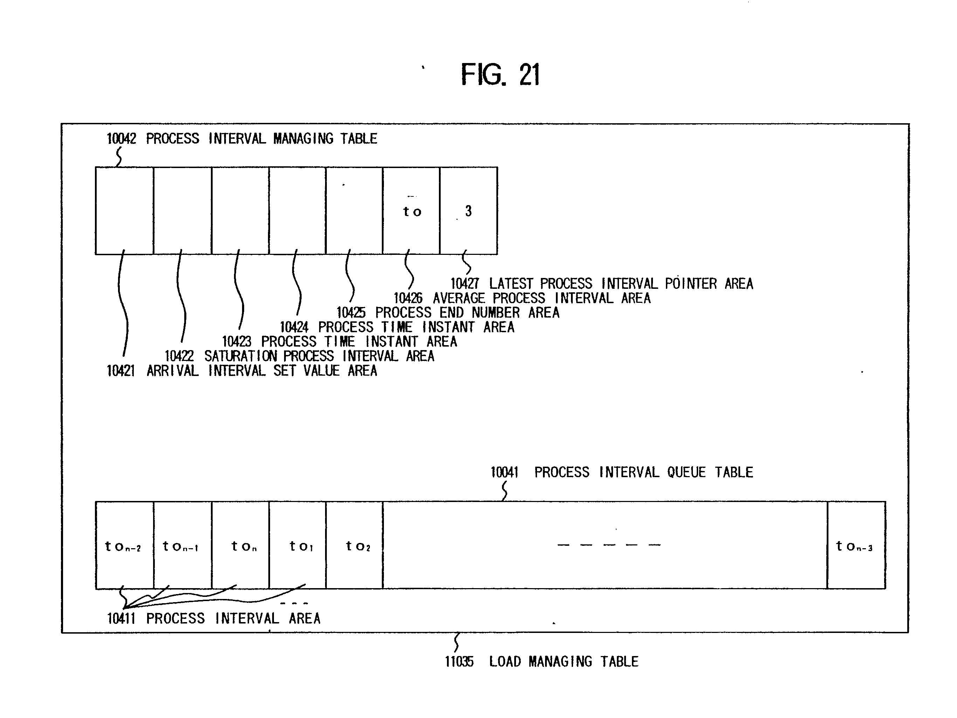

In Fig. 21, there is shown a detailed content of the load managing table 11035. This load managing table 11035 is constructed of a process interval queue table 1--41 and a process interval managing table 10042.

The process interval queue table 10041 contains "n" pieces of process interval areas 10411. Each of these interval areas 10411 stores each of "n" pieces of announcing time intervals of the process results to the terminal 10101 with respect to the past. It should be noted that assuming that a right end of the process interval queue 10041 is logically connected to a left end thereof, this process interval queue is circulately managed.

On the other hand, the process interval managing table 10042 includes an arrival interval set value area 10421; a saturation process interval area 10422; a process time instant area "a" 10423, another process time instant area "b" 10424; a process end number area 10425; an average process interval area 10426; and, a latest process interval pointer area 10427. The latest process interval pointer area 10427 stores therein a value of a pointer for instructing a position of the process interval area 10411 into which the latest announcing time interval has been stored. It should be noted that the pointer designates the process interval area 10411 of the process interval queue table 10041 in an order of 1, 2, ---, "n" from the leftmost. The average process interval area 10426 stores therein an average value obtained from "n" pieces of values which have been stored in the process interval queue table 10041. the process end number area 10425 stores therein an announced number of process results to the terminal 10101. Both the process time instant area 'a" 10423 and process time instant area "b" 10424 are work areas for obtaining an announcing time interval of a process result to the terminal 10101. Then, the saturation process interval area 10422 stores therein a saturation announcing time interval which is obtained by the below-mentioned method (i.e., an average value of the announcing time intervals for process demands when the arrival time interval of the process demands gradually becomes short, and thereof a lot of process demands stay in the demand sort queue 11043, so that the average value of the announcing time intervals of the process results become saturated and does not become small more than a certain value). The arrival interval set value area 10421 stores therein a value to be set into the read timing buffer 11025 of the terminal control apparatus 10102 (i.e., a time period to be read from the terminal 10101).

In accordance with this preferred embodiment, since the input velocity of the process demands into the computer system is adjusted, it can be prevented as the computer system is brought into the overload condition, a response time period from an input of a process demand into the computer system until a process result thereof is returned to this computer system becomes extremely long. To this end, the above-described saturation announcing time period is obtained by operating the computer system. the upper limit value of the input velocity is determined based upon the calculated saturation time interval, and thus the input velocity of the process demands does not exceed over this upper limit value.

The operation of the computer system according to this preferred embodiment will now be described.

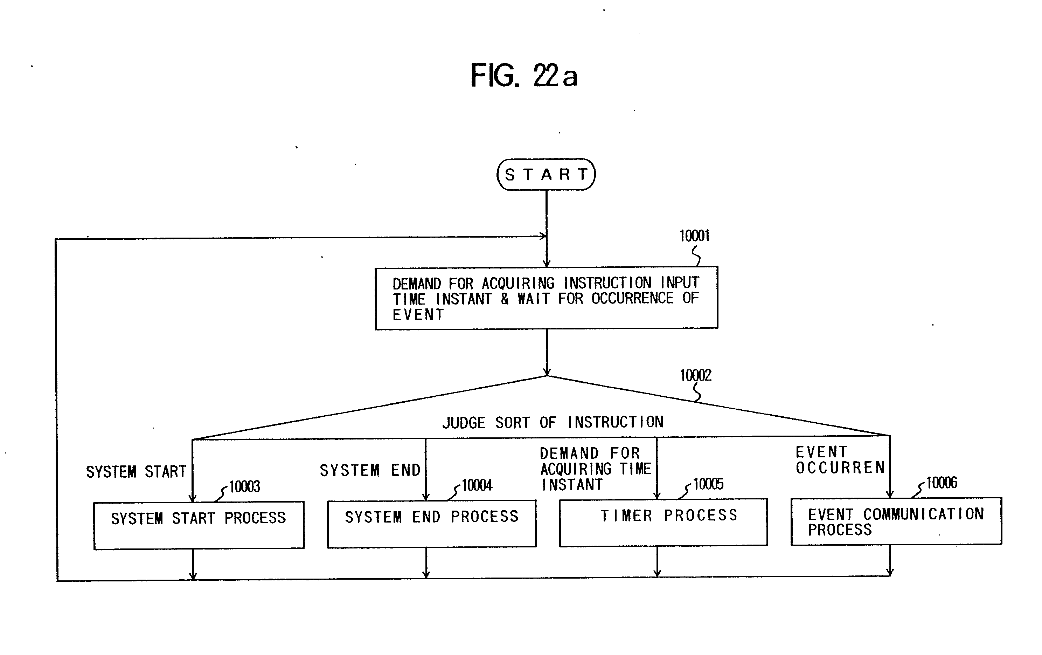

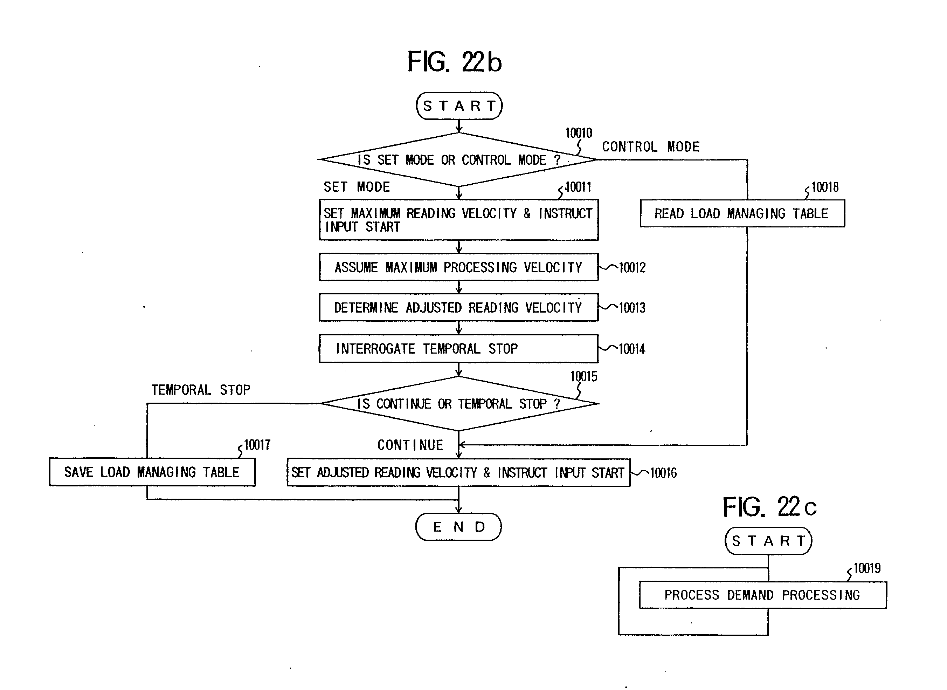

This operation is represented in a flowchart shown in Fig. 22. Fig. 22a represents an operation of the system control program 11031 employed in the computer 10103, Fig. 22b indicates an operation of the load control program 11034, and Fig. 22c denotes operations other than those of the system control program 11021 and of the system control program 11041 employed in the terminal control apparatus 10102. In this preferred embodiment, the operation thereof is started by turning on power supplies employed in the respective apparatuses of the computer system shown in Fig. 18.

When turning on the power supplies, the operation of the system program 11021 employed in the terminal control apparatus 10102 is commenced, and thus the I/O control program 11022, communication control program 11023 and read time period control program 11024 are started. Also, the operation of the computer 10104 is started so as to start the demand sort queue forming program 11042, process demand selecting program 11044, and data process program 11045.

Once the power supply is turned on, the operation of the system control program 11031 employed in the computer 10103 is furthermore commenced to wait for an instruction input supplied from the control terminal 10105 (a step 10001).

Subsequently, when an instruction to commence the system is inputted from the control terminal 10105 at a step 10002, the system control program 11031 executes a process of a system commencement. That is to say, the demand accept program 11032, result announcement program 11033, and load control program 11034 are started at a step 10003, and again an instruction waiting condition is established. It should be noted that the instruction to start the system contains two modes, i.e., a setting mode and a controlling mode, and the system control program 11031 starts the corresponding program in the instructed mode.

Then, when another instruction to complete the system is inputted from the control terminal 10105 at a step 10002, the system control program 11031 executes a system ending process. In other words, the system control program 11031 interrupts the operations of the demand accept program 11032, result announcement program 11033, and load control program 11034 at a step 10004, and then again waits for an input of a further instruction.

When the time acquiring demand is made from other programs employed in the computer 10103 at the step 10002, the system control program 11031 again waits for a further instruction after announcing a present time instant to the requested program at a step 10005.

When an event happens to occur in the computer 10103, a report that the expected event occurs is made to the program which waits for this sort of even at a step 10006, and the system control program again waits for a further input.

In this preferred embodiment, after the power supplies are turned on and the operations are started, both an assumption operation (as defined in steps 10011 to 10013) for assuming the maximum processing velocity of the computer system shown in Fig. 18, and a process demand processing operation (as defined in steps 10016 and 10019) for executing a process of a process demand by adjusting an input velocity of the process demand to the computer system based upon the assumed maximum processing velocity. It should be noted that in normal, the former assumption operation is separately executed with respect to an execution of the latter process demand processing operation. For instance, in general speaking, the assumption operation is carried out during the maintenance or test of the computer system shown in Fig. 18. Furthermore, if there is no change in the arrangement of the computer system shown in Fig. 18 a quantity of resource and the like, the assumption operation needs not be performed every time the operation of the computer system shown in Fig. 18 is commenced. To this end, in order to execute the assumption operation and process demand processing operation in separated time ranges, after the assumption operation, a selection is made to once stop the operation of the computer system shown in Fig. 18 (steps 10014 and 10015). Also, only the latter process demand processing operation may be selected by giving an instruction from the control terminal 10105 (a step 10010).

When being started by the system control program 11031 in the setting mode at a step 10010, the load control program 11034 sets the terminal control apparatus 10102 in such a manner that the reading velocity of the process demand becomes a maximum value thereof, and then instructs an input commencement to assume the maximum velocity of the computer system shown in Fig. 18 at a step 10011. That is to say, the load control program 11034 transmits to the terminal control apparatus a code and a message containing a set data value "0" in order to set the read timing buffer 11025. Thereafter, a demand is sent to the system control program 11031, and an input starting message for assuming the maximum processing velocity of the computer system shown in Fig. 18 is outputted to the control terminal 10105.

When a message containing a code for setting the read timing buffer 11025 is transmitted from the computer 10103, the communication program 11023 of the terminal control apparatus 10102 passes the set data (i.e., "0" in this embodiment) of the sent message to the read time period control program 11024. Then, the read time period control program 11024 sets the passed data to the read timing buffer 11025.

Once the input commencement message for assuming the maximum processing velocity of the computer system shown in Fig. 18 is outputted from the control terminal 10105, the process demand is inputted from the terminal 10101 at a permissible higher speed. As a result, the maximum velocity of the computer system shown in Fig. 18 is assumed at a step 10012.

When the process demand is inputted from the terminal 10101, the computer system represented in Fig. 18 performs the process operation of the process demand at a step 10019. In other words, when one of the process demand data is inputted into the terminal 10101, the inputted process demand data is stored into the input buffer, and thus a further input from the terminal 10101 is blocked. On the other hand, the I/O control program 11022 reads the process demand data stored in the input buffer employed in the terminal 10101 into the I/O buffer 11027 at a time period of a value set into the read timing buffer 11025. The terminal 10101 releases the blocking state of the input when the process demand data stored in the internal input buffer thereof is read out. With the above-described process operations, the input velocity of the process demand supplied from the terminal 10101 may be adjusted by varying the contents of the read timing buffer 11025. Now, since the value of the read timing buffer 11025 is equal to "0", when the I/O control program 11022 reads the value of the input buffer employed in the terminal 10101, this I/O control program 11022 again reads the process demand data stored in the input buffer employed in the terminal 10101 immediately. As a consequence, when the process demand data is inputted from the terminal 10101, this process demand data is immediately read in the terminal control apparatus 10102. Once the process demand data is read into the I/O buffer 11027, the communication control unit 11023 immediately transfers the read process demand data to the computer 10103.

The process demand data which has been sent from the terminal control apparatus 10102 is passed to the demand accept program 11032 of the computer 10103. The demand accept program 11032 writes the process demand data into the demand accept file 10107 in a data acceptance order. Also the demand accept program 11032 reports to the demand sort queue forming program 11042 of the computer 10104 that the process demand data has been newly written into the demand accept file 10107.

When receiving such a report that the process demand data has been newly written in the demand accept file 10107, the demand sort queue forming program 11042 of the computer 10104 reads out the computer 10104 reads out the process demand data newly written in the demand accept file 10107. Moreover, this demand sort queue forming program 11042 classifies the read data, depending upon the process contents of the process demands, and connects the classified data to the last queue to which the process demand data having the same process content within the demand sort queue table 11043 has been chained. The process demand selecting program 11044 periodrically searches the demand sort queue table 11043 so as to pick up one of these searched process demand data and whereby to pass the searched demand data to the data process program 11045. The data process program 11045 executes a process corresponding to the present process demand data by accessing the data stored in the process data file 10108, and sequentially writes the process results thereof into the process result file 10109. The data process program 11045 reports to the result announcing program 11033 of the computer 10103 that the process result data has been newly written into the process result file 10109 when the process result data has been newly written into the process result file 10109 after the writing operation of the process result to the process result file 10109 has been accomplished.

When receiving such an announcement that the process result data has been newly written into the process result file 10109, the result announcing program 11033 reads out the process result data which has been newly written into the process result file 10109, and then transmits the read process result data to the terminal control apparatus 10102. In other words, the result announcing program 11033 sends a message having a process result code and the process result data to the terminal control apparatus 10102, and also produces a process end event at a time instant where the process result data has been transmitted. Once the process end event occurs, the system control program 11031 of the computer 10103 reports that the process end event occurs to the load control program 11034. Upon receipt of an occurrence of the process end event, the load control program 11034 proceeds such a process to assume the maximum processing velocity of the computer system shown in Fig. 18 (will be discussed later).

When a message having a process result code is transmitted from the computer 10103, the communication control program 11023 employed in the terminal control apparatus 10102 enables the process result data of the transmitted message to be stored in the communication buffer 11026. When the process result data is stored in the communication buffer 11026, the I/O control program 11023 immediately outputs the process result data stored in the communication buffer 11026 to the terminal 10101 (a detailed process of the step 10019).

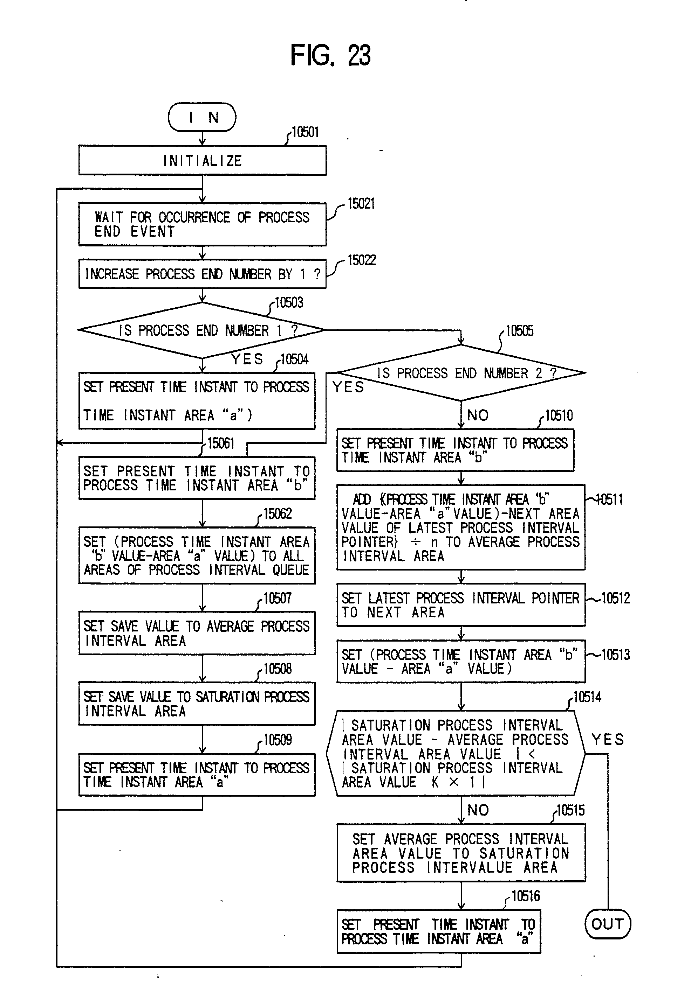

While repeating the processes defined from the input of the process demand by the terminal 10101 to the output of the process result thereto, as will be described in detail with reference to Fig. 23, the load control program 11034 assumes the maximum processing velocity of the computer system shown in Fig. 18 (a step 10012).

When the maximum processing velocity of the computer system shown in Fig. 18 is assumed, the load control program 11034 determines an upper limit value of the input velocity for the process demand supplied form the terminal 10101 based upon the assumed maximum processing velocity, in order not to bring the computer system shown in Fig. 18 into the overload condition, and therefore obtains a value to be set into the read timing buffer 11025 employed in the terminal control apparatus 10101 (a step 10013). Concretely, an inverse number of an allowable maximum response time "W" (a time period since a process demand is inputted from the terminal 10101 until a process result of the input process demand is outputted to the terminal 10101 is subtracted from an assumed maximum processing velocity "VO" (although a detailed explanation thereof will be made later, it corresponds to an inverse number of a value set into the saturation process interval area 10422 of the load managing table 11035 under the control of the load control program 11034);

$$VI = VO - 1/W.$$

This value is determined as the upper limit value for the input velocity of the process demand supplied from the terminal 10101. Thereafter, an inverse number of VI is used as a value to be set into the read timing buffer 11025, and this value (i.e., 1/VI) is set into the arrival interval set value area 10422 of the load managing table 11035. In general, in accordance with the queue theory, assuming now that an allowable waiting time is equal to "W" when a processing velocity of a process demand is "Vo", it is known that an arrival velocity of the process demand must be suppressed blow "Vi". The above-described determination of the upper limit value VI for the input velocity (i.e., arrival velocity thereof to the computer system) of the process demand supplied from the terminal 10101 is established by this theory.

After the above-described process, the load control program 11034 outputs to the control terminal 10105 a message whether or not the computer system shown in Fig. 18 is temporarily interrupted by requesting the system control program 11031, and then waits for an input of an instruction from the control terminal 10105 (a step 10014). Once a temporal interruption instruction is inputted at a step 10015, the load control program 11034 stores the load managing table 11035 into the save data file 10106 to whereby accomplish the process at a step 10017.

When an instruction to continue a process is inputted at a step 10015, the load control program 11034 sets the terminal control apparatus 10102 under such a condition that the input velocity of the process demand inputted from the terminal 10101 does not exceed over the upper limit value of the input velocity of the process demand. Subsequently, an input starting instruction message is outputted to the control terminal 10105 at a step 10016. That is to say, the load control program 11034 transmits a message to the terminal control apparatus 10102, which is constructed of a code to be set to the read timing buffer 11025, and the value of the arrival interval set value area 10422 employed in the load managing table 11035, as set data. Thereafter, requesting the system control program 11031, the load control program 11034 outputs the normal input starting message to the control terminal 10105. It should be noted that as previously described, the set data of the message which has been sent to the terminal control terminal apparatus 10102 is set into the read timing buffer 11025.

Thereafter, the process demand is inputted from the terminal 10101 so as to perform the normal process demand processing (a step 10019). It should be understood that while operating the normal process demand processing, the I/O control program 11022 employed in the terminal control apparatus 10102 reads the process demand inputted from the terminal 10101 at a time period of the value which has been determined at the previous process step 10013 and also is being set into the read timing buffer 1025. As a result, since the input velocity of the process demand supplied from the terminal 10101 does not exceed over the maximum processing velocity of the computer system shown in Fig. -18, it can be prevented that the computer system shown in Fig. 18 is not brought into the overload condition.

On the other hand, when being started by the control mode, the load managing program 11034 reads the data of the load managing table 11035 which has been saved into the save data file 10106 and then sets this data into the lcad managing table 11035 at a step 10018. Thereafter, the operation defined at the above-described step 10016 is performed.

Next, the assuming operation of the maximum processing velocity (at the step 10012) for the load control program 11034 shown in Fig. 22 will now be described more in detail.

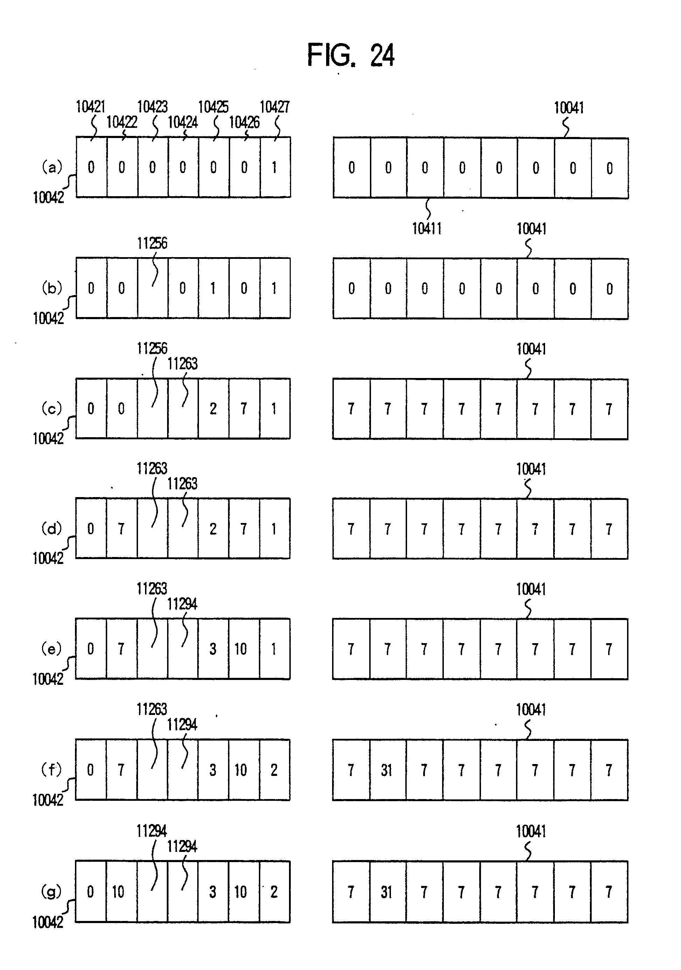

In Fig. 23, there is shown the assuming operation of the maximum processing velocity for the load control program 11034. Furthermore, Fig. 24 represents an example how to set a value of each area in the load managing table 11035 by the assuming operation of the maximum processing velocity for the load control program 11034. It should be noted that a total number of a process interval area 10411 is equal to 8 in the example of Fig. 24.

The load control program 11034 first initializes the load managing table 11035 at a step 10501. In other words, a latest process interval pointer area 10427 is set to "1", whereas an arrival interval set value area 10421, a saturation process interval area 10422, a process time instant area "a" 10423, a process time instant area "b" 10424, a process end number area 10425, an average process interval area 10426 and an overall process interval area 10411 are set to "0" (see Fig. 24a). Thereafter, the load control program 11034 waits for an occurrence of a process end event (i.e., a process end event produced after the process result is announced by the result announcing program 11033).

When the process end event occurs, the value of the process end number area 10425 is increased by "1" at a step 15022.

Then, if this event corresponds to a first processed event, namely the value of the process end number area 10425 is equal to "1" at a step 10503, a demand is made to the system control program 11031 so as to acquire a present time instant (an acquisition of a present time instant, and an acquired time instant will be simply referred to as a "present time instant"), the acquired present time instant is set to a process time instant area "a" 10423, and again this program waits for an process end event at a step 10504 (Fig. 24b).

If this event corresponds to a send process end event, namely the value of the process end number area 10425 becomes "2" at a step 10505, the present time instant is set to the process time instant area "b" 10424 at a step 15061, and then a process interval value calculated by the following equation is set to all of the process interval areas 10411 employed in the process interval queue table 10041 at a step 15062:

process interval value $\equiv$ (value of process time instant area "b" 10424 - value of process instant area "a" 10423)    (5).

Further, this process interval value is set to the average process interval area 10426 at a step 10507 (Fig. 24c). Also, the process interval value is set into the saturation process interval area 10422 at a step 10508, and thereafter the value of the process time instant area "b" 10424 is set to the process time instant area "a" 10423, whereby a process end event is again waited for at a step 10509 (Fig. 24d).

If it is more than 3 times of the process end event, namely the value of the process end area 10425 is equal to neither "1" nor "0" at the steps 10503 and 10505, a present time instant is first set to the process time instant area "b" 10424 and the following process is executed (a step 10510).

At the beginning, an increased value of an average process interval which will be calculated by the following equation is added to the average process interval area 10426 at a step 10511 (Fig. 24e).

increased value of average process interval $\equiv$ {(value of process time instant area "b" 10424 -value of process time instant area "a" 10423) -value of area subsequent to area indicated by latest process interval pointer area 10427} $\div$ n    (6)

It should be noted that an area subsequent to the area designated by the value of the latest process interval pointer area 10427 implies a head process interval area 10411 (the leftmost area) in the process interval queue table 10041 when the value of this pointer area 10427 indicates a last process interval area 10411 (the rightmost area) in the process interval queue table 10041, and also implies a process interval area 10411 next to (right hand) the process interval area 10411 designated by the value of this pointer area 10427 when the value of this pointer area 10427 does not indicate it.

Subsequently, the value of the latest process interval pointer area 10427 is set in such a way that the area being designated by this value is substituted by the subsequent area at a step 10512. Thereafter, the process interval value calculated by the above-described formula (5) is set to the process interval area 10411 which is designated by the latest process interval pointer area 10427 at a step 10513 (Fig. 24f). With the above-described process, "n" pieces of the process time intervals containing the latest process time interval has been set into the process interval queue table 10041.

Then, if an absolute value of a difference between the value of the saturation process interval area 10422 and the value of the average process interval area 10426 is greater than a value (the value of the saturation process interval area 10422 X K1) calculated with employment of a value "K1" obtained by the below-mentioned process at a step 105(4), then the value of the average process interval area 10426 is set to the saturation interval area 10422 at a step 10515, and the value of the process time instant area 10424 is set to the process time instant area "a" 10423 so that the process end event is again waited for at a step 10516 (Fig. 24g). It should be noted that the above-described value "K1" is determined in such a manner that other programs of Fig. 19 correspond to variations in the time period required for executing a process operation of a single process command, and is, normally speaking, equal to on the order of several percents (approximately 0.05 with respect to the value of "K1"). Alternatively, in accordance with a simulation, a testing method with employment of the computer system per se shown in Fig. 18, and the like, the process demands more than several thousands are processed under the overload conditions, every time the values of the saturation process interval area 10422 are recorded when a single process demand has been processed, and a value defined as (a difference between recorded maximum value and minimum value)/(an average value obtained from the recorded values X 2) may be determined as "K1".

While repeating the above-described processes, when the absolute value of the difference between the value of the saturation process interval area 10422 and the value of the average process interval area 10426 is within the value defined as (the value of the saturation process interval area 10422 X K1) at a step 10514, the process is accomplished.

In accordance with the above-described series of the process, the process time interval (i.e., process time interval during which the computer system is operated under its maximum process capability) when the computer system is brought into the overload condition and thus the process time interval (time period from a certain process end event to a next process end event) becomes the minimum value, is obtained in the saturation process interval area 10422. That is to say, an inverse number of this time interval represents the maximum processing velocity of the computer system shown in Fig. 18. It should be noted that the computer system is brought into the overload condition when the process demand is inputted from the terminal 10101 at a time interval shorter than the value calculated in the saturation process interval area 10422. As a consequence, when a time interval longer than this time interval is employed as the reading time period of the process demand, it is possible not to bring the computer system into the overload condition.

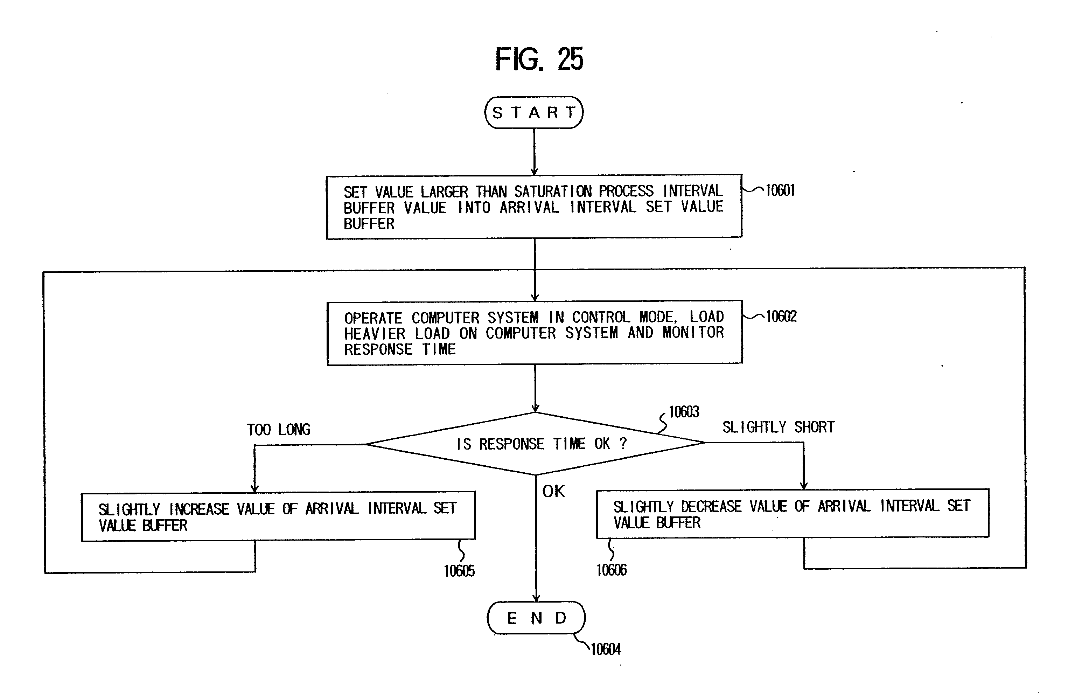

It should also be noted that the reading time period of the process demand from the terminal 10101 defined at the step 10013 of Fig. 22 in order not to bring the computer system shown in Fig. 18 into the overload condition may be determined based upon the following method shown in Fig. 25.

That is to say, after the value has been obtained in the saturation process interval area 10422 at the step 10012, the process defined at the process step 10013 is not executed, and a value properly greater than the value obtained instead of this process is set to the arrival interval set value area 10421, and thereafter the process is once stopped at a step 10601. Next, the load control unit 11034 is started in the control mode, the process demand is inputted from the terminal 10101 at a time interval shorter than another time interval which has been just now set into the arrival interval set value area 10421, and also a response time measured from the demand input until the returning of the process demand is monitored at a step 10602. The monitored response time is a response time during the maximum load condition. If the monitored response time is longer than a desired response time (a step 10603), the value of the arrival interval set value area 10421 is selected to be properly large for a purpose to lower the input velocity of the demand so as to shorter this monitored response time, and then the above-described operation is repeated at a step 10605. Conversely, if the monitored response time is shorter than the desired response time (a step 10603), since there is a margin to still accept the process demands, the value of the arrival interval set value buffer 10046. The above-described processes are repeated, and the process is completed when the monitored response time is equal to the desired response time. It should be understood that the above-described operation may be automatically performed subsequent to the step 10012 by the load control program 11034.

Also, although the computer system shown in Fig. 18 is arranged by two sets of the computers 10103 and one computer 10101, both the process data file 10108 and process result file 10109 may be combined with the computer 10103, there are employed the demand sort queue forming program 11042, demand sort queue 11043, process demand selecting program 11044 and data process program 11045 within the computer 10103 and the computer 10104 may be omitted alternately. Furthermore, another computer coupled to the demand accept file 10107 and including the process result file 10109, process data file 10108, and control terminal 10105 may be newly employed, this newly employed computer may be combined with the computer 10103 via a new communication line, and the same programs as in the computer 10104 may be stored in this new computer. It should be noted that when the process demand is inputted, the computer 10103 may select either the computer 10104 or the newly connected computer, depending upon the sort of the process demand, to thereby report the acceptance of the process demand and perform the process. Three sets of such a computer may be employed so as to construct the desired computer system. Also, in the respective computer systems so far explained, a backup computer may be employed to each of the computers.

In accordance with the above-described preferred embodiment, there are particular advantages that the process demands are not inputted into the computer system at the velocity higher than a predetermined upper limit value, and the entire system can be continuously operated without such a difficulty that this system is brought into the overload condition.

A computer system according to another preferred embodiment of the present invention will now be described. As previously stated in the previous preferred embodiment, the overload condition of the computer system shown in Fig. 18 can be prevented by suppressing the input velocity of the process demand (i.e., arrival velocity to the computer system) lower than the maximum processing velocity VO (i.e., the inverse number of the saturation announcing time interval) of the computer system shown in Fig. 18. In accordance with this method, since the process demand numbers staying within the computer system shown in Fig. 18 can be suppressed to a small number, the process waiting time is relatively short and the response time is stable. to the contrary, an amount of accepting the process demands (namely, the reading numbers of the process demands per a unit time) may be suppressed to be low. Therefore, even when there is a slight variation in the response time (the response time may become long, or short depending upon the input time instants of the process demands), the following preferred embodiment can have the large amount of accepting the process demands as follows.

In the above-described preferred embodiment, only one upper limit value VI of the input velocity for the process demand was set (this value was slightly smaller than the maximum processing velocity of this computer system). To the contrary, in accordance with this preferred embodiment, two sets of upper limit values (adjust value, limit value) for the input velocity of the process demand are present. One upper limit value is selected as "$VI_2$" to be slightly smaller than the maximum processing velocity "VO" of the computer system, whereas the other limit value is selected as "$VI_1$" to be slightly larger than the maximum processing velocity "VO". The process demands are inputted by employing "$VI_1$" as the upper limit value at a certain time, and thus, when it is monitored that there is a trend to increase the amount of the process demands stayed within the computer system, the present limit value "$VI_1$" is substituted by another limit value "$VI_2$". As a result, when such a trend that the number of the stayed process demands is decreased is monitored, the present limit value "$VI_2$" is substituted by another limit value "$VI_1$". As previously described, since the upper limit value for this computer system is alternately changed by "$VI_1$" and "$VI_2$", the total amount of the acceptable process demands may be made larger than that of the previous preferred embodiment. The above-described operations are the summary of this preferred embodiment.

A hardware arrangement of this preferred embodiment is the same as that of the computer system shown in Fig. 18. A major portion of this preferred embodiment is the same as that of the previous preferred embodiment except for a portion of the load managing table 11035, a portion of the load control program 11034, and a portion of the demand accept program 11032. Accordingly, only operations of this preferred embodiment different from those of the previous preferred embodiment will now be explained.

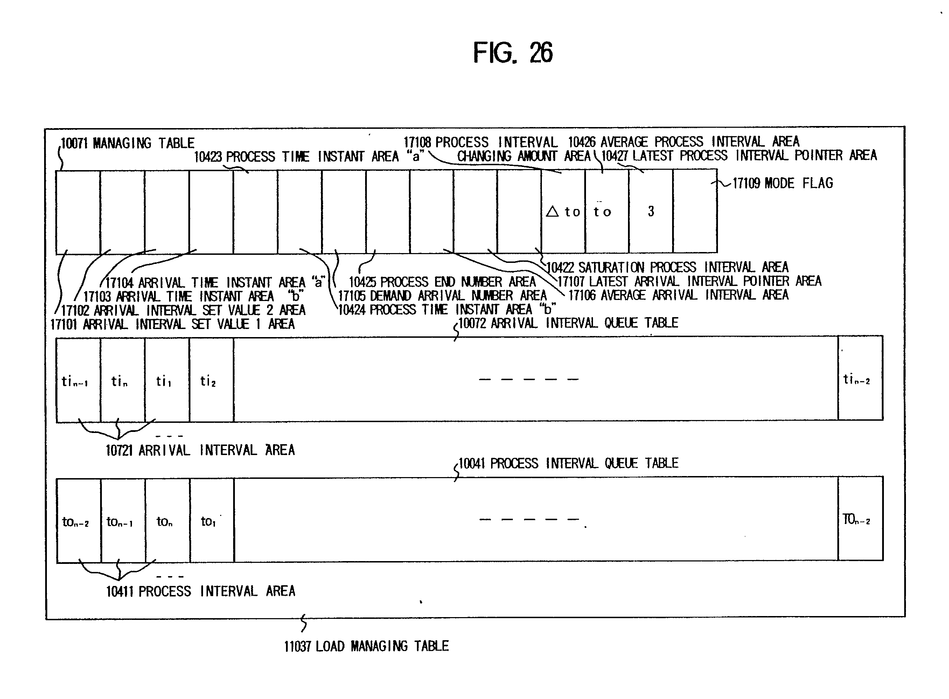

In Fig. 26, there is shown a detailed content of a load managing table 11037 according to this preferred embodiment, instead of the load managing table 11035 according to the above-described preferred embodiment.

The load managing table 11037 is constructed of a managing table 110071, an arrival interval queue table 10072, and a process interval queue table 10041, and to store information for managing both an arrival interval of a process demand and also an end interval of a process.

The information for managing an end interval of a process is constructed of the same portion as the load managing table 11035 of the above-described preferred embodiment, and also a process interval changing amount area 17108. The same portions are denoted by the same reference numerals employed in the above-described preferred embodiment. That is to say, a process interval queue table 10041; a process interval area 10411; and a saturation process interval area 10422 of a managing table 10071, and also a process time instant area "a" 10423, a process time instant area "b" 10424, a process end number area 10425, an average process interval area 10426, and a latest process interval pointer area 10427 thereof are completely identical to those areas employed in the process interval managing table 10042 according to the above-explained preferred embodiment, and therefore are used for the same purposes. The process interval changing amount area 17108 stores therein a changing amount representing how the value of the average process interval area 10426 has changed at a time instant where a process result of a certain process demand has been announced to a user terminal 10101 and at a time instant where another process demand of a next process amount has been announced thereto.

The load managing table 11037 in question further contains a portion for managing a time interval of a process demand arrival. The arrival interval queue table 10072 owns "n" pieces of arrival interval areas 10721. Each of these areas 10721 stores therein "n" pieces of arrival time intervals (i.e., time intervals during which the process demands actually arrive at the computer system) very close to the past. It should be noted that assuming now that the right end of the arrival interval queue table 10072 is logically chained to the left end thereof, this arrival interval queue table 10072 is circulately managed. The latest arrival interval pointer area 17107 stores the value of the pointer for designating a position of the arrival interval area 10721, into which the latest arrival time interval has been stored.

Then, the pointer indicates the arrival interval area 10721 of the arrival interval queue table 10072 as "1", "2", "3" ---, "n" in this order from the leftmost area. In the average arrival interval area 17106, there has been stored an average value of the values previously stored in the arrival interval queue table 10072. The demand arrival number area 17105 stores therein an arrival number of the process demands inputted from the user terminal 10101. Both the arrival time instant areas "a" 17103 and "b" 17104 are such work areas to obtain the arrival time intervals of the process demands. The arrival interval set value 2 area 17102 stores therein a value to be set into the read timing buffer 11025 of the terminal control apparatus 10102. It should be noted that the value stored in the arrival interval set value 1 area 17101 is selected to be smaller than the value of the arrival interval set value 2 area 17102 (will be discussed later). A mode flag 17109 corresponds to a flag representing that the load control program 11036 has been moved to the monitoring mode of the process interval. The mode flag of "1" indicates that the load control program 11036 becomes a process interval monitoring mode, whereas the mode flag of "0" represents that this program does not become this monitoring mode (a detailed flag operation will be described later).

In accordance with this preferred embodiment, even when the process demand is inputted at the velocity temporarily exceeding. over the maximum processing velocity of the computer system (the saturation processing, i.e., a velocity corresponding to the saturation processing interval), if another input velocity of the subsequent process demand is suppressed to a certain processing velocity lower than the maximum processing velocity to a certain extent, a total number of process demands which have not yet processed and stayed within the computer system shown in Fig. 1 can be reduced so that it can be prevented that the computer system represented in Fig. 18 is not brought into the overload condition. In other words, this preferred embodiment is realized based upon the above-explained idea. According to this preferred embodiment, the process demand can be inputted at the velocity exceeding over the maximum processing velocity of the computer system during a certain time period, and therefore a total amount of accepting the process demands can be improved. Such a control is executed under the control of the load control program 11036 according to this preferred embodiment, instead of the load control program 11034 as described in the above-mentioned preferred embodiment. A description will now be made of this load control program 11036.

It should be noted that the demand acceptance program 11032a (not shown) in this preferred embodiment, instead of the demand acceptance program 11032 in the above-described preferred embodiment, performs such an operation for producing a demand arrival event after after the process demand data has been written into the process accept file 10107 in addition to the abovedescribed operation by the demand acceptance program 11032.

The operations of the load control program 11036 according to this preferred embodiment are the same as those of the load control program 11034 according to the above-described preferred embodiment except for the contents of the operations as defined at the steps 10013 and 10016. Accordingly, these different operation steps are explained.

First, the step 10013 of the load control program 11036 according to this preferred embodiment (corresponding to the step 10012 of the load control program 11034 in accordance with the above-mentioned preferred embodiment) will now be described. When the maximum processing velocity "VO" of the computer system shown in Fig. 18 is assumed, the load control program 11036 determines an upper limit value of the input velocity of the process demand ("$VI_2$" similar to the upper limit value "VI" according to the first preferred embodiment) which is similarly supplied from the user terminal 10101 as in the previously explained preferred embodiment. Subsequently, an inverse number of the determined upper limit value ($1/VI_2$) is set to the arrival interval set value 2 area 17102. Furthermore, a value which will be calculated by the following equation is set to the arrival interval set value 1 area 17101: value of area 17101 = (value of saturation process interval area 10422 - value of arrival interval set value 2 area 17102) + value of saturation process interval area 10422. It should be noted that the value of the area 10422 is equal to $1/VO$, the value of the area 17102 is equal to $1/VI_2$, and the value of the area 17101 is substantially equal to $1/VI_1$. As a consequently, the value of the arrival interval set value 1 area 17101 (precisely speaking, an inverse number thereof) becomes such a value for allowing an excessive input velocity of the process demand as compared with the maximum processing velocity of the computer system shown in Fig. 18 by an amount substantially equal to a limit amount ($VO - VI_2$) for the input velocity of the process demand derived from the maximum processing velocity of the computer system represented in Fig. 18. It should be noted that when the response velocity is considerably deteriorated, the above-described limit amount may be reduced such as 1/2 and 1/3.

Furthermore, a description will now be made of a step operation 10016 of the load control program 11036 (corresponding to the step 10016 for the load control program 11034 according to the above-described preferred embodiment) in accordance with this preferred embodiment.

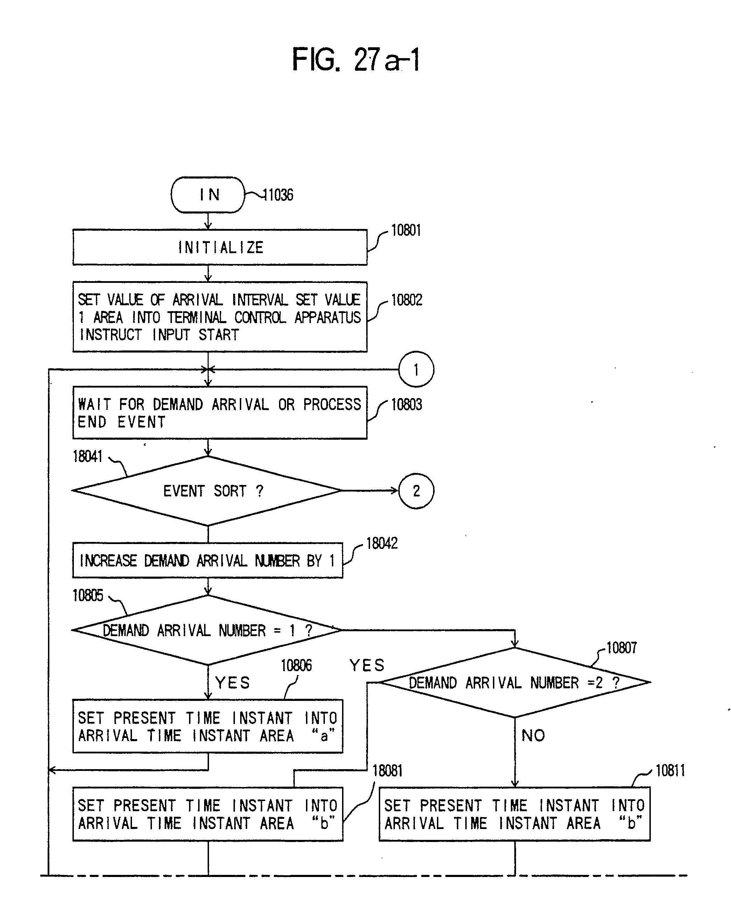

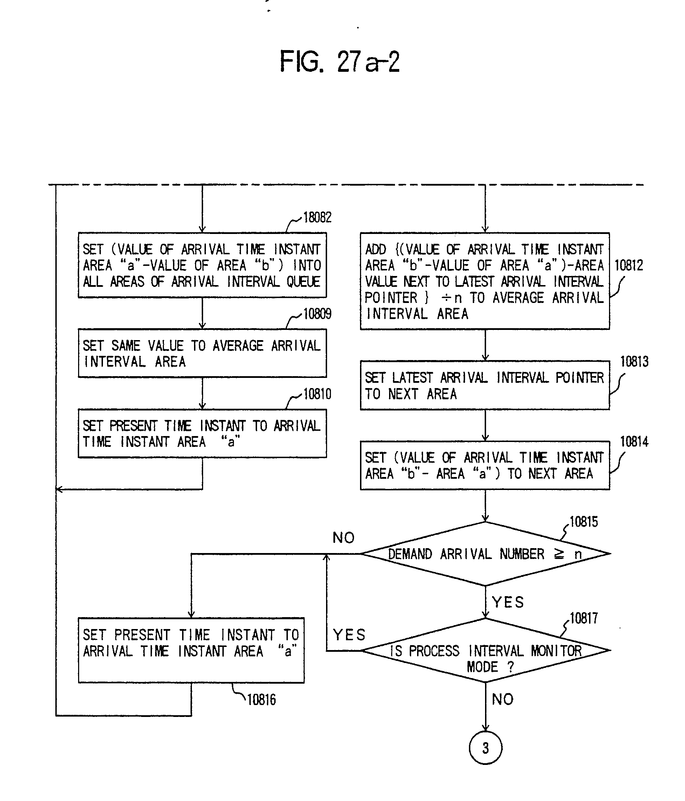

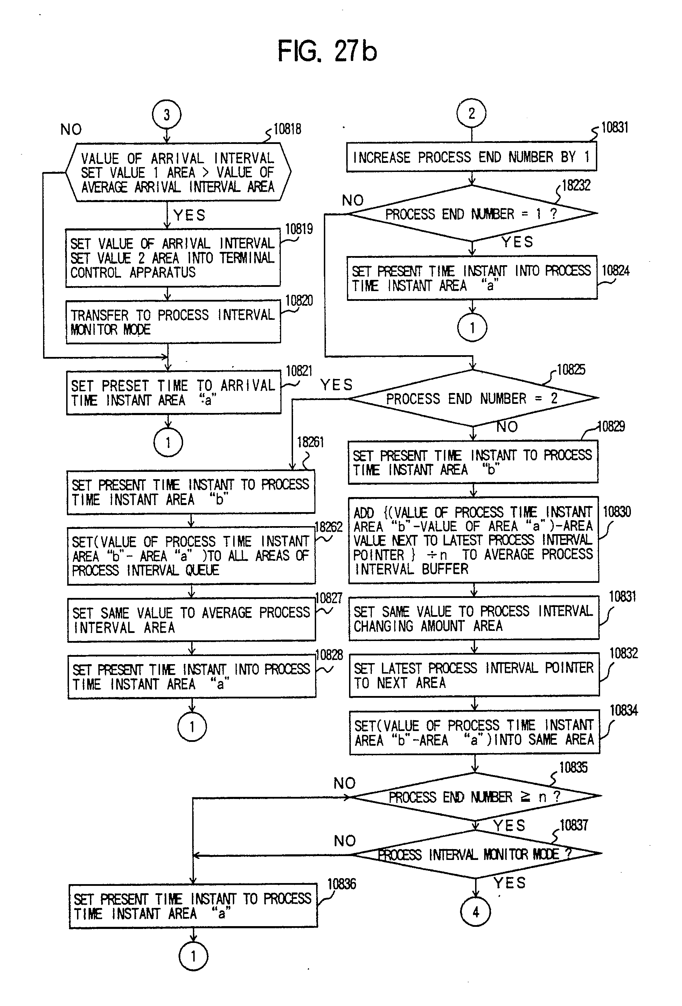

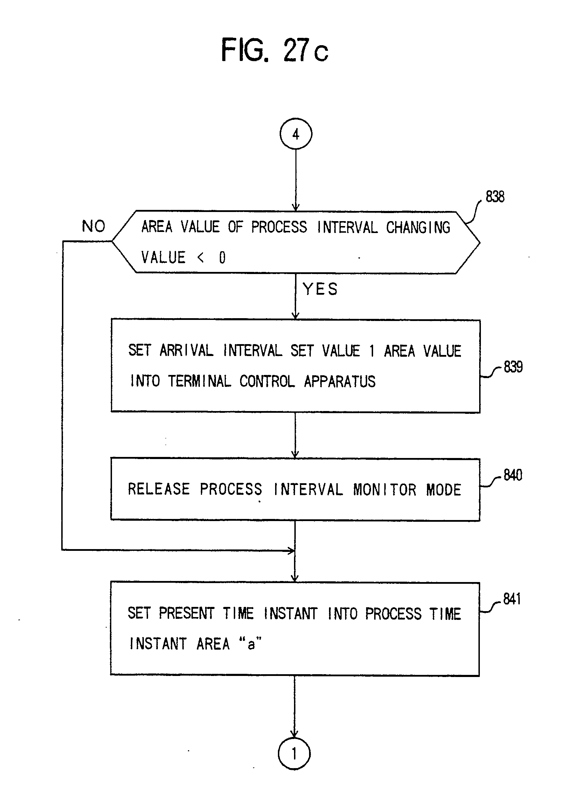

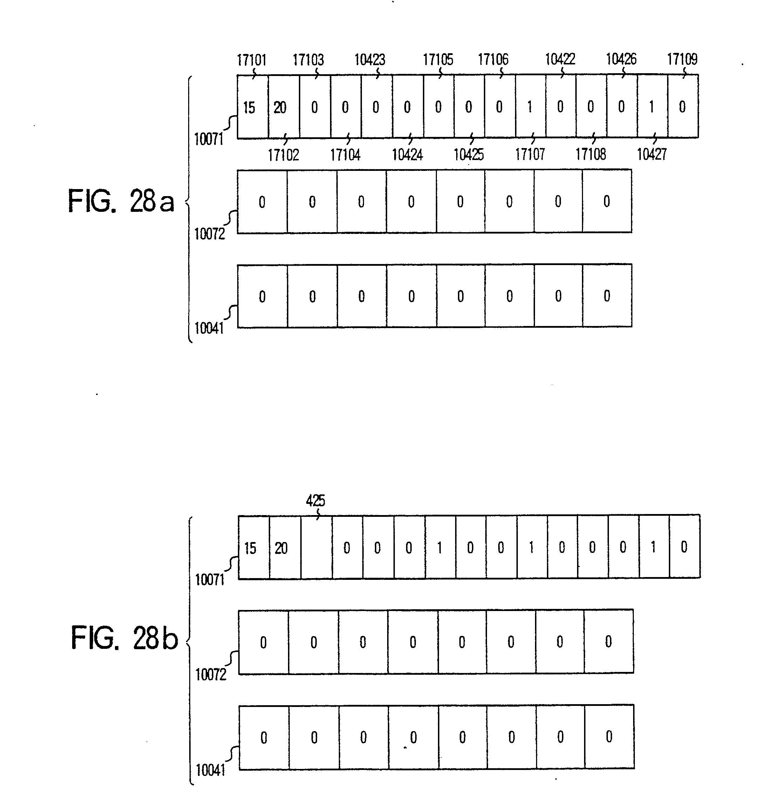

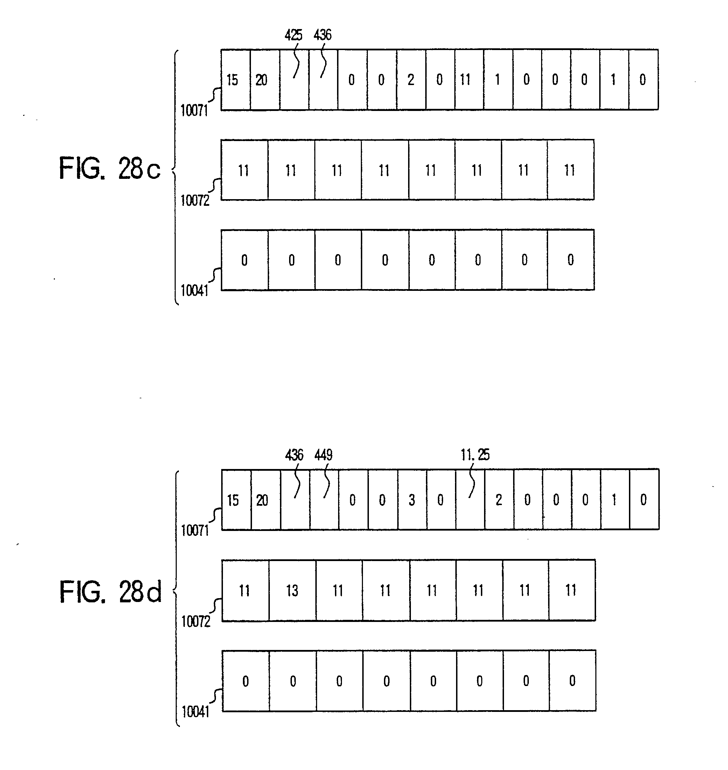

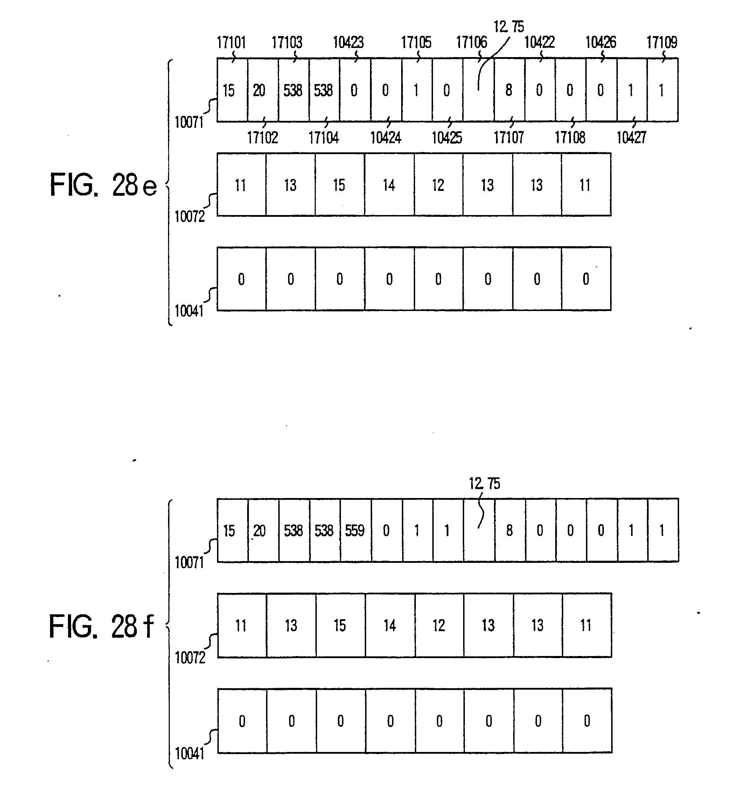

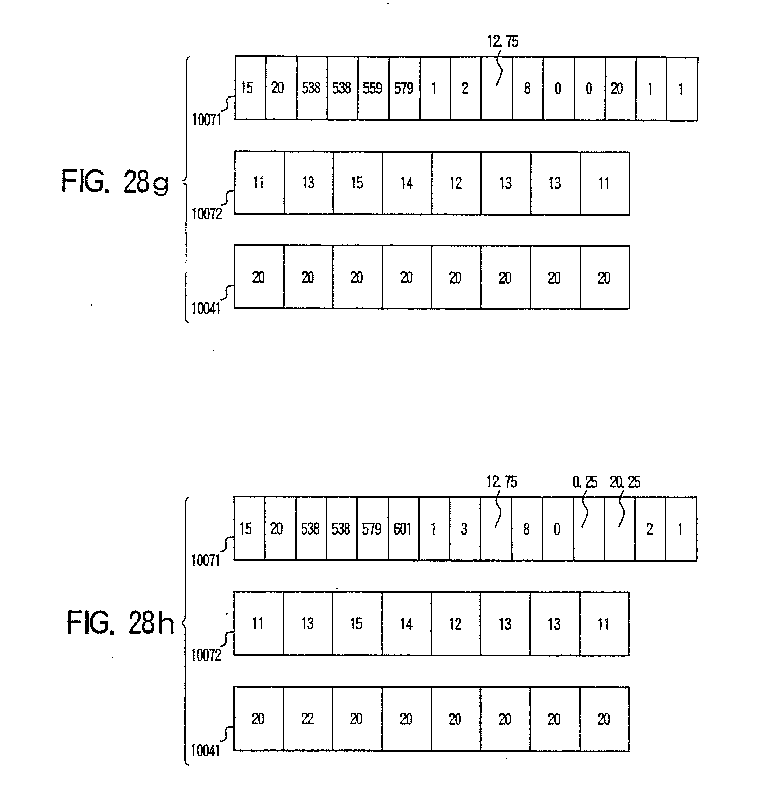

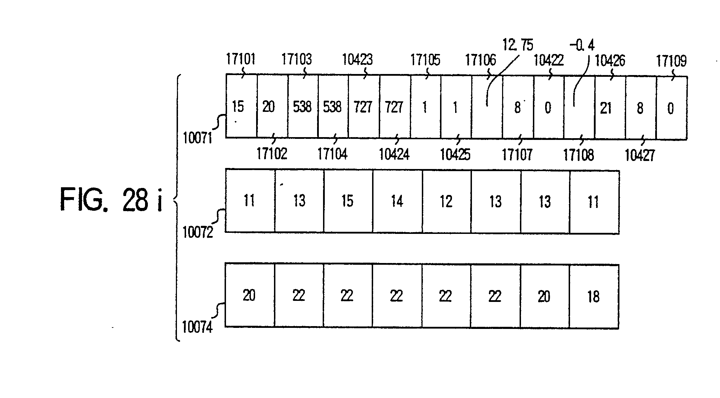

In Fig. 27, there is shown an operation of the step 10016 for the load control program 11036 according to this preferred embodiment. In addition, Fig. 28 represents such an example how to set a value of a load managing table 11037 in accordance with the operation of the step 10016 of the load control program 11036.

First, the load control program 11036 initializes the load managing table 11037 at a step 10801. That is say, both the latest arrival interval pointer area 17101 and latest process interval pointer area 10427 are set to "1", whereas the arrival time instant area "a" 17103, arrival time instant area "b" 17104, process time instant area "a" 10423, process time instant area "b" 10424, demand arrival number area 17105, process end number area 10425, average arrival interval area 17106, saturation process interval area 10422, process interval changing amount area 17108, average process interval area 10426, all arrival interval area 10721 and all process set value area 10411 are set to "0". As previously described, the values of both the arrival interval set value 1 area 17101 and arrival interval set value 2 area 17102 have been previously set based upon the value ($1/VO$) of the previous saturation process interval 10422, and then a value of $1/VO$ is selected to be "17.5" (not shown in detail), the area value 17101 is selected to be "15", the area value 17102 is selected to be "20" in accordance with this preferred embodiment. Furthermore, a mode flag 17109 is set to "0" (Fig. 28a).

Next, an instruction is made such that the value of the arrival interval set value 1 area 17101 is set into the read timing buffer 11025 of the terminal control apparatus 10102, and thereafter an input starting instruction message is outputted to the control terminal 10105 at a step 10802. That is to say, the load control program 11036 transmits to the terminal control apparatus 10102, a message made of a code for setting the read timing buffer 11025 and of the value of the arrival interval set value 1 area 17101 of the load managing table 11035 as set data. Subsequently, a demand is made to a system control program 11031 so as to output the normal input starting message to the control terminal 10105. As previously stated, the set data on the message sent to the terminal control apparatus 10102 is set to the read timing buffer 11025.

Thereafter, the process demand is inputted from the user terminal 10101, whereby the normal process demand processing operation is carried out at a step 10019.

Subsequently, the load control program 11036 waits for either a demand arrival event which is produced after the process demand has been accepted by a demand acceptance program 11032a (not shown), or a process end event which is produced after the process result has been announced by a result announcing program 11033 at a step 10803.

At this stage, when the demand arrival event occurs at a step 18041, the value of the demand arrival number area 17105 is increased by "1" at a step 18042.

Next, if the occurring demand arrival event corresponds to a first demand arrival event, namely the value of the demand arrival number area 17105 is equal to "1" at a step 10805, a present time instant is set into the arrival time instant area "a" 17103 and the load control program 11036 again waits for another event at a step 10806 (Fig. 28b).

If the occurring demand arrival event corresponds to a second demand arrival event, namely the value of the demand arrival number area 17105 is equal to "2" at a step 10807, then a present time instant is set to the arrival time instant area "b" 17104 (a step 18081), and also an arrival interval value which will be calculated by the following equation is set to the all arrival interval area 10721 of the arrival interval queue table 10072 at a step 18082;

arrival interval value ≡ (value of arrival time instant area "a" 17103)     (7).

Further, this arrival interval value is set into the average arrival interval area 17106 at a step 10809 (Fig. 28c). Thereafter, the value of the arrival time instant area "b" 17104 is set to the arrival time instant area "a" 7103, and the load control program again waits for a further event at a step 10810.

If the occurring demand arrival event corresponds to a third demand arrival event, or the succeeding event, namely the value of the demand arrival number area 17105 is not equal to "1" or "2" at steps 10805 and 10807, a present time instant is first set into the arrival time instant area "b" 17104 and the following operation is carried out at a step 10811.

At the beginning, an increased value of an average arrival interval which will be calculated by the following equation is added to the average arrival interval area 17106 at a step 10812:

increased value of average mm[(value of arrival time instant area "b" 17104 - value of arrival time instant area "a" 17103) - (value of area subsequent to area indicated by value) of latest arrival interval pointer area 17107] x 1/n     (8).

The area subsequent to the area indicated by the value of the latest arrival interval pointer area 17107 implies a head arrival interval area 10721 (the leftmost area) of the arrival interval queue table 10072 when the value of this pointer area 17107 indicates a last arrival interval area 10721 (the rightmost area) of the arrival interval queue table 10072, or implies an arrival interval area 10721 subsequent to the arrival interval area 10721 in the right direction, which is indicated by the value of this pointer area 17107 when this pointer area 17107 does not indicates the last arrival interval area 10721.

It should be noted that in accordance with this process operation, an average value of "n" pieces of arrival time intervals including the latest arrival time interval is calculated.

Thereafter, after the value of the latest arrival interval pointer area 17107 is set in such a manner that this value indicates an area next to the area being indicated thereby at a step 10813, an arrival interval value calculated by the equation (7) is set into the arrival interval area 10721 indicated by the value of the latest arrival interval pointer area 17107 at a step 10814 (Fig. 28d). With this process operation, "n" pieces of the arrival time intervals containing the latest arrival time interval has been set into the arrival interval queue table 10072.

Subsequently, if the value of the demand arrival number area 17105 does not exceed over the number "n" at a step 10815, the value of the arrival time instant area "b" 17104 is set into the arrival time instant area "a" 17103, whereby the process is brought into the waiting condition for a further event at a step 10816.

Even when the value of the demand arrival number area 17105 exceeds over the number "n" at a step 10815, if the process is set in the process interval monitor mode, namely the mode flag 17109 is set as "1" at a step 10817, similarly, the value of the arrival time instant area "b" 17104 is set to the arrival time instant area "a" 17103 and then the event waiting state is again established at a step 10816.

When the value of the demand arrival number area 17105 exceeds over the number "n" at a step 10815 and the process is not brought into the process interval monitor mode, namely the mode flag 17109 is set as "0" at a step 10817, then the following process operation is carried out.

First, if the value of the average arrival interval area 17106 (i.e., an average value of practical arrival intervals) is smaller than a value ($1/VI_1$) of the arrival interval set value "1" area 17101 at a step 10818, since this represents that the actual arrival velocity of the demand has exceeded over the maximum processing velocity "VO", the input velocity is suppressed by instructing such that another value ($1/VI_2$ greater than the above-described value $1/VI_1$) of the arrival interval set value "2" area 17102 is set to the read timing buffer 11025 of the terminal control apparatus 10102 at a step 10819. That is to say, the load control program 11036 transmits to the terminal control apparatus 10102, a message consisting of the code to be set to the read timing buffer, and the value of the arrival interval set value "2" area 17102 of the load managing table 11037 as set data. As previously described, the set data on the message which has been set to the terminal control apparatus 10102 is set to the read timing buffer 11025. Subsequently, after the condition is moved to the process interval monitor mode, namely the mode flag 17109 is set to "1" at a step 10820, the value of the arrival time instant area "b" 17104 is set into the arrival time instant area "a" 17103 and the process again waits for a further event at a step 10821 (Fig. 11e).

If the value of the average arrival interval area 17106 is not smaller than the value of the arrival interval set value "1" area 17101 at a step 10818, only the value of the arrival time instant area "b" 17104 is set to the arrival time instant area "a" 17103 and then the process waits for a further even at a step 10821.

On the other hand, when the process end event is made at a step 18041, the value of the process end number area 10425 is increased by "1".

Subsequently, if this process end event corresponds to a first process end event, namely the value of the process end number area 10425 is equal to "1" at a step 18232, a present time instant is set into the process time instant area "a" 10423 and the process waits for a further event at a step 10824 (Fig. 28f).

If this process end event corresponds to a second process end process, namely the value of the process end number area 10425 is equal to "2" at a step 10825, a time instant is set into the process time instant area "b" 10424 at a step 18261, and then a process interval value which will be calculated by the following equation is set to the all process interval area 10411 in the process interval queue table 10041 at a step 18262:

process interval value ≡ (value of process time instant area "b" 10424 - value of process time instant area "a" 10423)     (9).

Also, this process interval value is set into the average process interval area 10426 at a step 10827. Subsequently, the value of the process time instant area "b" 10424 is set into the process time instant area "a" 10423 and the process again waits for a further event at a step 10828 (Fig. 28g).

If this process end event corresponds to a third or more process end event, namely the value of the process end number area 10425 is not equal to "1" or "2" at steps 18232 and 1082, the present time instant is set to the process time instant area "b" 10424 and the following process is carried out at a step 10829.

At the beginning, an increased value of the average process intervals which will be calculated by the following equation is added to the average process interval area 10426 at a step 10830:
increased value of average process intervals ≡ [(value of process time instant area "b" 10424 -value of process time instant area "a" 10423) - value of area subsequent to area denoted by value of latest process interval pointer area 10427] x 1/n     (10).

It should be understood that the area subsequent to the area indicated by the value of the latest process interval pointer area 10427 implies a head arrival interval area 10411 (the leftmost area) employed in the process interval queue table 10041 when the value of this pointer area 10427 indicates a last process interval area 10411 (the rightmost area) in the arrival interval queue table 10041, whereas this area implies an arrival interval area 10411 next to the process interval area 10411 (i.e., in the right direction) denoted by the value of this pointer area 10427.

Further, this increased value of the average process interval is set into the process interval changing amount area 17108 at a step 10831. This value corresponds to a time differential value of the average process interval.

Next, the value of the latest process interval pointer area 10427 is set at a step 10832 in such a manner that it designates an area subsequent to the area which is being designated by this pointer area value, and thereafter the process interval value calculated by the equation (9) is set to the process interval area 10411 indicated by the value of the latest process interval pointer area 10427 at a step 10834 (Fig. 28h).

Subsequently, if the value of the process end number area 10425 does not exceed over the number "n" at a step 10835, the value of the process time instant area "b" 10424 is set to the process time instant area "a" 10423 and the process waits for a further event at a step 10836.

Even when the value of the process end number area 10425 exceeds over the value "n" at a step 10835, if the system is not in the process interval monitor mode, namely the mode flag 10109 is equal to "0" at a step 10837, the value of the process time instant area "b" 10422 is set to the process time instant area "a" 10423 and the process again waits for a further event (a step 10836).

If the value of the process end number area 10425 exceeds over the number "n" at a step 10835 and the system is operable in the process interval monitor mode, that is to say, the mode flag 17109 is set to "1" at a step 10837, then the following operations are carried out.

First of all, if the value of the process interval changing amount area 17108 is negative at a step 10838, since it implies that the system is gradually recovered from the overload condition, the value of the arrival interval set value 1 area 17101 is again sent to the terminal control apparatus 10102 and an instruction is made such that this value is set to the read timing buffer 11025 at a step 10839. As a result, the input velocity is again increased. In other words, the load control program 11036 transmits to the terminal control apparatus 10102, a message containing both a code to be set into the read timing buffer 1025 and also the value of the arrival interval set value "1" area 17101 of the load managing table 11035 as set data.

Then, the process interval monitor mode is released, namely the mode flag 17109 is set to "0" at a step 10840, a present time instant is set to the process time instant area "a" 10423, and then the process waits for a further event at a step 10841 (Fig. 28i).

It should be noted that if the value of the process interval changing amount area 17108 is not negative at a step 10838, only the value of the process time instant area "b" 10424 is set to the process time instant area "a" 10423 and the process again waits for a further event at a step 10841.

With the above-described process operations according to this preferred embodiment, a total acceptance amount of the process demands can be increased by properly switching between the inputs of the process demands at the input velocity higher than the maximum processing velocity of the computer system and the inputs of the process demands at the input velocity lower than this maximum processing velocity under such a condition that the computer system is not brought into the overload condition.

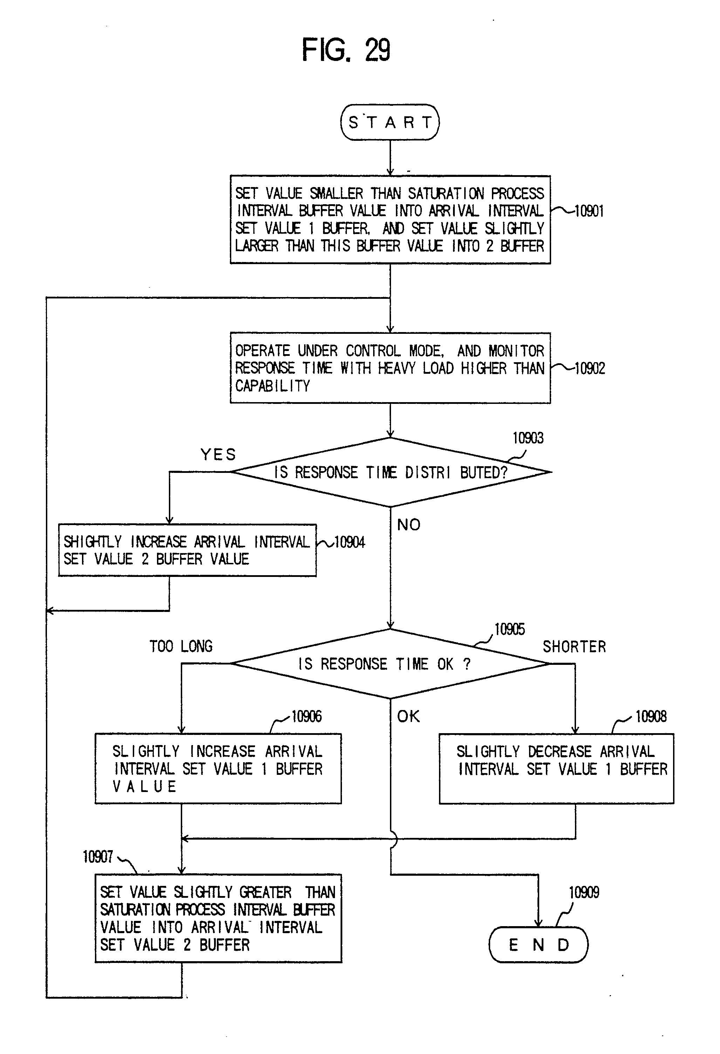

It should be noted that the values of both the arrival interval set value "1" area 17101 and arrival interval set value "2" area 17102 which have been determined the operations of this preferred embodiment defined at the previous step 10013 may be determined by a method represented in Fig. 29.

That is to say, after the value has been obtained in the saturation process interval area 10422 at the step 10012, the process defined at the step 10013 is not executed. Alternatively, a value properly smaller than the calculated value is set into the arrival interval set value "1" area 17101, and also another value properly greater than the calculated value is set into the arrival interval set value "2" area 17102 (set as provisional values in any cases) and then the process is once interrupted at a step 10901.

Subsequently, the load control program 1036 is started in the control mode, the process demand is inputted from the user terminal 10101 at a time interval shorter than the time interval which has been just now set into the arrival interval set value "1" area 17101, and then a response time period from the process demand input until the returning of the process result is monitored for a moment at a step 10902.

If the monitored response time period is gradually increased at a step 10903 (namely, if the number of the stayed demands within the computer system is increased), the input operation of the demand by the user terminal 10101 is interrupted, the value of the arrival interval set value "2" area 17102 is changed into a more large value (the upper limit value of the input velocity is lowered), and then the demand input operation by the user terminal 10101 is restarted at the same velocity at a velocity corresponding to a time interval shorter than the time interval set in the area 17101 so as to perform the monitor operation at a step 10904.

When there is no gradual increase in the monitored response time at a step 10903, a judgement is made whether or not this response time corresponds to a desired one at a step 10905. If the monitored response time is greater than the desired response time at a step 10905, the demand input from the user terminal input from the user terminal 10101 is interrupted, the value of the arrival interval "1" area 17101 is set to a slightly large at a step 10906, the value of the arrival interval set value "2" area 17102 is once returned to a value slightly greater than the value of the saturation process interval area 10422, and then the process demand is again inputted from the user terminal 10101 at a time interval shorter than the time interval which has been just now set into the arrival interval set value "1" area 17101 for a further monitoring operation at a step 10907.

Since the computer system can endure the more heavy load if the response time period is shorter than the desired one at a step 10905, the demand input by the user terminal 10101 is interrupted, the value of the arrival interval set value "1" area 17101 is made more small at a step 10908, the value of the arrival interval set value "2" area 17102 is returned to the original value thereof, and the process demand is again inputted by the user terminal 10101 at a time interval shorter than the time interval which has been just now set into the arrival interval set value "1" area 17101 so as to perform the monitor operation.

After the above-described process operations are repeated, when the monitored response time becomes the desirable response time at a step 10905, the process is accomplished at a step 10909.

As previously described, the set values having such proper numbers for the arrival interval set value "1" area 17101 and arrival interval set value "2" area 17102 can be obtained with a cut-and-trial operation. It should be noted that the above-described operations may be automatically performed by the load control program 1036 subsequent to the step 10012.

In accordance with the above-described preferred embodiment, while the computer system is continuously operated under the condition that this computer system is not brought into the overload condition, there is a particular advantage than the total acceptance amount of the process demands for the computer system can be increased.

In the above-described preferred embodiment, the input velocity of the process demand supplied to the computer system was adjusted by changing the reading time period of the process demand by the user terminal 10101 in the terminal control apparatus 10102. According to this method, since such a fact that the computer system is brought into the overload condition cannot be directly reported to an operator for the user terminal 10101, there are some possibilities to impair reliabilities of the computer system shown in Fig. 18 since in an extreme case, an input operation of a demand process into the computer system is suddenly interfered, and also the key of the user terminal 10101 may be usually locked in view of the operations by the operator for the user terminal 10101. To avoid such difficulties, it may be conceived that such a fact that the computer system shown in Fig. 18 is announced to the operator for the user terminal 10101. Now, this operation according to another preferred embodiment will be described.

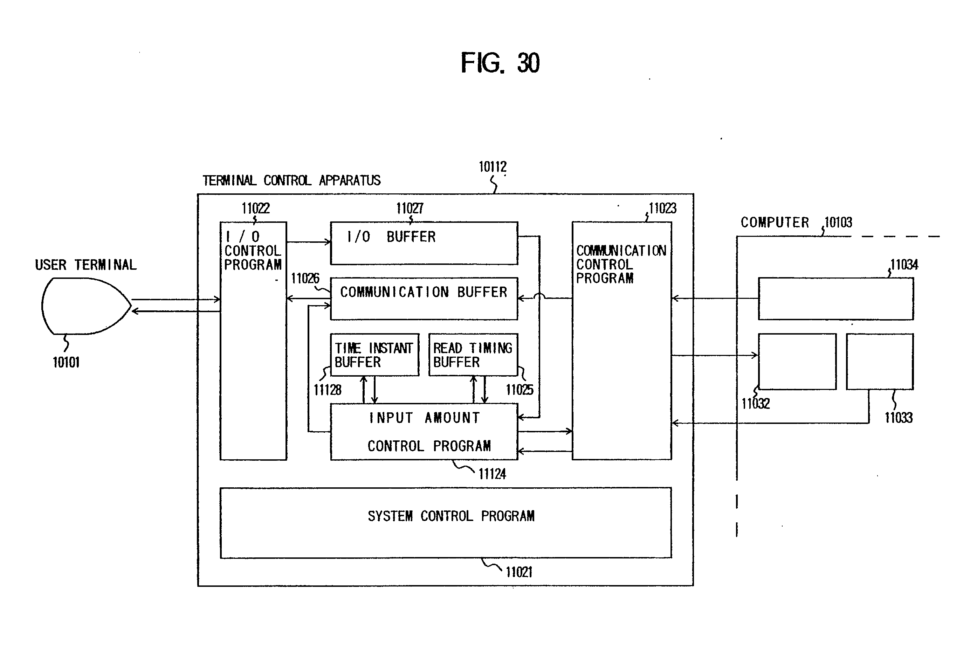

An arrangement of this preferred embodiment is the same as that of the previous preferred embodiments except for the terminal control apparatus represented in Fig. 18. Fig. 30 represents an arrangement of programs and buffers employed in a terminal control apparatus 10112 according to this preferred embodiment, which is employed so as to substitute the periods terminal control apparatus 10102 shown in Fig. 18. It should be noted that an I/O control program 11022, a communication control program 11023, a read timing buffer 11025, a communication buffer 11026, and an I/O buffer 11027 are identical to those of Fig. 20.

Furthermore, a time instant buffer 11128 is such a work buffer for storing a time instant at which data is inputted by the user terminal 10101.

When a power supply of this computer system is turned on, a system control program 11021 starts other programs of the terminal control apparatus 10112, and also announces a present time instant in response to a time instant acquiring demand made by the other program employed in the terminal control apparatus 10112.

An input amount control program 11124 adjusts an input velocity and also announces to an operator of the user terminal 10101 that the computer system is brought into the overload condition. In other words, the I/O control program 11022 reads the process demand data into the I/O buffer 11027 from the buffer employed in the user terminal 10101. Upon input of the process demand data into the I/O buffer 11027, the input amount control program 11124 requests the system control program 11021 to acquire the time instant where this process demand is inputted into the I/O buffer 11027 so as to compare this time instant with a value of a time instant buffer 11128. If a difference between these compared values (i.e., a difference between two time instants of the process demands at the present time instant and a time instant just before) is smaller than the value of the read timing buffer 11025, such a message that the process demand data which has been just now inputted is invalidated is set to the communication buffer 11026 and outputted to the user terminal 10101, so that the data stored in the I/O buffer 11027 is discarded. Conversely, if this difference is greater than the value of the read timing buffer 11025, the data stored in the I/O buffer 11027 is given to the communication control program 11023 so as to be transferred to the computer 10103, and also the value stored in the time buffer 11128 is updated by the present time instant. When a message containing a read timing buffer set code is sent from the computer 10103, the value of the read timing buffer 11025 is updated in response to this message data, similar to the operations effected in the terminal control apparatus 10102 represent in Fig. 18.

It should be noted that the above-described functions of both the judgement of the input timings (comparison of time instants) effected by the input amount control program 11124 and the announcement of the data discard to the user terminal 10101 may be executed in the computer 10103.

As previously described, in accordance with this preferred embodiment, there is a particular advantage that the input demand restriction can be performed while announcing that the computer system shown in Fig. 18 is brought into the overload condition to the operator of the user terminal 10101, thereby preventing unnecessary fear given to the operator.

It should be noted that although the load condition of the computer system represented in Fig. 18 has been mainly judged based on the time interval for ending the process demand in the above-described preferred embodiment, such a load condition of the computer system may be alternatively judged by checking the number of the process demands stayed in the system. In this case, the number of the stayed demands may be grasped by counting up/down a counter for the stayed demands when the process demand has arrived and the process result has been announced. Then, based upon this judgement result, the upper limit value of the input velocity for the process demand may be determined.

Although the judgement base on the load condition of the computer system must be formed by another different method, the workload of this load condition judgement is lowered as compared with that of other preferred embodiments.

Also, the upper limit of the input velocity for the process demand has been manually set on the basis of the maximum processing velocity in the above-described computer system. Alternatively, this upper limit may be automatically set based on the above-described maximum processing velocity.

As previously stated in detail, even when the process demand occurs at the velocity exceeding over the maximum processing velocity of the computer system, since the acceptance for the process demands is restricted at the computer system side so as to prevent that the computer system is brought into the overload state, there are such particular advantages that extraordinary conditions such as a system down and extremely deteriorated response velocities to the user can be avoided.

Furthermore, since the process demands can be accepted as many as possible based upon the

27

previously identified maximum processing velocity for the computer system while limiting acceptance of the process demands in order not to bring the computer system into the overload condition, there is another particular advantage to increase the acceptance amount of the process demands.

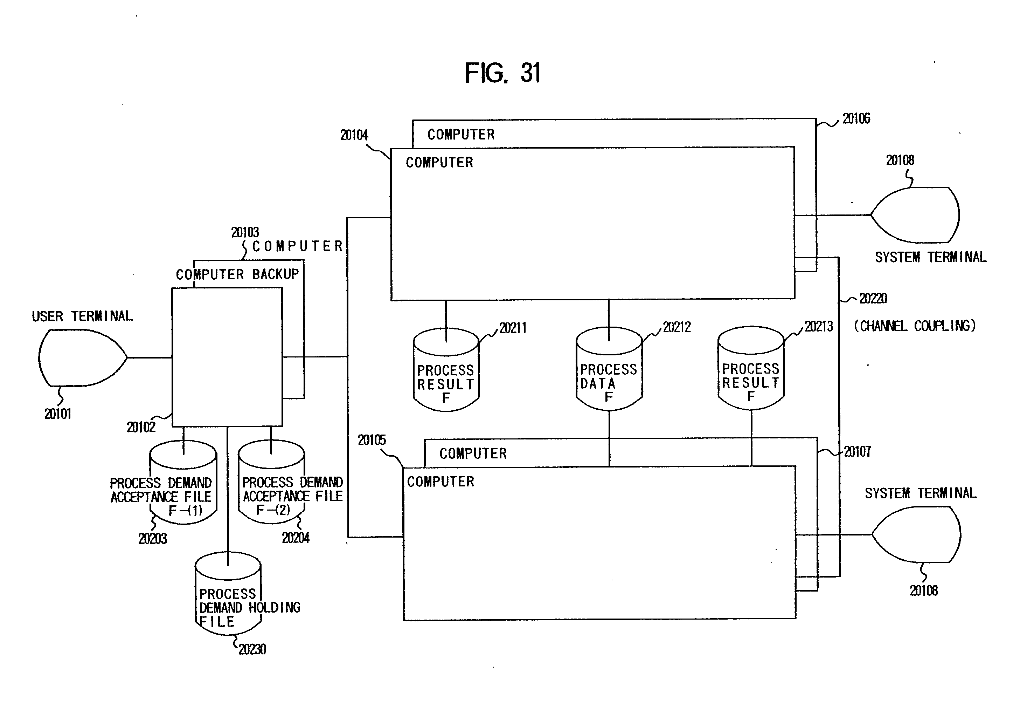

In addition, a computer system of a further preferred embodiment will now be described. Fig. 31 represents an arrangement of an overall computer system handled in this preferred embodiment. The present computer system is arranged by employing a user terminal 20101 employed for inputting/outputting a process demand; a computer 20102 for accepting the process demand inputted from the user terminal; a computer 20103 for a back-up purpose to the computer 20102; another computer 20104 for fetching the process demand received from the computer 20102 and for performing the process of the fetched process demand in response to an instruction supplied from the system terminal 20108; a further computer 20105 and a back-up computer 20106; a still further computer 20107; and system terminals 20108 used to monitor input conditions for the execution instruction of the process which has been demanded by a specific operator, and also process conditions. Further, this computer system includes process demand acceptance files 20203 and 20204 for recording the accepted process demands; a process demand holding file 20230 for temporarily storing the process demand to be sent out to the computers 20104 and 20105; a process data file 20211 for performing the process demand; and a process result file 20211 for recording the process result. The process demand which has been inputted from the user terminal 20101 is sent to the computer 20102 which will then transfer this process demand to either the computer 20104 or 20105, depending upon the sort of the process demand. Both the computers 20104 and 20105 perform the process operations of the received demand in response to the instruction supplied from the system terminal 20108, and then transmit the process results to the computer 20102 and system terminal 20108. The computer 20102 sends the above-described information to the user terminal 20101. It should be noted that the functions of the back-up computers 20106 and 20107 are to take over the process operations carried out by the computers 20104 and 20105 in case of the system down.

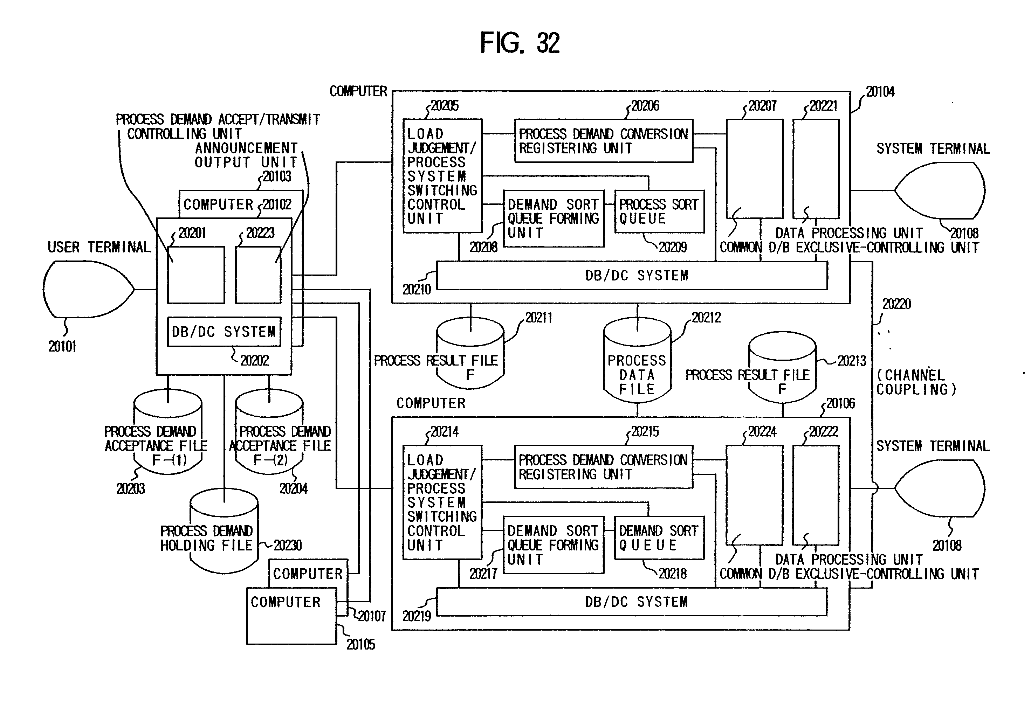

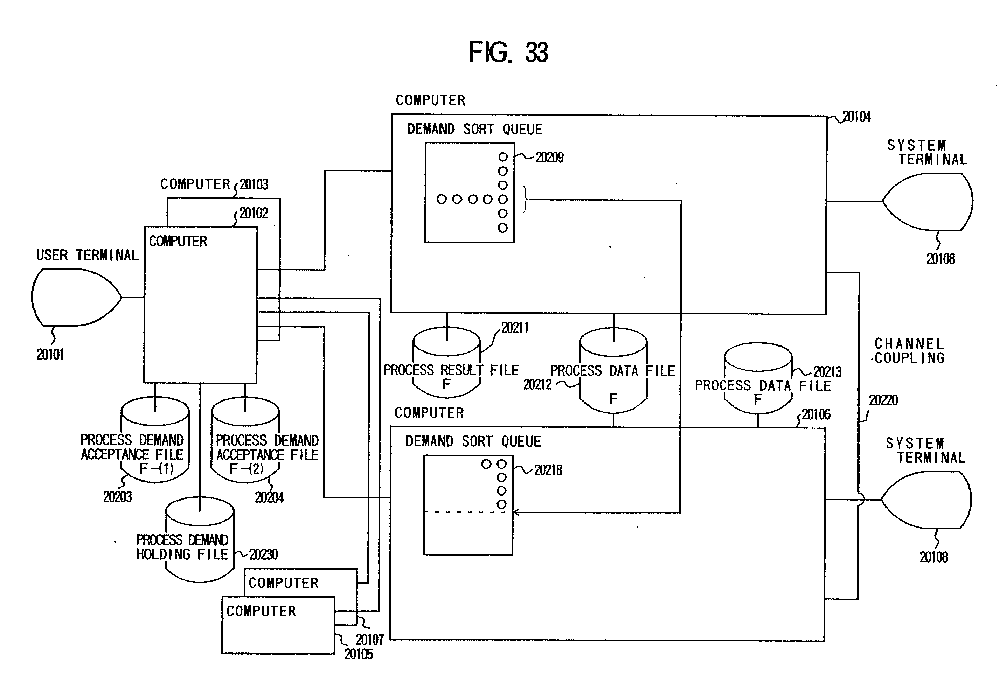

A detailed operation of the computer systems shown in Fig. 32 will now be described with reference to Fig. 33. Since the computers 20106 and 20107 include the completely same portions as those of the computers 20104 and 20105 and carry out the same operations as those of the latter-mentioned computers, no detailed explanation thereof is omitted. The process demand inputted from the user terminal 20101 is sent to the computer 20102. Upon receipt of the process demand supplied from the user terminal 20101, a process demand accept/transmit, controlling unit 20201 of the computer 20102 judges the sort of the process demand, writes the judged process into the process demand acceptance file (1) 20203 if it corresponds to a sort of a demand to be processed by the computer 20104, and writes the judged process demand into the process demand acceptance file (2) 20204 if it corresponds to a sort of a demand to be processed by the computer 20105. Also, a DB/DL system is started. Upon receipt of this starting, the DB/DL system 20202 transmits the content of either the process demand acceptance file (1) 20203 or the process demand acceptance file (2) 20204 to the corresponding computers 20104 and 20105. A load judgement/process system switching control unit 20205 employed in the computer 20104 investigates a data amount of a sort of process demands which have stayed in a demand sort queue 20209 for queuing the process demands in accordance with the sorts thereof when the process demand has arrived therein from the computer 20102; transfers its control to a demand sort queue forming unit 20208 if the investigated data amount is lower than a threshold level; and also queues this process demand into the demand sort queue 20209. When the data amount of the demand sort in question exceeds over the threshold value, as will be explained later, a channel coupling 20220 is employed so as to copy the data on this demand sort in the demand sort queue 20214 employed in the computer 20106. When the demand sort process queue forming unit 20208 queues the process demand into the demand sort queue 20209, a process demand conversion register unit 20206 sequentially takes out the process demand one by one from the demand sort queue 20209, converts the resultant process demand into a data form given by a data processing unit 20221, and thereafter requests a common DB exclusive-controlling unit 20207 to register the converted process demand into a process data file 20212. At this time, the common DB exclusive-controlling unit 21207 accesses a process data file 20212 with employment of a DB/DL system 20210 unless this controlling unit accesses either the computer 20106 or process data file 20212. If the computer 20106 is under the accessing operation, the process data file 20212 is accessed after waiting for the completion of this accessing operation. The data processing unit 20221 reads the process data file 20212 at a constant time interval and can transmit it to the system terminal 20108. An exclusive operator continues to monitor the process data file 20212 by the system terminal 20108 and makes an instruction for processing the data by the system terminal 20108. In response to this instruction, the data process unit 20221 employed in the computer 20104 performs the data processing operation and writes the process result in the process result file 20211. The DB/DC system 20210 transmits the information which has been newly written in the process result file, to both the system terminal 20108 and computer 20102. An announcement output unit 20223 in the computer 20102 outputs the above-described information to the user terminal 20101.

Fig. 33 is a detailed representation of a copying method by which the process demands of the demand sorts that have stayed within the demand sort queue 20209 in the computer 20104 are duplicated into the demand sort queue 20218 employed in the computer 20106. The demand sort queue 20209 or 20218 is a buffer for storing the process demands which have been transmitted from the computer 20102 in the order of the demand arrivals in accordance with the demand sort. The process demands are cyclically fetched from the head process demand for the process operation from the process demand conversion register unit (20206 or 20215). In the computer system shown in this figure, the process demand of the demand sort indicated by the demand sort queue 20209 "]" employed in the computer 20104 is copied via the channel coupling 20220 to the queue for this demand sort which has been previously prepared in the demand sort queue 20218 employed in the computer 20106.

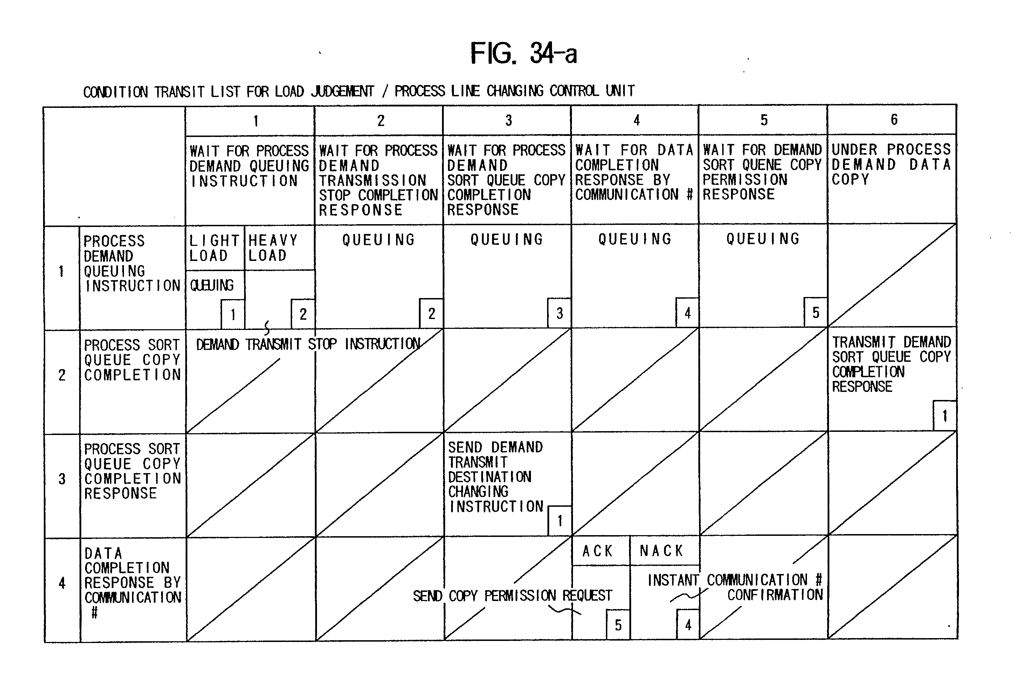

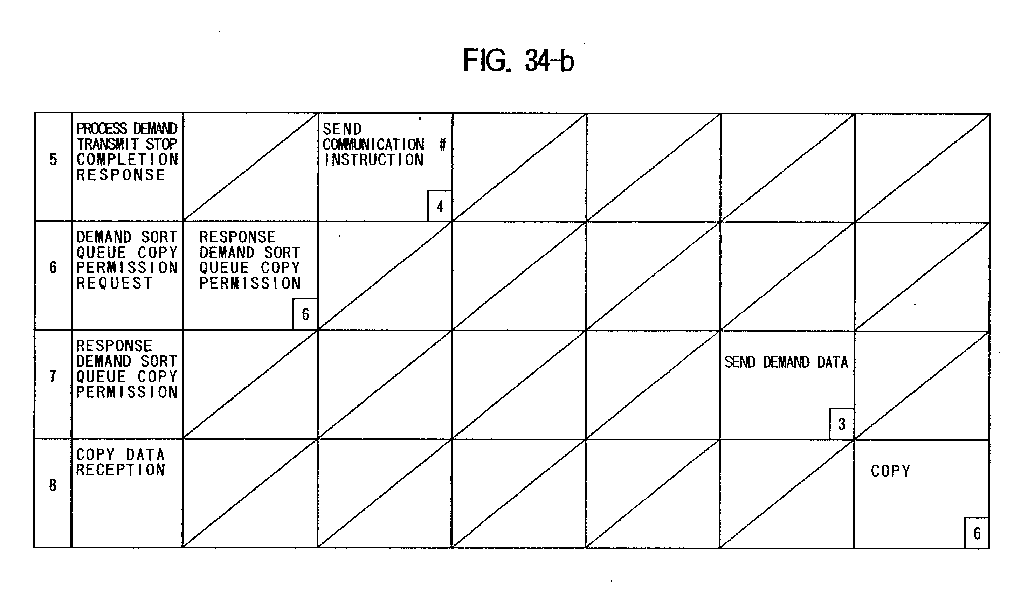

Subsequently, the operation of the load judgement/process system switching-control unit 20205 or 20214 will now be described more in detail with reference to a condition transit list represented in Fig. 34. In this list, a position of an action under explanation is indicated as (an event number, a condition number). Also, a transited condition is indicated in a small box located at the right corner under the action. In the computer 20104, when there exists a process demand queuing instruction (event 1) under a normal waiting condition (condition 1) for the process demand queuing instruction, a data amount of the demand sort in question in the demand sort queue 20209 is monitored, the process demand queuing operation is merely carried out if the data amount does not exceed over the threshold value. Conversely, if the data amount has exceeded over the threshold value, this computer 20104 sends a process demand transmission stopping instruction to the computer 20102 and waits for a response of completing the process demand transmission interruption (condition 2) (1, 1). When a process demand transmission interruption completion response (event 5) is returned under this condition, a "communication #" of the trail data among the data within the demand sort queue is sent to the computer 20102 so as to confirm that all of the process demands stayed in the input/output buffer or the like of the computer 20104 have been written in the demand sort queue 20209, and then a data completion response waiting condition (condition 3) is established by the "communication #" (5,2). Under this condition, when such a response (data completion response by communication # event 4) that the "communication #" of the data which has been sent out last from the computer 20102 is coincident with the "communication #" requested for the confirmation purpose, is received from the computer 20102, a copy permission request for the concentration data stored in the demand sort queue 20209 is transmitted to the computer 20106, and then it becomes a condition for waiting for a demand sort queue copy permission response (condition 5). When there exists such an announcement that there is no coincidence in the compared "communication #" from the computer 20102, a communication # confirmation instruction is again transmitted and therefore it becomes a condition for waiting for the data completion response (condition 4) by the "communication #" (4, 4). If the demand sort queue copy permission response waiting (event 7) is received when it is brought into the demand sort queue permission response waiting condition (condition 5), the process demand data is immediately sent to the computer 20106, and then it becomes a condition (condition 3) for waiting for a demand sort queue copy completion response (7,5). Under such a condition, when the demand sort queue copy completion response (event 3) is received, an instruction for changing a process demand destination is transmitted to the computer 20102 and then it becomes the normal process demand queuing instruction waiting condition (state 1) (3,3). On the other hand, the load judgement/process system switching unit 20214 of the computer 20106 receives the demand sort queue copy request (event 6) from the computer 20104 during the normal process demand queuing waiting condition. At this time, when the above-described input is supplied, the waiting for the demand sort queue copy permission response (event 7) is returned to the computer 20104 and thus it becomes such a state (condition 6) where the process demand data copy is performed (6,1). When the copy data is received under this condition (event 8), this copy data is copied in the demand sort queue 20218 (8,6). Furthermore, when the copy is accomplished, the demand sort queue copy completion response (event 3) is transmitted, it becomes the waiting condition (condition 1) for the normal process demand queuing instruction (2,6). Also, the queuing operation (1,2) to (1,5) is carried out when there is the queuing instruction (event 1) of the process demand under such conditions of the waiting condition (condition 2) for the process demand transmit interruption completion response; the waiting condition (condition 3) for the process sort queue copy completion response; the waiting condition (condition 4) for the data completion response by the "communication #"; and, the waiting condition (condition 5) for the demand sort queue copy permission response.

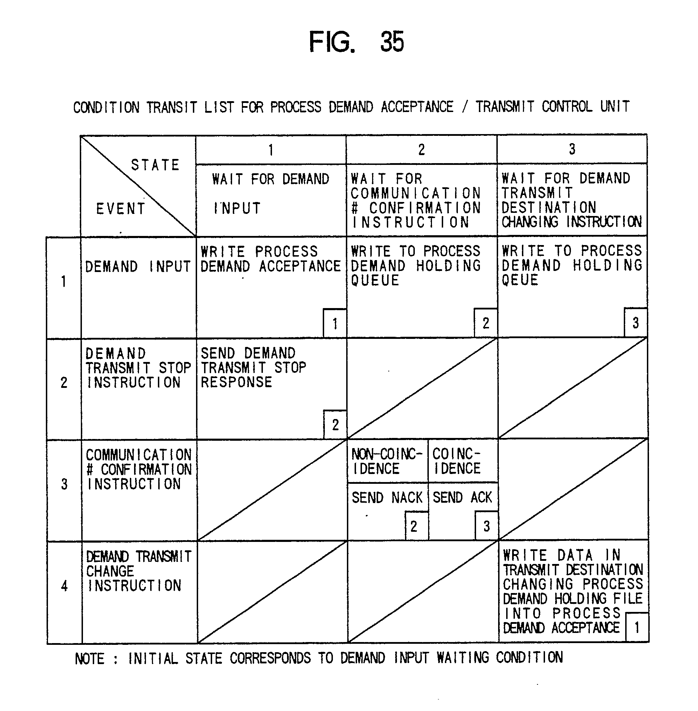

Subsequently, the operation of the process demand acceptance/transmission controlling unit 20201 employed in the computer 20102 will now be described with reference to Fig. 35. It should be noted that the notation employed in Fig. 35 is the same as in Fig. 34. In the normal condition, this controlling unit is under the condition for waiting the process demand input (condition 1), and when a process demand is inputted (event 1), writes this input data into the process demand acceptance file (20203 or 20204). In this case, a selection for the process demand acceptance file to be written is performed in accordance with the demand sort (1,1). When the process demand transmission stopping instruction (event 2) is supplied from the computer 20104 under the process demand input waiting condition (condition 1), the transmission of the process demand is stopped, the process demand transmission stopping completion response is returned and then it becomes the condition for waiting "communication #" confirmation instruction (condition 2) (2,1).

If the communication # confirmation instruction (event 3) is received under this condition, a comparison is made between the transmitted communication # and the communication # of the latest transmitted data. If there is a coincidence between them, a positive response of the data completion response by the communication # is returned, and it becomes the condition to wait for the process demand transmission destination changing instruction. To the contrary, if there is no coincidence, then a negative response of the data completion response is returned and thus it remains the condition for waiting the communication # confirmation instruction (condition 2) (3,2). When there is a coincidence between these communication # and therefore the computer system is brought into the condition to wait for the demand sort transmit destination changing instruction (i.e., conditions 3), if the process demand transmit destination changing instruction (event 3) is received, the process demand transmit destination is changed in the computer 20106, the data of the process demand holding queue is written into the process demand acceptance file, and whereby the process demand input waiting condition is prepared (4,3). Also, when the process demand is inputted under the waiting conditions of the communication # interrogating and of the process demand transmit destination changing instruction, such a process demand is written into the process demand holding file 20230 corresponding to a file for holding therein the process demand while performing the above-described load distributing process ((1,2), (1,3)).

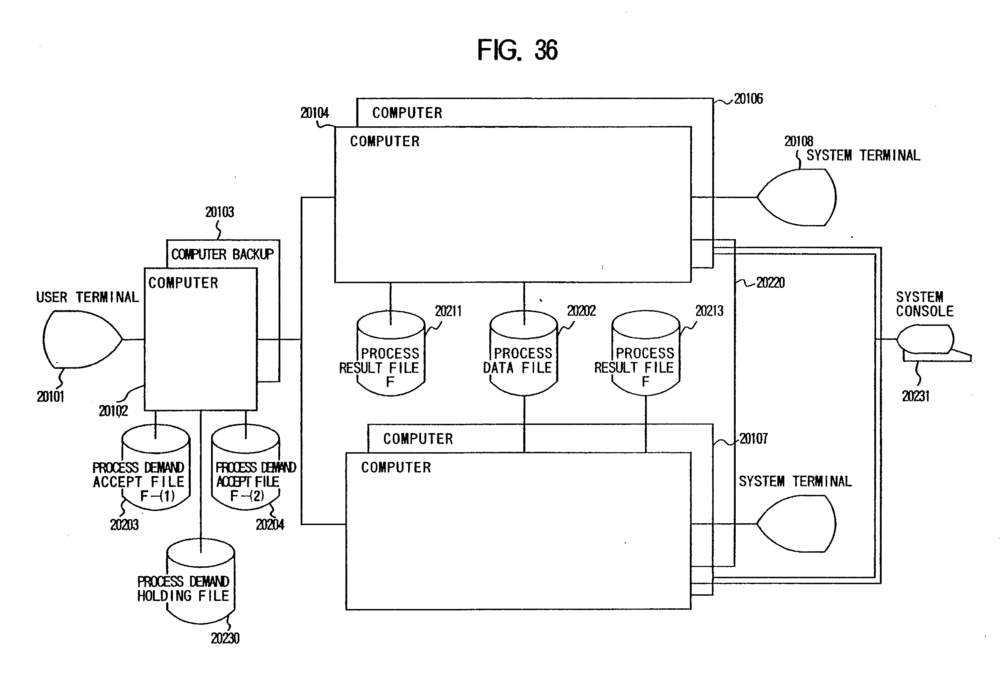

It should be noted that an operator may give a trigger of a process for the above-described load distribution purpose (a series of process for transferring the load of the computer 20104 to the computer 20106) by employing such an apparatus which continuously monitors the demand sort queue 20209 without automatically transferring the process demand in case that the number of the process demands for the demand sort queue 20209 of the computer 20104 exceeds over the threshold value. In Fig. 36, there is shown a system arrangement. The load of the respective computers is monitored by a system console 20231 and a trigger for distributing the load is given.

It should be noted that the specific computer for distributing the loads of the computer 20104 is not always required to use the computer 20106, but may be either the computer 20107 or 20105. Alternatively, while monitoring the load conditions of these computers, the load may be distributed to a computer containing a small load. This selection may be designated by a user during the generation of the system.

Furthermore, the sort of the process demand for the computer 20104 to copy the process demand into the demand sort queue 20214 of the computer 20106 may be selected to be any sort other than the concentration demand sort. At this time, a selection may be made of the process sort which exceeds over the second threshold value among the concentration demand sorts so as to copy the process demand into the demand sort queue 20214 of the computer 20106.

In accordance with the above-described preferred embodiment, when the data amount stored within the demand sort queue of the computer 20104 exceeds over the threshold value, the concentration demand sort (otherwise any demand sorts other than this concentration demand sort) is moved into the computer 20106 so as to perform the parallel process operation. As a result, there is a particular advantage that the delays occurring in the process demand register process can be solved.

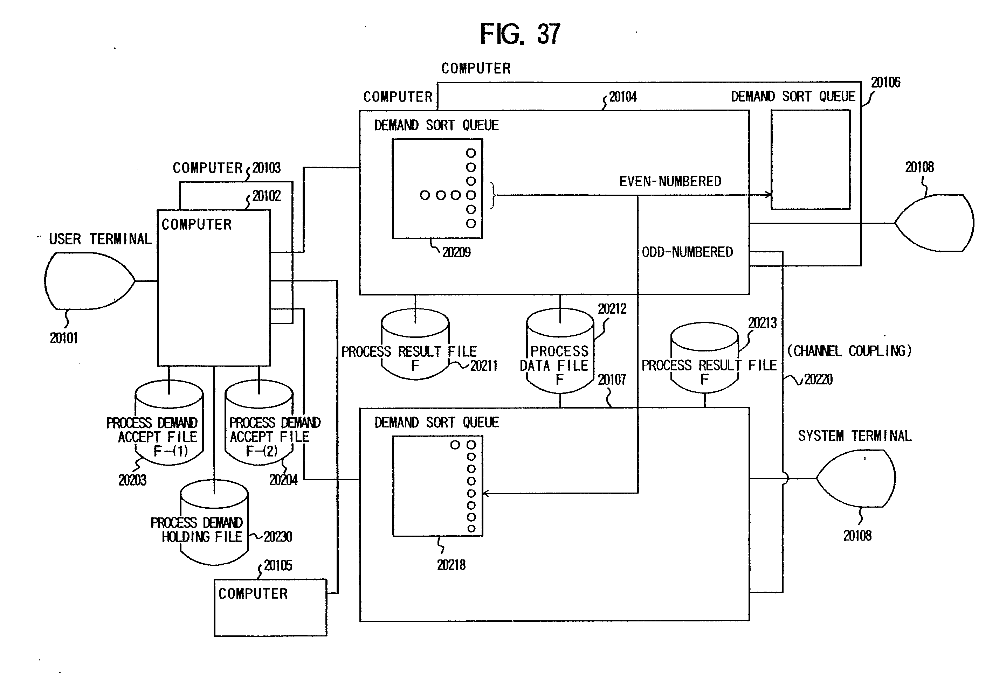

As represented in Fig. 37, the process demands from the head process demand to the odd-numbered process demands of the concentration demand sort may be transferred to the computer 20106, the even-numbered process demands may be moved to the computer 20107, and the process data file may be updated while synchronizing the computer 20106 with the DB/DC systems (20210 and 20219) of the computer 20107 in order not to vary the ordered sequence of the process demand register process. For instance, the synchronization is carried out in such a manner that the communication # of the process demand is stored in the process data file, this communication # is referred by the process demand conversion register unit, and a comparison is made between this communication # and another communication # to be registered subsequently. According to this synchronization method, since the process demand register processes are parallel-executed by two sets of back-up computers on which substantially no load has been loaded, there is a particular advantage to realize the high-speed process.

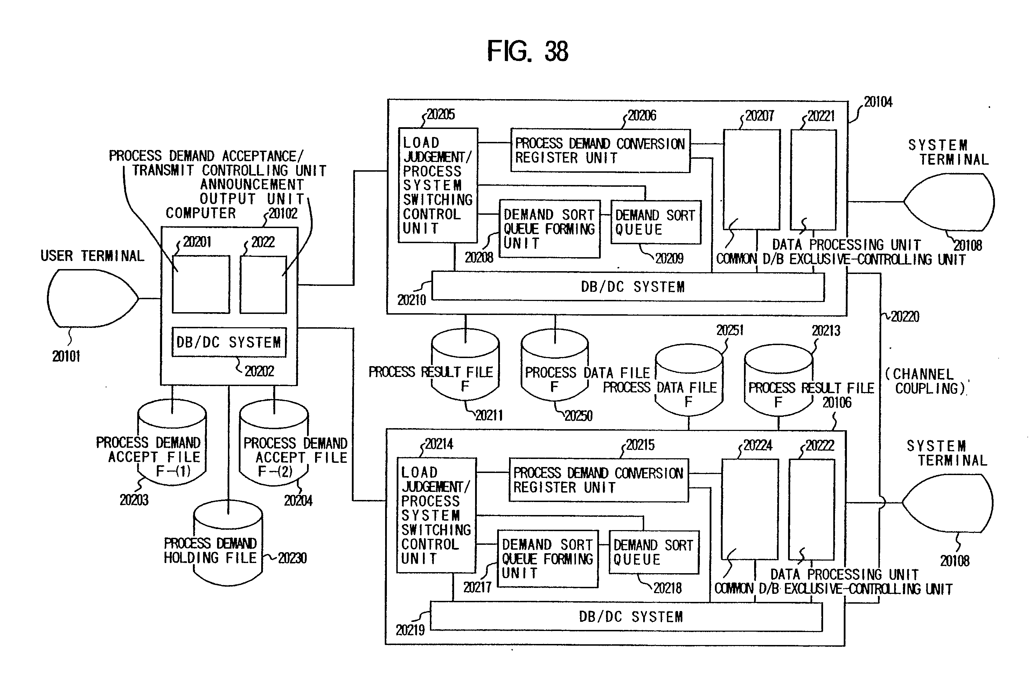

As represented in Fig. 38, the process data file is not commonly used, the computers 20104 and 20106 separately include the process data files having the same contents with each other, and both of the process data files may be updated even in the normal condition. In this case, the DB/DC systems 20210 and 20219 of the computers 20104 and 20106 own the access information on the process data files thereof, and utilize a remote data access function (i.e., basic function of distribution DBMS) when an updating instruction for the process data file of the process demand conversion register unit is given, whereby both of the process data files are simultaneously updated. It should be noted that the same process is performed during the load distribution. With such a computer arrangement, even when one data file is mistakenly destroyed, the other data file is available because these computers independently own the process data files having the same file contents, resulting in improving the reliability of the computer system.

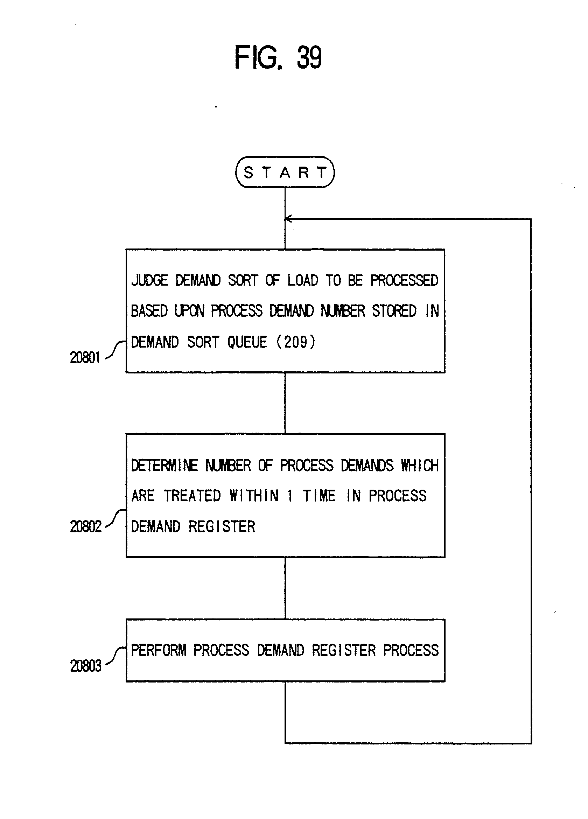

Alternatively, the load of the computer 20104 is not distributed to the computer 20106, the load conditions are judged based upon the process demand number of the respective demand sorts stored in the demand sort queue 20209 employed in the computer 20104, the process demand numbers which are registered within one time into the process demand conversion register unit 20206 are processed every time the demand sorts are changed, so that the delays occurring in the process demand register processing operation may be solved by employing only the computer 20104. Referring now to Fig. 39, such a process operation effected in the process demand conversion register unit 20206 will be explained. The process demand conversion register unit 20206 judges the load of the process sorts to be processed based upon the process demand number within the process sort queue 20209 at a step 20801, and determines the number of the process demand which should register-processed within one time at a step 20802. Next, based upon this determination, the process demand register process is carried out at a step 20803.

With such an arrangement, there are provided the following particular advantages. The process demand register process may be efficiently performed to a certain extent even by a small-scaled computer system having no back-up system.

In accordance with this preferred embodiment, when the data amount of the process demand sort queue employed in one computer of the computer system exceeds over the threshold value, the concentration demand sort or other demand sorts are transferred to the other computer so as to perform the parallel data process. As a consequence, the particular merit may exist in that the delays caused by the process demand register processing operation may be solved.

## Claims

1. A load control method for a computer system (102) including a memory apparatus (106) for storing therein plural sorts of process demands, and fetching the process demands stored in said memory apparatus so as to perform processes corresponding to the fetched process demands, comprising the steps of:
Monitoring (2) at least one of a queue length of the process demands which have been stored in said memory apparatus and also an arrival velocity of the process demand to be stored in said memory apparatus, depending upon the sorts of the processed demands;
determining (3) a number of the process demands to be processed, depending upon the sorts of the process demands, based upon at least one of said queue length of said monitored process demands and said arrival velocity of the process demand; and
executing (4) the processes corresponding to the process demands stored in said memory apparatus, depending upon the sorts of the process demands, based upon said determined number of the process demands to be processed.

2. A load control method for a computer system as claimed in Claim 1, wherein said number of the process demands which should be processed depending upon the sorts of the process demands, are obtained from the queue length of the process demand to be obtained, depending upon the sorts, and also an average value of the queue lengths of the process demands, depending upon the sorts thereof.

3. A load control method for a computer system as claimed in Claim 1, wherein in response to a further command from an input apparatus, said monitoring step, said determining step and said executing step are controlled.

4. A load control method for a computer system as claimed in Claim 1, wherein when the queue length of the process demand, depending upon the sort thereof, exceeds over a predetermined length, an acceptance for a new process demand is suppressed.

5. A load control method for a computer system (102) including a memory apparatus (106) for storing a process demand, and fetching the process demand stored in the memory apparatus so as to execute a process corresponding thereto, comprising the steps of:

EP 0 404 129 A2

assuming a practically maximum process demand number which can be processed within a unit time by said computer system; and,

adjusting an acceptance for a new process demand within said unit time in order not to exceed over said assumed process demand number.

6. A load control method for a computer system as claimed in Claim 5, wherein said adjustment of accepting said new process demand is performed by controlling a time interval of said new process demand acceptance.

7. A load control method for a computer system as claimed in Claim 5, wherein said adjustment of accepting said new process demand is performed by invalidating the process demands which have been stored in said memory apparatus.

8. A load control method for a computer system as claimed in Claim 5, wherein said practically maximum processing number assumption, which can be processed with a unit time by said computer system, is realized in such a way that the process demands are inputted at higher frequencies into said computer system, and a number of the processes which have been completed within said unit time when completion time intervals corresponding to the process demands inputted at the higher frequencies become substantially constant, is used as said practically maximum process demand number which can be processed within said unit time.

9. A load control method for a computer system as claimed in Claim 5, wherein said practically maximum processing number assumption. which can be processed with a unit time by said computer system, is realized in such a way that the process demands are inputted at higher frequencies into said computer system, and a number of the processes which have been completed within said unit time when completion time intervals corresponding to the process demands inputted at the higher frequencies become desired time intervals, is used as said practically maximum process demand number which can be processed within said unit time.

10. A load control method for a computer system as claimed in Claim 5, further comprising the steps of:

determining other process demand number smaller than said practically maximum process demand number which can be processed by said computer system in said unit time; and

wherein said adjustment for accepting said new process demand is performed in such a way that when the process demands exceeding over the practically maximum process demand number are inputted, a process demand number accepted per said unit time is so controlled as to be smaller than said predetermined other process demand number, and also when said completion time intervals of the processes corresponding to the process demands which have been stored in said memory apparatus are decreased, said process demand number accepted per said unit time is so controlled as to be smaller than said practically maximum process demand number.

11. A load control apparatus for a computer system (102), comprising:

a memory apparatus (106) for storing plural sorts of process demands; and

a computer system (102) for fetching the process demands stored in said memory demands stored in said memory apparatus so as to perform processes corresponding to the fetched process demands, said computer system including:

monitoring (2) at least one of a queue length of the process demands which have been stored in said memory apparatus and also an arrival velocity of the process demand to be stored in said memory apparatus, depending upon the sorts of the process demands;

determining (3) a number of the process demands to be processed, depending upon the sorts of the process demands, based upon at least one of said queue length of said monitored process demands and said arrival velocity of the process demand; and

executing (4) the processes corresponding to the processes corresponding to the process demands stored in said memory apparatus, depending upon the sorts of the process demands, based upon said determined number of the process demands to be processed.

12. A load control apparatus as claimed in Claim 11, wherein said number of the process demands which should be processed depending upon the sorts of the process demands, are obtained from the queue length of the process demand to be obtained, depending upon the sorts, and also an average value of the queue lengths of the process demands, depending upon the sorts thereof.

13. A load control apparatus as claimed in Claim 11, further comprising:

an input apparatus connected to said computer system; and

wherein means for controlling the operations of said monitoring means and said determining means in response to a command inputted from said input apparatus, is employed in said computer system.

14. A load control apparatus as claimed in Claim 11, wherein when the queue length of the process

32

demand, depending upon the sort thereof, exceeds over a predetermined length, an acceptance for a new process demand is suppressed.

15. A load control apparatus for a computer system (102) comprising:
a memory apparatus (106) for storing a process demand, and a computer system for fetching the process demand stored in the memory apparatus so as to execute a process corresponding thereto, said computer system including:
means for assuming a practically maximum process demand number which can be processed within a unit time by said computer system; and
means for adjusting an acceptance for a new process demand within said unit time in order not to exceed over said assumed process demand number.

16. A load control apparatus as claimed in Claim 15, wherein said means for adjusting the acceptance of said new process demand is equal to means for controlling a time interval of said new process demand acceptance.

17. A load control apparatus as claimed in Claim 15, wherein said means for adjusting the acceptance of said new process demand is equal to means for invalidating the process demands which have been stored in said memory apparatus.

18. A load control apparatus as claimed in Claim 15, wherein said practically maximum processing number assuming means, which can be processed with a unit time by said computer system, is constructed of:
means for inputting the process demands, at higher frequencies into said computer system; and
means for determining the number of the processes which have been completed within said unit time when completion time intervals corresponding to the process demands inputted at the higher frequencies become substantially constant, as said practically maximum process demand number which can be processed within said unit time.

19. A load control apparatus as claimed in Claim 15, wherein said means for assuming the practically maximum process demand number which can be processed per said unit time by said computer system is constructed of:
means for inputting the process demands at higher frequencies into said computer system; and
means for determining the number of the processes which have been completed within said unit time when completion time intervals corresponding to the process demands inputted at the higher frequencies become desired time intervals, as said practically maximum process demand number which can be processed within said unit time.

20. A load control apparatus as claimed in Claim 15, further comprising means for determining other process demand number smaller than said practically maximum process demand number which can be processed by said computer system within said unit time; and
wherein said means for adjusting the acceptance of said new process demand includes:
means for controlling the process demand number accepted per said unit time in such a way that when the process demands exceeding over the practically maximum process demand number are inputted, said process demand number is so controlled as to be smaller than said predetermined other process demand number; and
means for controlling said process demand number accepted per said unit time in such a manner that when said completion time intervals of the processes corresponding to the process demands which have been stored in said memory apparatus are decreased, said process demand number accepted per said unit time is so controlled as to be smaller than said practically maximum process demand number.

33

# FIG. 1

```
                    ( S T A R T )
                         |
                         v
        +-------------------------------+
        | STORE PROCESS DEMAND INTO QUEUE |  1
        +-------------------------------+
                         |
                         v
        +-------------------------------+
        | MONITOR QUEUE LENGTHS OF RESPECTIVE |  2
        | SORT OF PROCESS DEMANDS OF QUEUES   |
        +-------------------------------+
                         |
                         v
        +-------------------------------+
        | BASED UPON MONITORED QUEUE LENGTHS OF |  3
        | PROCESS DEMANDS, CALCULATE NUMBER OF  |
        | PROCESS DEMAND (PROCESS FREQUENCY)    |
        | TO BE PROCESSED FOR EACH SORT.        |
        +-------------------------------+
                         |
                         v
        +-------------------------------+
        | EXECUTE PROCESS OF PROCESS DEMAND BASED |  4
        | UPON PROCESS FREQUENCY                  |
        +-------------------------------+
                         |
                         v
        +-------------------------------+
        | ADD ANOTHER PROCESS TO PROCESS RESULT |  5
        +-------------------------------+
                         |
                         v
        +-------------------------------+
        |      OUTPUT PROCESS RESULT     |  6
        +-------------------------------+
                         |
                         v
                    ( E N D )
```

# FIG. 2

TERMINAL

COMPUTER 101

COMPUTER 102

DATA PROCESS INSTRUCTING TERMINAL

103

109

110

111

104

112

105

SYSTEM CONTROLLING TERMINAL

113

114

115

116

117

PROCESS DEMAND FILE

PROCESS RESULT FILE

PROCESS DATA FILE

106

107

108

EP 0 404 129 A2

# FIG. 3

EP 0 404 129 A2

## FIG. 4

| PROCESS DEMAND ACCEPT SERIAL NUMBER | SORT NUMBER | LOAD CONTROL / PROCESS DEMAND CONVERTING PROGRAM INFORMATION |
|---|---|---|
| 70 | 71 | 72 |

PROCESS DEMAND DATA〜7

## FIG. 5a

205

| | |
|---|---|
| 301a | QUEUE ELEMENT (a) |
| 301b | QUEUE ELEMENT (b) |
| 301c | QUEUE ELEMENT (c) |
| 301m | QUEUE ELEMENT (m) |

## FIG. 5b

301i

| PROCESS DEMAND AREA | NEXT QUEUE ELEMENT |
|---|---|
| 310 | 311 |

# FIG. 6

206

| |
|---|
| COMMON INFORMATION |
| SORT "a" MANAGING INFORMATION |
| SORT "b" MANAGING INFORMATION |
| SORT "c" MANAGING INFORMATION |

401

402a

402b

402c

SORT "n" MANAGING INFORMATION

402n

# FIG. 7

401

| |
|---|
| TOTAL SORT NUMBER ~501 |
| TOTAL AREA NUMBER ~502 |
| EMPTY-AREA NUMBER ~503 |
| EMPTY-AREA HEAD POINTER ~504 |
| EMPTY-AREA END POINTER ~505 |
| WORK POINTER ~506 |
| WRITE POINTER ~507 |
| READ POINTER ~508 |
| LOAD CONTROL INTERRUPTION FLAG ~509 |

# FIG. 8

<u>4 0 2 x</u>

| |
|---|
| SORT "x" PROCESS DEMAND NUMBER |
| SORT "x" PROCESS DEMAND QUEUE HEAD POINTER |
| SORT "x" PROCESS DEMAND END POINTER |

~601
~602
~603

# FIG. 9

<u>2 1 4</u>

| |
|---|
| SORT NUMBER |
| PROCESS DEMAND PROCESSING NUMBER (CYCLE NUMBER) |
| SORT NUMBER WORK |

~801
~802
~803

EP 0 404 129 A2

# FIG. 10 a

```
            ( S T A R T )
                 │
    ┌────────────┤
    │      ┌──────────────────────┐   901
    │     ╱  IS PROCESS DEMAND     ╲  N    ┌──────────────────────────┐
    │    ╱ PRESENT IN PROCESS DEMAND╲──────│ WAIT FOR                 │
    │    ╲    FILE ?                ╱       │ STARTING AFTER A         │
    │     ╲                       ╱        │ PREDETERMINED TIME       │
    │      └──────────────────────┘        │ PERIOD FROM SYSTEM       │
    │                 │ Y                   │ CONTROL PROGRAM      902 │
    │                 │              ┌──────└──────────────────────────┘
    │      ┌──────────────────────┐  │
    │     ╱                        ╲ N      ┌──────────────────────────┐
    │    ╱  IS EMPTY AREA PRESENT ? ╲───────│ WAIT FOR                 │
    │    ╲                         ╱        │ STARTING AFTER A         │
    │     ╲                       ╱         │ PREDETERMINED TIME       │
    │      └──────────────────────┘         │ PERIOD FROM SYSTEM       │
    │                 │ Y        903        │ CONTROL PROGRAM      904 │
    │      ┌──────────────────────┐         └──────────────────────────┘
    │      │   KEEP EMPTY AREA    │  905
    │      └──────────────────────┘
    │                 │
    │      ┌──────────────────────┐
    │      │ REDUCE VALUE OF EMPTY AREA NUMBER │  906
    │      │ AREA BY 1            │
    │      └──────────────────────┘
    │                 │
    │      ┌──────────────────────┐
    │      │ WRITE PROCESS DEMAND INTO │  907
    │      │ CORRESPONDING AREA  │
    │      └──────────────────────┘
    │                 │
    │      ┌──────────────────────┐
    │      │ CHAIN RELEVANT AREA TO LAST TRAIL │  908
    │      │ OF RELEVANT SORT OF QUEUE │
    │      └──────────────────────┘
    │                 │
    │      ┌──────────────────────┐
    │      │ INCREASE VALUE OF SORT PROCESS │  909
    │      │ DEMAND NUMBER AREA BY 1 │
    │      └──────────────────────┘
    │                 │
    │      ┌──────────────────────┐
    │      │ INCREASE VALUE OF WRITE POINTER │  910
    │      │ AREA BY 1           │
    │      └──────────────────────┘
    │                 │
    └─────────────────┘
```

# FIG. 10b

```
        ( S T A R T )
              │
              ▼
┌─────────────────────────────┐
│ STORE VALUE OF EMPTY-AREA HEAD │  ─ 9051
│ POINTER AREA INTO WORK POINTER │
│ AREA                           │
└─────────────────────────────┘
              │
              ▼
┌─────────────────────────────┐
│ STORE VALUE OF NEXT QUEUE ELEMENT │  ─ 9052
│ AREA DESIGNATED BY WORK POINTER │
│ INTO EMPTY-AREA HEAD POINTER AREA │
└─────────────────────────────┘
              │
              ▼
┌─────────────────────────────┐
│ STORE 0 INTO NEXT QUEUE ELEMENT │  ─ 9053
│ AREA DESIGNATED BY WORK POINTER │
└─────────────────────────────┘
              │
              ▼
         ( E N D )
```

# FIG. 10c

```
                    ┌─────────────────┐
                    │  S T A R T       │
                    └────────┬────────┘
                             │
                             ▼                    9081
                      ╱───────────────╲
                     ╱  SORT  PROCESS   ╲    N
                     ╲ DEMAND NUMBER = 0 ? ╱──────────────┐
                      ╲───────────────╱                   │
                             │ Y                          │
                             ▼           9082              ▼                9084
              ┌────────────────────────────┐   ┌────────────────────────────┐
              │ STORE VALUE OF WORK POINTER │   │ STORE VALUE OF WORK POINTER │
              │ AREA INTO HEAD POINTER AREA │   │ AREA INTO NEXT QUEUE ELEMENT│
              │ OF RELEVANT SORT OF PROCESS │   │ AREA DESIGNATED BY LAST     │
              │ DEMAND QUEUE                │   │ POINTER OF RELEVANT SORT    │
              └──────────────┬─────────────┘   │ OF PROCESS DEMAND QUEUE     │
                             │          9083    └──────────────┬─────────────┘
                             ▼                                 │
              ┌────────────────────────────┐                  │         9085
              │ STORE VALUE OF WORK POINTER │                  ▼
              │ AREA INTO LAST POINTER AREA │   ┌────────────────────────────┐
              │ OF RELEVANT SORT OF PROCESS │   │ STORE VALUE OF WORK POINTER │
              │ DEMAND QUEUE                │   │ AREA INTO LAST POINTER AREA │
              └──────────────┬─────────────┘   │ OF RELEVANT SORT OF PROCESS │
                             │                  │ DEMAND QUEUE                │
                             │                  └──────────────┬─────────────┘
                             ◄─────────────────────────────────┘
                             │
                             ▼
                    ┌─────────────────┐
                    │  E N D           │
                    └─────────────────┘
```

# FIG. 11a

```
                    ( S T A R T )
                          │
          ┌───────────────▼──────────────────┐   911
          │ STORE 1 INTO SORT NUMBER AREA     │
          └───────────────┬──────────────────┘
                          │
   ┌──────────────────────┼────────────────────────┐
   │   ┌──────────────────▼──────────────────────────────────┐  912
   │   │ IS LOAD CONTROL INTERRUPTION FLAG SET TO ON ?        │
   │   │ (SET LOAD CONTROL INTERRUPTION FLAG OFF AND CYCLE    │
   │   │  NUMBER = 0)                                         │
   │   └──────────────────┬──────────────────────────────────┘
   │                  Y   │
   │   ┌──────────────────▼──────────────────────────────┐  913
   │   │ STORE VALUE OF SORT NUMBER AREA INTO SORT NUMBER │
   │   │ WORK AREA                                        │
   │   └──────────────────┬──────────────────────────────┘
```

919
WAIT FOR STARTING OF SYSTEM CONTROL PROGRAM AFTER A PREDETERMINED TIME PERIOD HAS ELAPSED

INCREASE VALUE OF SORT NUMBER WORK AREA BY 1 ～914

SORT NUMBER > TOTAL SORT NUMBER   —Y→ SET 1 TO SORT NUMBER WORK AREA ～917

915   N

918
INCREASE VALUE OF SORT NUMBER AREA BY 1

Y ← HAS SEARCH FOR ALL SORTS BEEN CIRCULATED ? (SORT NUMBER = SORT NUMBER WORK) ～916

N

PROCESS DEMAND NUMBER CORRESPONDING TO SORT NUMBER = 0   Y ～920

N

IS LOAD CONTROL INTERRUPTION FLAG SET TO OFF ? ～921

Y   N

922   PERFORM LOAD CALCULATION

PROCESS NEXT PROCESS DEMAND SO AS TO BE WRITTEN INTO DATA FILE ～923

924 ～ IS LOAD CONTROL INTERRUPTION FLAG SET TO OFF?   N→ STORE 0 INTO CYCLE NUMBER AREA ～926

Y

REDUCE VALUE OF CYCLE NUMBER AREA BY 1 ～925

STORE VALUE OF SORT NUMBER WORK AREA INTO SORT NUMBER AREA ～927

# FIG. 11 b

START

STORE INTO CYCLE NUMBER AREA.
VALUE OF :

$$\frac{(PROCESS\ DEMAND\ NUMBER\ OF\ RELEVANT\ STOR)+1}{\dfrac{(TOTAL\ AREA\ NUMBER)-(EMPTY\ AREA\ NUMBER)}{(TOTAL\ SORT\ NUMBER)}+1}$$

31

IS CYCLE NUMBER EQUAL TO 0 ?   32   NO

YES

STORE 1 INTO CYCLE NUMBER AREA   33

END

# FIG. 12

COMPUTER ~109

TERMINAL ~103

DATA PROCESS INSTRUCTING TERMINAL ~104

SYSTEM CONTROL TERMINAL ~105

PROCESS DEMAND FILE ~106

PROCESS RESULT FILE ~107

PROCESS DATA FILE ~108

EP 0 404 129 A2

# FIG. 13

DATA PROCESS INSTRUCTING
TERMINAL

COMPUTER ~102

~104

~105

SYSTEM TERMINAL

COMPUTER 101

TERMINAL

PROCESS DEMAND FILE

PROCESS RESULT FILE

PROCESS DATA FILE

103

106    107    108

DATA PROCESS INSTRUCTING
TERMINAL

COMPUTER ~111

~114

~115

SYSTEM TERMINAL

PROCESS DEMAND FILE

PROCESS RESULT FILE

PROCESS DATA FILE

116    117    118

EP 0 404 129 A2

# FIG. 14

<u>402xx</u>

| |
|---|
| SORT "x" PROCESS DEMAND QUEUE HEAD POINTER $\sim$602 |
| SORT "x" PROCESS DEMAND QUEUE END POINTER $\sim$603 |
| ARRIVAL TIME $t_j$ $\sim$604 |
| ARRIVAL TIME $t_j -_1 1$ $\sim$605 |
| ARRIVAL TIME $t_j -_2$ $\sim$606 |

# FIG. 15

214α

| |
|---|
| SORT NUMBER |
| PROCESS DEMAND PROCESSING NUMBER<br>(CYCLE NUMBER) |
| SORT NUMBER WORK |
| DEMAND ARRIVAL SORT NUMBER |
| ARRIVAL VELOCITY |
| AVERAGE ARRIVAL VELOCITY |
| C P U UTILIZATION RATE |
| LOAD CALCULATION WORK |

801
802
803
804
805
806
807
808

# FIG. 16

START

SET VALUE OF $t_{j-1}$ AREA TO $t_{j-2}$ AREA — 1401

SET VALUE OF $t_j$ AREA TO $t_{j-1}$ AREA — 1402

SET PRESENT TIME INSTANT TO $t_j$ AREA — 1403

END

# FIG. 17

```
                        ( S T A R T )                1515
                              |                         |
      IS VALUE OF t_{J-2} AREA = 0 ?  >——Y——> SET 1 TO CYCLE NUMBER AREA
                              |  1501
                              |
    SET SORT NUMBER OF SORT NUMBER AREA INTO
    ARRIVAL VELOCITY AREA :
              t_J − t_{J-2}                    1502
       ──────────────────────────
       2 (t_J − t_{J-1})(t_{J-1} − t_{J-2})
                              |
    SET 1 TO LOAD CALCULATION WORK AREA        1503
                              |
      IS VALUE OF t_{J-2} AREA = 0 ?  >——Y
                              |  1504
                              N
    INCREASE VALUE OF DEMAND ARRIVAL SORT
    NUMBER AREA BY 1                           1505
                              |
    ADD SORT NUMBER OF LOAD CALCULATION WORK
    AREA TO AVERAGE ARRIVAL VELOCITY AREA :
              t_J − t_{J-2}                    1506
       ──────────────────────────
       2 (t_J − t_{J-1})(t_{J-1} − t_{J-2})
                              |
    INCREASE VALUE OF LOAD CALULATION AREA BY 1   1517
                              |
      HAVE ALL OF SORTS BEEN CALCULATED ?  >——N
                              |  1509
                              Y
    DIVIDE VALUE OF AREA BY VALUE OF DEMAND ARRIVAL SORT
    NUMBER AREA                               1510
                              |
    OBTAIN CPU UTILIZATION RATE FROM SYSTEM CONTROL
    PROGRAM (STORE INTO CPU UTILIZATION RATE AREA)   1511
                              |
    SET TO CYCLE NUMBER AREA :
    (ORDERED PROCESS VELOCITY)× (CPU UTILIZATION RATE) +
    (DEMAND ARRIVAL SORT NUMBER-1)×(ARRIVAL VELOCITY −AVERAGE ARRIVAL VELOCITY)
    (ORDERED PROCESS VELOCITY)× (CPU UTILIZATION RATE) −
                   (ARRIVAL VELOCITY −AVERAGE ARRIVAL VELOCITY)
    CUT AWAY IF NON-INTEGER
                              |  1512
      IS VALUE OF CYCLE NUMBER AREA EQUAL TO 0 OR MINUS ?  >——  1514
                              |  1513              |
                              N        SET 1 TO CYCLE NUMBER AREA
                              |
                          ( E N D )
```

# FIG. 18

CONTROL TERMINAL

10105

10103

10104

COMPUTER

10102

10101

TERMINAL

TERMINAL
CONTROL
APPARATUS

COMPUTER

SAVE
DATA
FILE

DEMAND
ACCEPT
FILE

PROCESS
RESULT
FILE

PROCESS
DATA
FILE

10106

10107

10108

10109

EP 0 404 129 A2

# FIG. 19

COMPUTER 10103

LOAD CONTROL TABLE 11035

LOAD CONTROL PROGRAM 11034

DEMAND ACCEPT PROGRAM 11032

RESULT ANNOUNCE PROGRAM 11033

SYSTEM CONTROL PROGRAM 11031

TERMINAL CONTROL APPARATUS 10102

TERMINAL 10101

10105 CONTROL TERMINAL

SAVE DATA FILE 10106

10104

DEMAND SORT QUEUE FORMING PROGRAM 11042

DEMAND SORT QUEUE TABLE 11043

PROCESS DEMAND SELECTING PROGRAM 11044

DATA PROCESS PROGRAM 11045

SYSTEM CONTROL PROGRAM 1041

DEMAND ACCEPT FILE 10107

PROCESS RESULT FILE 10109

PROCESS DATA FILE 10108

EP 0 404 129 A2

# FIG. 20

TERMINAL CONTROL APPARATUS  /10102

TERMINAL  10101

I/O CONTROL PROGRAM  /11022

I/O BUFFER  /11027

COMMUNICATION BUFFER  11026

READ TIMING BUFFER  11025

READ TIME PERIOD CONTROLLING PROGRAM  11024

COMMUNICATION CONTROL PROGRAM  /11023

SYSTEM CONTROL PROGRAM  11021

COMPUTER  10103

11034

11032    11033

EP 0 404 129 A2

# FIG. 21

10042 PROCESS INTERVAL MANAGING TABLE

| | | | | | to | 3 |
|---|---|---|---|---|---|---|

10427 LATEST PROCESS INTERVAL POINTER AREA

10426 AVERAGE PROCESS INTERVAL AREA

10425 PROCESS END NUMBER AREA

10424 PROCESS TIME INSTANT AREA

10423 PROCESS TIME INSTANT AREA

10422 SATURATION PROCESS INTERVAL AREA

10421 ARRIVAL INTERVAL SET VALUE AREA

10041 PROCESS INTERVAL QUEUE TABLE

| $to_{n-2}$ | $to_{n-1}$ | $to_n$ | $to_1$ | $to_2$ | — — — — | $to_{n-3}$ |
|---|---|---|---|---|---|---|

10411 PROCESS INTERVAL AREA

11035 LOAD MANAGING TABLE

EP 0 404 129 A2

# FIG. 22a

START

10001
DEMAND FOR ACQUIRING INSTRUCTION INPUT
TIME INSTANT & WAIT FOR OCCURRENCE OF
EVENT

10002
JUDGE SORT OF INSTRUCTION

| SYSTEM START | SYSTEM END | DEMAND FOR ACQUIRING TIME INSTANT | EVENT OCCURREN |
|---|---|---|---|
| 10003 | 10004 | 10005 | 10006 |
| SYSTEM START PROCESS | SYSTEM END PROCESS | TIMER PROCESS | EVENT COMMUNICATION PROCESS |

EP 0 404 129 A2

# FIG. 22b

START

IS SET MODE OR CONTROL MODE ?   10010   CONTROL MODE

SET MODE   10011

SET MAXIMUM READING VELOCITY & INSTRUCT INPUT START

READ LOAD MANAGING TABLE   10018

ASSUME MAXIMUM PROCESSING VELOCITY   10012

DETERMINE ADJUSTED READING VELOCITY   10013

INTERROGATE TEMPORAL STOP   10014

10015

TEMPORAL STOP   IS CONTINUE OR TEMPORAL STOP ?

10017   CONTINUE

SAVE LOAD MANAGING TABLE   SET ADJUSTED READING VELOCITY & INSTRUCT INPUT START   10016

END

# FIG. 22c

START

10019

PROCESS DEMAND PROCESSING

EP 0 404 129 A2

# FIG. 23

```
                    ( I N )

                 INITIALIZE              ~10501

        WAIT FOR OCCURRENCE OF PROCESS    ~15021
        END EVENT

        INCREASE PROCESS END NUMBER BY 1 ?  ~15022

              IS PROCESS END NUMBER 1 ?      ~10503

                   YES  ~10504              IS PROCESS END NUMBER 2 ?  ~10505

        SET PRESENT TIME INSTANT TO PROCESS   YES        NO    ~10510
        TIME INSTANT AREA "a" )
                                             SET PRESENT TIME INSTANT TO PROCESS
                      ~15061                 TIME INSTANT AREA "b"

        SET PRESENT TIME INSTANT TO          ADD {(PROCESS TIME INSTANT AREA "b"  ~10511
        PROCESS TIME INSTANT AREA "b"        VALUE-AREA "a" VALUE)-NEXT AREA
                                             VALUE OF LATEST PROCESS INTERVAL
                      ~15062                 POINTER} ÷ n TO AVERAGE PROCESS
                                             INTERVAL AREA
        SET (PROCESS TIME INSTANT AREA
        "b" VALUE-AREA "a" VALUE) TO ALL     SET LATEST PROCESS INTERVAL POINTER  ~10512
        AREAS OF PROCESS INTERVAL QUEUE      TO NEXT AREA

                      ~10507               SET (PROCESS TIME INSTANT AREA "b"  ~10513
        SET SAVE VALUE TO AVERAGE PROCESS    VALUE - AREA "a" VALUE)
        INTERVAL AREA
                                             |SATURATION PROCESS INTERVAL       ~10514
                      ~10508                 AREA VALUE - AVERAGE PROCESS        YES
        SET SAVE VALUE TO SATURATION PROCESS INTERVAL AREA VALUE | <
        INTERVAL AREA                        |SATURATION PROCESS INTERVAL
                                             AREA VALUE K × 1 |
                      ~10509
        SET PRESENT TIME INSTANT TO PROCESS            NO    ~10515
        TIME INSTANT AREA "a"
                                             SET AVERAGE PROCESS INTERVAL
                                             AREA VALUE TO SATURATION
                                             PROCESS INTERVALUE AREA

                                                      ~10516
                                             SET PRESENT TIME INSTANT TO       ( OUT )
                                             PROCESS TIME INSTANT AREA "a"
```

## FIG. 24

# FIG. 25

START

SET VALUE LARGER THAN SATURATION PROCESS INTERVAL BUFFER VALUE INTO ARRIVAL INTERVAL SET VALUE BUFFER —10601

OPERATE COMPUTER SYSTEM IN CONTROL MODE, LOAD HEAVIER LOAD ON COMPUTER SYSTEM AND MONITOR RESPONSE TIME —10602

10603

IS RESPONSE TIME OK ?

TOO LONG

SLIGHTLY SHORT

OK

SLIGHTLY INCREASE VALUE OF ARRIVAL INTERVAL SET VALUE BUFFER

SLIGHTLY DECREASE VALUE OF ARRIVAL INTERVAL SET VALUE BUFFER

10605

10606

END

10604

EP 0 404 129 A2

# FIG. 26

10071 MANAGING TABLE
17108 PROCESS INTERVAL 10426 AVERAGE PROCESS INTERVAL AREA
10423 PROCESS TIME INSTANT AREA "a" CHANGING AMOUNT AREA 10427 LATEST PROCESS INTERVAL POINTER AREA
17109 MODE FLAG
△ to | to | 3

17104 ARRIVAL TIME INSTANT AREA "a"
17103 ARRIVAL TIME INSTANT AREA "b"
17102 ARRIVAL INTERVAL SET VALUE 2 AREA
17101 ARRIVAL INTERVAL SET VALUE 1 AREA
10425 PROCESS END NUMBER AREA
17105 DEMAND ARRIVAL NUMBER AREA
10424 PROCESS TIME INSTANT AREA "b"
10422 SATURATION PROCESS INTERVAL AREA
17107 LATEST ARRIVAL INTERVAL POINTER AREA
17106 AVERAGE ARRIVAL INTERVAL AREA
10072 ARRIVAL INTERVAL QUEUE TABLE

$ti_{n-1}$ | $ti_n$ | $ti_1$ | $ti_2$ | — — — — | $ti_{n-2}$

10721 ARRIVAL INTERVAL AREA

10041 PROCESS INTERVAL QUEUE TABLE

$to_{n-2}$ | $to_{n-1}$ | $to_n$ | $to_1$ | — — — — | $TO_{n-2}$

10411 PROCESS INTERVAL AREA

11037 LOAD MANAGING TABLE

EP 0 404 129 A2

# FIG. 27 a-1

IN ~11036

INITIALIZE ~10801

SET VALUE OF ARRIVAL INTERVAL SET VALUE 1 AREA INTO TERMINAL CONTROL APPARATUS INSTRUCT INPUT START ~10802

(1)

WAIT FOR DEMAND ARRIVAL OR PROCESS END EVENT ~10803

18041 ~ EVENT SORT ? → (2)

INCREASE DEMAND ARRIVAL NUMBER BY 1 ~18042

10805 ~ DEMAND ARRIVAL NUMBER = 1 ?

YES

10807 ~ DEMAND ARRIVAL NUMBER = 2 ?

YES

NO

SET PRESENT TIME INSTANT INTO ARRIVAL TIME INSTANT AREA "a" ~10806

18081

SET PRESENT TIME INSTANT INTO ARRIVAL TIME INSTANT AREA "b"

SET PRESENT TIME INSTANT INTO ARRIVAL TIME INSTANT AREA "b" ~10811

FIG. 27 a-2

SET (VALUE OF ARRIVAL TIME INSTANT AREA "a"-VALUE OF AREA "b") INTO ALL AREAS OF ARRIVAL INTERVAL QUEUE  ~18082

ADD {(VALUE OF ARRIVAL TIME INSTANT AREA "b"-VALUE OF AREA "a")-AREA VALUE NEXT TO LATEST ARRIVAL INTERVAL POINTER } ÷n TO AVERAGE ARRIVAL INTERVAL AREA  10812

SET SAME VALUE TO AVERAGE ARRIVAL INTERVAL AREA  ~10809

SET LATEST ARRIVAL INTERVAL POINTER TO NEXT AREA  10813

SET PRESENT TIME INSTANT TO ARRIVAL TIME INSTANT AREA "a"  ~10810

SET (VALUE OF ARRIVAL TIME INSTANT AREA "b"- AREA "a") TO NEXT AREA  10814

DEMAND ARRIVAL NUMBER ≧ n  10815

NO

YES

SET PRESENT TIME INSTANT TO ARRIVAL TIME INSTANT AREA "a"  10816

YES

IS PROCESS INTERVAL MONITOR MODE ?  10817

NO

(3)

EP 0 404 129 A2

# FIG. 27b

```
                                                          ( 2 )          ┌─10831
      ( 3 )                    ┌─10818              ┌──────────────────────────┐
NO                                                  │ INCREASE PROCESS END NUMBER BY 1 │
    ╱ VALUE OF ARRIVAL INTERVAL ╲                   └──────────────────────────┘
   ╱ SET VALUE 1 AREA > VALUE OF ╲                               │
   ╲ AVERAGE ARRIVAL INTERVAL AREA╱      NO                      ▼            ┌18232
    ╲                            ╱         ◄────────╱ PROCESS END NUMBER = 1 ? ╲
          │ YES                                     ╲                         ╱
          ▼                       ┌─10819                       │ YES
┌──────────────────────┐                  ┌──────────────────────────┐
│ SET VALUE OF ARRIVAL INTERVAL │          │ SET PRESENT TIME INSTANT INTO PROCESS │ 10824
│ SET VALUE 2 AREA INTO TERMINAL │         │ TIME INSTANT AREA "a"             │
│ CONTROL APPARATUS              │         └──────────────────────────┘
└──────────────────────┘                               │
          │                       ┌─10820                ( 1 )
          ▼                                               │
┌──────────────────────┐                                 ▼
│ TRANSFER TO PROCESS INTERVAL │                                           ┌─10825
│ MONITOR MODE                │      YES     ╱ PROCESS END NUMBER = 2 ╲
└──────────────────────┘      ◄──────────────╲                        ╱
          │                                              │ NO           ┌─10829
          ▼                       ┌─10821                ▼
┌──────────────────────┐                  ┌──────────────────────────┐
│ SET PRESET TIME TO ARRIVAL │             │ SET PRESENT TIME INSTANT TO PROCESS │
│ TIME INSTANT AREA "a"      │             │ TIME INSTANT AREA "b"           │
└──────────────────────┘                  └──────────────────────────┘
          │                                               │
         ( 1 )                                            ▼            ┌10830
                           ┌18261           ┌──────────────────────────┐
          ▼                                 │ ADD {(VALUE OF PROCESS TIME INSTANT │
┌──────────────────────┐                   │ AREA "b"-VALUE OF AREA "a")-AREA │
│ SET PRESENT TIME INSTANT TO PROCESS │     │ VALUE NEXT TO LATEST PROCESS INTERVAL │
│ TIME INSTANT AREA "b"            │        │ POINTER } ÷n  TO AVERAGE PROCESS │
└──────────────────────┘                   │ INTERVAL BUFFER                │
          │                  ┌18262          └──────────────────────────┘
          ▼                                               │
┌──────────────────────┐                                 ▼            ┌10831
│ SET(VALUE OF PROCESS TIME INSTANT │       ┌──────────────────────────┐
│ AREA "b" - AREA "a" )TO ALL AREAS OF │    │ SET SAME VALUE TO PROCESS INTERVAL │
│ PROCESS INTERVAL QUEUE           │        │ CHANGING AMOUNT AREA            │
└──────────────────────┘                   └──────────────────────────┘
          │                  ┌10827                        │
          ▼                                                ▼            ┌10832
┌──────────────────────┐                   ┌──────────────────────────┐
│ SET SAME VALUE TO AVERAGE PROCESS │       │ SET LATEST PROCESS INTERVAL POINTER │
│ INTERVAL AREA                  │          │ TO NEXT AREA                   │
└──────────────────────┘                   └──────────────────────────┘
          │                  ┌10828                        │
          ▼                                                ▼            ┌10834
┌──────────────────────┐                   ┌──────────────────────────┐
│ SET PRESENT TIME INSTANT INTO PROCESS │   │ SET(VALUE OF PROCESS TIME INSTANT │
│ TIME INSTANT AREA "a"            │        │ AREA "b"-AREA "a")INTO SAME AREA │
└──────────────────────┘                   └──────────────────────────┘
          │                                                │
         ( 1 )                                             ▼            ┌10835
                               NO                 ╱ PROCESS END NUMBER ≥ n ? ╲
                          ◄──────────────────────╲                          ╱
                                                           │ YES         ┌10837
                           NO                              ▼
                    ◄────────────────────────── ╱ PROCESS INTERVAL MONITOR MODE ? ╲
                                                  ╲                              ╱
          ┌──────────────────────┐ ┌─10836                 │ YES
          │ SET PRESENT TIME INSTANT TO PROCESS │
          │ TIME INSTANT AREA "a"            │             ( 4 )
          └──────────────────────┘
                    │
                   ( 1 )
```

# FIG. 27c

```
                    ( 4 )
                      │
                      │
                      ▼
NO      ╱ AREA VALUE OF PROCESS INTERVAL CHANGING ╲      838
◄───────┤                                          ├
│       ╲ VALUE < 0                                ╱
│                     │
│                    YES
│                     │
│                     ▼
│       ┌──────────────────────────────────────────┐
│       │ SET ARRIVAL INTERVAL SET VALUE 1 AREA VALUE │    839
│       │ INTO TERMINAL CONTROL APPARATUS           │
│       └──────────────────────────────────────────┘
│                     │
│                     ▼
│       ┌──────────────────────────────────────────┐    840
│       │ RELEASE PROCESS INTERVAL MONITOR MODE     │
│       └──────────────────────────────────────────┘
│                     │
└────────────────────►│
                      ▼
        ┌──────────────────────────────────────────┐    841
        │ SET PRESENT TIME INSTANT INTO PROCESS TIME │
        │ INSTANT AREA "a"                          │
        └──────────────────────────────────────────┘
                      │
                      ▼
                    ( 1 )
```

FIG. 28a

FIG. 28b

FIG. 28c

FIG. 28d

FIG. 28 e

FIG. 28 f

FIG. 28g

12.75

| 10071 | 15 | 20 | 538 | 538 | 559 | 579 | 1 | 2 | | 8 | 0 | 0 | 20 | 1 | 1 |

| 10072 | 11 | 13 | 15 | 14 | 12 | 13 | 13 | 11 |

| 10041 | 20 | 20 | 20 | 20 | 20 | 20 | 20 | 20 |

FIG. 28h

12.75          0.25   20.25

| 10071 | 15 | 20 | 538 | 538 | 579 | 601 | 1 | 3 | | 8 | 0 | | | 2 | 1 |

| 10072 | 11 | 13 | 15 | 14 | 12 | 13 | 13 | 11 |

| 10041 | 20 | 22 | 20 | 20 | 20 | 20 | 20 | 20 |

FIG. 28 i

# FIG. 29

START

SET VALUE SMALLER THAN SATURATION PROCESS INTERVAL BUFFER VALUE INTO ARRIVAL INTERVAL SET VALUE 1 BUFFER, AND SET VALUE SLIGHTLY LARGER THAN THIS BUFFER VALUE INTO 2 BUFFER — 10901

OPERATE UNDER CONTROL MODE, AND MONITOR RESPONSE TIME WITH HEAVY LOAD HIGHER THAN CAPABILITY — 10902

IS RESPONSE TIME DISTRIBUTED? 10903

YES

NO

SHIGHTLY INCREASE ARRIVAL INTERVAL SET VALUE 2 BUFFER VALUE — 10904

IS RESPONSE TIME OK ? 10905

TOO LONG

SHORTER

OK

SLIGHTLY INCREASE ARRIVAL INTERVAL SET VALUE 1 BUFFER VALUE — 10906

SLIGHTLY DECREASE ARRIVAL INTERVAL SET VALUE 1 BUFFER — 10908

10907 — SET VALUE SLIGHTLY GREATER THAN SATURATION PROCESS INTERVAL BUFFER VALUE INTO ARRIVAL INTERVAL SET VALUE 2 BUFFER

10909

END

# FIG. 30

TERMINAL CONTROL APPARATUS — 10112

USER TERMINAL — 10101

11022 — I/O CONTROL PROGRAM

11027 — I/O BUFFER

11026 — COMMUNICATION BUFFER

11023 — COMMUNICATION CONTROL PROGRAM

COMPUTER — 10103

11034

11032

11033

TIME INSTANT BUFFER — 11128

READ TIMING BUFFER — 11025

INPUT AMOUNT CONTROL PROGRAM — 11124

SYSTEM CONTROL PROGRAM — 11021

EP 0 404 129 A2

# FIG. 31

COMPUTER 20106

COMPUTER 20104

COMPUTER 20103

COMPUTER BACKUP

USER TERMINAL 20101

20102

PROCESS DEMAND ACCEPTANCE FILE F−(1) 20203

PROCESS DEMAND ACCEPTANCE FILE F−(2) 20204

PROCESS DEMAND HOLDING FILE 20230

PROCESS RESULT F 20211

PROCESS DATA F 20212

PROCESS RESULT F 20213

20220 (CHANNEL COUPLING)

SYSTEM TERMINAL 20108

20105

COMPUTER

COMPUTER

20107

SYSTEM TERMINAL 20108

EP 0 404 129 A2

FIG. 32

# FIG. 33

COMPUTER

DEMAND SORT QUEUE

20104

SYSTEM TERMINAL

20108

COMPUTER 20103

20102

COMPUTER

USER TERMINAL

20101

20209

PROCESS RESULT FILE F

20211

PROCESS DATA FILE F

20212

PROCESS DATA FILE F

20213

CHANNEL COUPLING

20220

SYSTEM TERMINAL

20108

PROCESS DEMAND ACCEPTANCE FILE F-(1)

20203

PROCESS DEMAND ACCEPTANCE FILE F-(2)

20204

PROCESS DEMAND HOLDING FILE

20230

COMPUTER

DEMAND SORT QUEUE

20218

20106

COMPUTER

COMPUTER

20107

20105

EP 0 404 129 A2

# FIG. 34-a

CONDITION TRANSIT LIST FOR LOAD JUDGEMENT / PROCESS LINE CHANGING CONTROL UNIT

| | | 1 — WAIT FOR PROCESS DEMAND QUEUING INSTRUCTION | 2 — WAIT FOR PROCESS DEMAND TRANSMISSION STOP COMPLETION RESPONSE | 3 — WAIT FOR PROCESS DEMAND SORT QUEUE COPY COMPLETION RESPONSE | 4 — WAIT FOR DATA COMPLETION RESPONSE BY COMMUNICATION # | 5 — WAIT FOR DEMAND SORT QUENE COPY PERMISSION RESPONSE | 6 — UNDER PROCESS DEMAND DATA COPY |
|---|---|---|---|---|---|---|---|
| 1 | PROCESS DEMAND QUEUING INSTRUCTION | LIGHT LOAD — QUEUING [1] / HEAVY LOAD [2] | QUEUING [2] | QUEUING [3] | QUEUING [4] | QUEUING [5] | |
| 2 | PROCESS SORT QUEUE COPY COMPLETION | DEMAND TRANSMIT STOP INSTRUCTION | | | | | TRANSMIT DEMAND SORT QUEUE COPY COMPLETION RESPONSE [1] |
| 3 | PROCESS SORT QUEUE COPY COMPLETION RESPONSE | | | SEND DEMAND TRANSMIT DESTINATION CHANGING INSTRUCTION [1] | | | |
| 4 | DATA COMPLETION RESPONSE BY COMMUNICATION # | | | SEND COPY PERMISSION REQUEST | ACK — SEND COPY PERMISSION REQUEST [5] / NACK — INSTANT COMMUNICATION # CONFIRMATION [4] | INSTANT COMMUNICATION # CONFIRMATION | |

EP 0 404 129 A2

# FIG. 34-b

| | | | | | | | |
|---|---|---|---|---|---|---|---|
| 5 | PROCESS DEMAND TRANSMIT STOP COMPLETION RESPONSE | | SEND COMMUNICATION # INSTRUCTION [4] | | | | |
| 6 | DEMAND SORT QUEUE COPY PERMISSION REQUEST | RESPONSE DEMAND SORT QUEUE COPY PERMISSION [6] | | | | | |
| 7 | RESPONSE DEMAND SORT QUEUE COPY PERMISSION | | | | | SEND DEMAND DATA [3] | |
| 8 | COPY DATA RECEPTION | | | | | | COPY [6] |

EP 0 404 129 A2

# FIG. 35

CONDITION TRANSIT LIST FOR PROCESS DEMAND ACCEPTANCE / TRANSMIT CONTROL UNIT

| EVENT \ STATE | 1 WAIT FOR DEMAND INPUT | 2 WAIT FOR COMMUNICATION # CONFIRMATION INSTRUCTION | 3 WAIT FOR DEMAND TRANSMIT DESTINATION CHANGING INSTRUCTION |
|---|---|---|---|
| 1 DEMAND INPUT | WRITE PROCESS DEMAND ACCEPTANCE  1 | WRITE TO PROCESS DEMAND HOLDING QUEUE  2 | WRITE TO PROCESS DEMAND HOLDING QEUE  3 |
| 2 DEMAND TRANSMIT STOP INSTRUCTION | SEND DEMAND TRANSMIT STOP RESPONSE  2 | | |
| 3 COMMUNICATION # CONFIRMATION INSTRUCTION | | NON-COINC-IDENCE: SEND NACK  2 \| COINC-IDENCE: SEND ACK  3 | |
| 4 DEMAND TRANSMIT CHANGE INSTRUCTION | | | WRITE DATA IN TRANSMIT DESTINATION CHANGING PROCESS DEMAND HOLDING FILE INTO PROCESS DEMAND ACCEPTANCE  1 |

NOTE : INITIAL STATE CORRESPONDS TO DEMAND INPUT WAITING CONDITION

# FIG. 36

USER TERMINAL

20101

COMPUTER BACKUP

20103

COMPUTER

20102

COMPUTER

20104

COMPUTER

20106

PROCESS DEMAND
ACCEPT FILE
F—(1)

20203

PROCESS DEMAND
ACCEPT FILE
F—(2)

20204

PROCESS DEMAND
HOLDING FILE

20230

PROCESS
RESULT FILE
F

20211

PROCESS
DATA FILE

20202

PROCESS
RESULT FILE
F

20213

COMPUTER

COMPUTER

20107

20220

SYSTEM TERMINAL

20108

SYSTEM TERMINAL

SYSTEM
CONSOLE

20231

EP 0 404 129 A2

FIG. 37

EP 0 404 129 A2

FIG. 38

SYSTEM TERMINAL — 20108

SYSTEM TERMINAL — 20108

20104

20221 · 20207

DATA PROCESSING UNIT
COMMON D/B EXCLUSIVE-CONTROLLING UNIT

20206 — PROCESS DEMAND CONVERSION REGISTER UNIT

DEMAND SORT QUEUE — 20209

DEMAND SORT QUEUE FORMING UNIT — 20208

20205 — LOAD JUDGEMENT/PROCESS SYSTEM SWITCHING CONTROL UNIT

DB/DC SYSTEM

20210

20220 (CHANNEL COUPLING)

20213 — PROCESS RESULT FILE F — 20106

20251 — PROCESS DATA FILE F

20250 — PROCESS DATA FILE F

20211 — PROCESS RESULT FILE F

20222 · 20224

DATA PROCESSING UNIT
COMMON D/B EXCLUSIVE-CONTROLLING UNIT

20215 — PROCESS DEMAND CONVERSION REGISTER UNIT

DEMAND SORT QUEUE — 20218

DEMAND SORT QUEUE FORMING UNIT — 20217

20214 — LOAD JUDGEMENT/PROCESS SYSTEM SWITCHING CONTROL UNIT

DB/DC SYSTEM

20219

PROCESS DEMAND ACCEPTANCE/TRANSMIT CONTROLLING UNIT
ANNOUNCEMENT OUTPUT UNIT — 20102

20222 · 20201

COMPUTER

DB/DC SYSTEM — 20202

PROCESS DEMAND ACCEPT FILE F-(2) — 20204

PROCESS DEMAND HOLDING FILE — 20230

PROCESS DEMAND ACCEPT FILE F-(1) — 20203

USER TERMINAL — 20101

# FIG. 39

```
                        ( S T A R T )
                             │
                             ▼
        ┌────────────────────────────────────────────┐
        │ JUDGE DEMAND SORT OF LOAD TO BE PROCESSED   │
        │ BASED UPON PROCESS DEMAND NUMBER STORED IN  │
        │ DEMAND SORT QUEUE (209)                     │
  20801 │                                             │
        └────────────────────────────────────────────┘
                             │
                             ▼
        ┌────────────────────────────────────────────┐
        │ DETERMINE NUMBER OF PROCESS DEMANDS WHICH   │
        │ ARE TREATED WITHIN 1 TIME IN PROCESS        │
  20802 │ DEMAND REGISTER                             │
        └────────────────────────────────────────────┘
                             │
                             ▼
        ┌────────────────────────────────────────────┐
  20803 │ PERFORM PROCESS DEMAND REGISTER PROCESS     │
        └────────────────────────────────────────────┘
```